# EUROPÄISCHE PATENTSCHRIFT

(11) **EP 2 115 528 B1**
(45) Veröffentlichungstag und Bekanntmachung des Hinweises auf die Patenterteilung: **29.03.2017**
(21) Anmeldenummer: 08707298.9
(22) Anmeldetag: 25.01.2008
(51) Int. Cl.: G02C 7/08, G02C 7/14, G02B 27/01

(54) **BRILLE UND BRILLENGLAS ZUR DATENEINSPIEGELUNG**
GLASSES AND EYEGLASS LENS FOR DATA REFLECTION
LUNETTES ET VERRES DE LUNETTES POUR L'INSERTION DE DONNÉES

(30) Priorität: 25.01.2007 DE 102007003837
(43) Veröffentlichungstag der Anmeldung: 11.11.2009
(73) Patentinhaber: Rodenstock GmbH, 80687 München (DE)
(72) Erfinder: SESSNER, Rainer, 91154 Roth (DE); MÜLLER, Werner, 75443 Ötisheim (DE); UTTENWEILER, Dietmar, 82057 Icking (DE); WEHNER, Edda, 82275 Emmering (DE)
(74) Vertreter: Müller-Boré & Partner Patentanwälte PartG mbB
(86) Internationale Anmeldenummer: PCT/EP2008/000589
(87) Internationale Veröffentlichungsnummer: WO 2008/090000

(56) Entgegenhaltungen:
- EP-A- 0 945 748
- EP-A- 1 536 268
- WO-A-00/79327
- WO-A-2006/091873
- US-A1- 2002 030 639
- US-B1- 6 204 974

## Beschreibung

Die Erfindung betrifft ein Brillenglas gemäß Anspruch 1, eine Brille zum Ein- und Ausspiegeln von Daten gemäß Anspruch 24, ein Anzeigegerät gemäß Anspruch 29, ein Verfahren zur Berechnung bzw. Optimierung eines Brillenglases gemäß Anspruch 31, ein Verfahren zur Herstellung eines Brillenglases gemäß Anspruch 53, eine Vorrichtung zur Berechnung bzw. Optimierung eines Brillenglases gemäß Anspruch 58, ein Computerprogrammerzeugnis gemäß Anspruch 63, ein Speichermedium gemäß Anspruch 61, eine Vorrichtung zur Herstellung eines Brillenglases gemäß Anspruch 62 sowie die Verwendung eines Brillenglases gemäß Anspruch 63.

Brillengläser zum Ein- und Ausspiegeln von Daten in das Auge eines Benutzers sind zum Beispiel aus den Europäischen Patentanmeldungen EP 1 536 268 A, EP 0 945 748 A sowie der US-Patentanmeldung US 2002/030639 A1 bekannt.

Es ist Aufgabe der Erfindung, ein Brillenglas, eine Brille sowie Verfahren und Vorrichtungen zur Berechnung, Optimierung und Herstellung eines Brillenglases und einer Brille anzugeben, welche in kompakter und integrierter Bauform ein virtuelles Bild vor den Augen eines Brillenträgers erzeugen kann.

Diese Aufgabe wird durch die Gegenstände bzw. Verfahren der nebengeordneten Ansprüche gelöst. Bevorzugte Ausführungsformen sind in den Unteransprüchen beschrieben.

### 1. Bevorzugte Brillengläser gemäß einem Aspekt der Erfindung

Gemäß einem Aspekt der Erfindung wird ein Brillenglas mit einer ersten, einer zweiten, gegenüberliegenden Fläche vorgeschlagen, und einer Seitenfläche, welche die erste und die zweite Fläche verbindet, wobei die erste Fläche die augenseitige und die zweite Fläche die objektseitige Fläche des Brillenglases ist oder wobei die erste Fläche die objektseitige und die zweite Fläche die augenseitige Fläche des Brillenglases ist, und wobei
zumindest die erste Fläche des Brillenglases eine Grundteilzone und zumindest eine Prismenzone aufweist, wobei sich die Gestaltung der ersten Fläche in der Grundteilzone und in der Prismenzone unterscheidet;
die Grundteilzone der ersten Fläche mit der gegenüberliegenden zweiten Fläche des Brillenglases einen Grundteil des Brillenglases bilden; und
die Prismenzone der ersten Fläche mit der gegenüberliegenden zweiten Fläche des Brillenglases einen Prismenteil bilden, welcher derart ausgelegt und angeordnet ist, eine optische Abbildung eines Displays in einem vorgegebenen virtuellen Abstand vor den Augen des Brillenträgers zu erzeugen.

Der Grundteil ist derart ausgelegt und angeordnet, eine vorgegebene dioptrische Wirkung bzw. Rezeptwirkung (d.h. sphärische, astigmatische und/oder prismatische Wirkung) und/oder eine Änderung der dioptrischen, insbesondere der sphärischen Wirkung bzw. eine Addition zu erzielen. Zumindest eine der Flächen des Grundteils stellt die Rezeptfläche des Brillenglases dar, d.h. eine Fläche, welche in Abhängigkeit von der individuell erforderlichen Rezeptwirkung bzw. Verordnung (sphärische, zylindrische, prismatische Verordnung und/oder Addition) berechnet bzw. optimiert und gefertigt wird. Die Rezeptfläche ist z.B. im Fall eines nicht astigmatischen Einstärkenbrillenglases eine sphärische oder rotationssymmetrische asphärische Fläche, im Falle eines astigmatischen Brillenglases eine torische oder atorische Fläche, im Falle eines progressiven Brillenglases eine progressive bzw. Gleitsichtfläche.

Der Prismenteil ist insbesondere derart ausgelegt und angeordnet, von einem Display kommende Lichtstahlen derart abzulenken, daß eine optische Abbildung eines Displays in einem vorgegebenen virtuellen Abstand vor den Augen des Brillenträgers erzeugt wird. Der Prismenteil ist ein integraler Bestandteil des Brillenglases. Zusätzlich wird der Prismenteil derart ausgelegt, daß Refraktionsdaten des Brillenträgers mit berücksichtigt werden, so daß das durch den Prismenteil erzeugte Bild von dem Brillenträger scharf gesehen werden kann.

Zumindest eine der beiden Flächen des Brillenglases ist eine zusammengesetzte (komplexe) Fläche, welche eine Grundteilzone und eine Prismenzone aufweist, wobei sich die Gestaltung der objektseitigen Fläche des Brillenglases in der Grundteilzone und in der Prismenzone unterscheidet. In anderen Worten ist zumindest eine der beiden Flächen des Brillenglases als eine aus der objektseitigen Fläche des Grundteils und der objektseitigen Fläche des Prismenteils zusammengesetzte komplexe Fläche ausgebildet. Die zusammengesetzte, komplexe Fläche des Brillenglases bildet mit der zweiten Fläche des Brillenglases (welche z.B. ebenfalls eine zusammengesetzte, komplexe Fläche oder eine sich über den Prismen- und Grundteil durchgehend erstreckende Fläche sein kann) jeweils den Grundteil und den Prismenteil.

Der Prismenteil ist horizontal und/oder vertikal versetzt zu dem geometrischen Mittelpunkt des Brillenglases angeordnet ist, so dass der horizontale und/oder der vertikale Abstand zwischen dem geometrischen Mittelpunkt des Prismenteils und dem geometrischen Mittelpunkt des Brillenglases 5 bis 35 mm beträgt.

Ferner ist der Prismenteil derart ausgelegt und angeordnet, daß in einer vorgegebenen Gebrauchsstellung des Brillenglases vor den Augen eines Brillenträgers zumindest ein von dem Display kommender Lichtstrahl nach Ablenkung an der Seitenfläche des Brillenglases im Prismenteil zumindest einmal
an der augenseitigen Fläche des Brillenglases im Prismenteil per Totalreflektion in Richtung der objektseitigen Fläche des Brillenglases im Prismenteil reflektiert wird,
anschließend an der objektseitigen Fläche des Brillenglases im Prismenteil in Richtung der augenseitigen Fläche reflektiert wird und
durch die augenseitige Fläche des Brillenglases im Prismenteil in das Auge des Brillenträgers abgebildet wird.

Nach dem Austritt durch die augenseitige Fläche verläuft der Strahl durch die Pupille des jeweiligen Auges des Brillenträgers, so daß eine optische Abbildung des Displays in einem vorgegebenen virtuellen Abstand erzeugt wird. Alternativ kann bei dem Design des Brillenglases ein Strahl berücksichtigt werden, der durch den Augendrehpunkt oder durch die Eintrittspupille des jeweiligen Auges des Brillenträgers verläuft. Ein wichtiger Vorteil des bevorzugten Prismenteils bzw. des bevorzugten Strahlengangs durch den Prismenteil ist, daß die augenseitige Fläche doppelt für die Abbildung benutzt wird.

Das Brillenglases kann in einer normierten (z.B. in DIN 58208 Teil 2) durchschnittlichen Gebrauchsstellung vor den Augen des Brillenträges angeordnet sein. Vorzugsweise wird jedoch eine individuelle Gebrauchssituation, d.h. eine individuelle Gebrauchsstellung des Brillenglases vor den Augen des Brillenträgers berücksichtigt. Die individuelle Gebrauchsstellung wird insbesondere durch die Pupillendistanz, den Hornhautscheitelabstand, die Vorneigung, den Fassungsscheibenwinkel beschrieben. Weitere Parameter der Gebrauchsstellung, wie z.B. die Zentrierdaten des Brillenglases oder Parameter des Auges bzw. der Augen des Brillenträgers (wie z.B. Pupillendistanz), können ebenfalls berücksichtigt werden.

Die individuellen Parameter können beispielsweise in folgenden Grenzen variieren:
Pupillendistanz (PD) von 30 bis 80 mm,
Hornhautscheitelabstand (HSA) von 3 bis 50 mm,
Vorneigung (VN) von -10 bis +20 Grad,
Fassungsscheibenwinkel (FSW) von -10 bis +35 Grad.

Das Display kann ebenfalls in einer durchschnittlichen oder einer individuellen Position bezüglich des Brillenglases angeordnet sein.

So kann das Display derart angeordnet werden, daß die Flächenormale des Displays und die Flächennormale der Seitenfläche des Brillenglases einen Winkel von -45° bis +45°, vorzugsweise von -15° bis +15°" besonders bevorzugt 0°schließen. Der Abstand des Displays zur Seitenfläche des Brillenglases beträgt vorzugsweise zwischen 0 und 20 mm. Besonders bevorzugt beträgt der Abstand 0 mm. In dieser Ausführungsform liegt das Display direkt an der Seitenfläche an, was die Justierung des Displays erleichtert.

Ferner kann insbesondere ein vorgegebener durchschnittlicher oder ein individueller virtueller Abstand vor den Augen des Brillenträgers, in dem die optische Abbildung des Displays erzeugt werden soll, berücksichtigt werden.

Der Prismenteil kann als "Nahteil" in der augenseitigen oder objektseitigen Fläche des Brillenglases integriert sein.

Die beiden Teile des Brillenglases, d.h. der Prismenteil und der Grundteil, können zum Beispiel - ähnlich wie der Grundteil und der Zusatzteil eines bifokalen Brillenglases - sichtbar voneinander abgegrenzt sein. An der Trennlinie bzw. der Begrenzungslinie zwischen dem Prismenteil und dem Grundteil bzw. zwischen der Prismenzone und der Grundteilzone bzw. kann zum Beispiel - wie bei einem bifokalen Brillenglas - eine Stufe vorhanden sein. Vorzugsweise ist jedoch die Stufe zumindest in einer Richtung (horizontal oder vertikal je nach Anordnung des Prismenteils) verblendet.

Vorzugsweise ist der Prismenteil mit dem Grundteil voll verblendet, so daß keine Stufe zwischen dem Prismenteil und dem Grundteil vorhanden ist (sowohl in horizontaler als auch in vertikaler Richtung). In einer alternativen Ausführungsform kann jedoch in einer Richtung (horizontal oder vertikal je nach Anordnung des Prismenteils) an dem Übergang zwischen der Prismenzone und der Grundteilzone eine Stufe vorhanden sein. Wenn der Prismenteil beispielsweise in nasaler oder temporaler Richtung vom geometrischen Mittelpunkt horizontal versetzt angeordnet ist, kann eine Stufe in vertikaler Richtung vorhanden sein.

Vorzugsweise schließt sich in horizontaler und/oder vertikaler Richtung die erste Fläche des Brillenglases in der Prismenzone zumindest einmal, bevorzugt zweimal stetig differenzierbar an die erste Fläche des Brillenglases in der Grundteilzone an.

In horizontaler und/oder vertikaler Richtung kann sich die erste Fläche des Brillenglases in der Prismenzone unter Ausbildung eines Knicks an die erste Fläche des Brillenglases in der Grundteilzone anschließen.

Die horizontale Richtung wird dabei insbesondere durch die durch die zwei Permanentgravierungen des Brillenglases verlaufende Glashorizontale vorgegeben (vgl. EN ISO 13666 Punkt 5.6). Die vertikale Richtung ist insbesondere die dazu senkrechte Richtung in der tangentialen Ebene zu der objektseitigen Fläche des Brillenglases am Zentrierpunkt (vgl. EN ISO 13666 Punkt 5.2). Alternativ kann der Ursprung des Koordinatensystems mit dem geometrischen Mittelpunkt des (rohrunden) Brillenglases (vgl. EN ISO 13666 Punkt 5.5) zusammenfallen, wobei ggfs. eine Vordezentrierung des rohrunden Brillenglases korrigierend berücksichtigt wird.

In der Prismenzone kann die erste Fläche eine einfache Fläche, z.B. eine sphärische oder torische Fläche, oder eine Freiformfläche sein. Unter Freiformfläche wird insbesondere eine asphärische Fläche ohne Punkt- und Achsensymmetrie verstanden.

Gemäß einer bevorzugten Ausführungsform ist die erste Fläche des Brillenglases in der Prismenzone eine Freiformfläche und in der Grundteilzone eine sphärische, rotationssymmetrisch asphärische, torische, atorische oder progressive Fläche.

In dieser bevorzugten Ausführungsform ist die erste Fläche des Brillenglases in der Prismenzone eine komplexe Freiformfläche, welche z.B. aus der (virtuellen Fortsetzung der) ersten Fläche in der Grundteilzone und einer darin eingelassenen Prismenfläche zusammengesetzt ist. Die erste Freiformfläche des Brillenglases in der Prismenzone ist derart optimiert bzw. ausgelegt, die erforderliche Strahlablenkung von Lichtstrahlen von dem Display zu erzielen, wobei ebenfalls die erforderliche Rezeptwirkung berücksichtigt wird, um eine möglichst scharfe und unverzerrte Abbildung des Displays erzeugen zu können. Dabei wird vorzugsweise eine individuelle Gebrauchsstellung des Brillenglases, individuelle Daten des Brillenträgers und/oder eine individuelle Anordnung des Displays in Bezug auf das Brillenglas berücksichtigt. Alternativ können durchschnittliche Werte berücksichtigt werden.

Die erste Fläche des Brillenglases in der Grundteilzone kann die Rezeptfläche des Brillenglases darstellen. Alternativ kann die erste Fläche in der Grundteilzone eine vorgegebene sphärische oder rotationssymmetrisch asphärische Fläche sein, deren Durchbiegung z.B. grob in Abhängigkeit von der zur erzielenden dioptrischen Wirkung und/oder nach kosmetischen Gesichtspunkten ausgewählt bzw. gestuft werden kann (s.g. Blank-System). Ebenfalls kann die Auswahl der Durchbiegung der zweiten Fläche nach fertigungstechnisch bedingten Gesichtspunkten erfolgen. Vorzugsweise beträgt der maximale Anstieg des Flächenbrechwerts der ersten Fläche in horizontaler und/oder vertikaler Richtung 2 dpt/mm, vorzugsweise 1,5 dpt/mm, besonders bevorzugt 1 dpt/mm; und/oder
der maximale Anstieg des Flächenastigmatismus der ersten Fläche in horizontaler und/oder vertikaler Richtung 1,4 dpt/mm, vorzugsweise 1,05 dpt/mm, besonders bevorzugt 0,7 dpt/mm.

Ferner bevorzugt ist an dem Übergang zwischen der Prismenzone und der Grundteilzone
der Winkel zwischen der horizontalen Komponente der Flächennormale der ersten Fläche in der Prismenzone und der horizontalen Komponente der Flächennormale der ersten Fläche in der Grundteilzone kleiner als 5° vorzugsweise kleiner als 2°, besonders bevorzugt kleiner als 1° ; und/oder
der Winkel zwischen der vertikalen Komponente der Flächennormale der ersten Fläche in der Prismenzone und der vertikalen Komponente der Flächennormale der ersten Fläche in der Grundteilzone kleiner als 5° vorzugsweise kleiner als 2°, besonders bevorzugt kleiner als 1°.

Der Winkel zwischen der horizontalen und/oder der vertikalen Komponente der Flächennormale der ersten Fläche in der Prismenzone und der horizontalen und/oder der vertikalen Komponente der Flächennormale der ersten Fläche in der Grundteilzone soll vorzugsweise möglichst gering gehalten werden. So kann insbesondere bei einem Knick die Entstehung von Doppelbildern minimiert werden.

Gemäß einer weiteren bevorzugten Ausführungsform ist die erste Fläche der Prismenzone eine sphärische Fläche und in der Grundteilzone eine sphärische, rotationssymmetrisch asphärische, torische, atorische oder progressive Fläche.

Vorzugsweise ist die erste Fläche in der Prismenzone eine sphärische Fläche mit einer ersten Krümmung und in der Grundteilzone eine sphärische Fläche mit einer zweiten Krümmung, welche kleiner als die erste Krümmung ist.

Die (sphärische) erste Fläche in der Prismenzone kann sich - wie bereits oben beschrieben - an die (sphärische) erste Fläche in der Grundteilzone z.B. mittels einer Stufe (in vertikaler und/oder horizontaler Richtung) und/oder einen Knick anschließen. Vorzugsweise ist jedoch zumindest in einer Richtung (horizontal oder vertikal je nach Anordnung des Prismenteils) die Stufe verblendet. Die Durchbiegung und die Anordnung der ersten Fläche in der Prismenzone werden derart ausgewählt, die vorgegebene Strahlablenkung der aus dem Display kommenden Strahlen zu erzielen.

Vorzugsweise ist an dem Übergang zwischen der Grundteilzone und der Prismenzone:
der Winkel zwischen der horizontalen Komponente der Flächennormale der ersten Fläche in der Prismenzone und der horizontalen Komponente der Flächennormale der ersten Fläche in der Grundteilzone kleiner als 45° vorzugsweise kleiner als 25°, besonders bevorzugt kleiner als 10° und/oder
der Winkel zwischen der vertikalen Komponente der Flächennormale der ersten Fläche in der Prismenzone und der vertikalen Komponente der Flächennormale der ersten Fläche in der Grundteilzone kleiner als 45° vorzugsweise kleiner als 25°, besonders bevorzugt kleiner als 10°.

Die zweite Fläche des Brillenglases kann eine sich über den Grundteil und den Prismenteil durchgehend erstreckende sphärische, rotationssymmetrisch asphärische, torische, atorische oder progressive Fläche sein.

Die zweite Fläche kann z.B. eine sphärische oder rotationssymmetrische asphärische Fläche sein. Die Durchbiegung der zweiten Fläche des Brillenglases kann beispielsweise in herkömmlicher Weise grob in Abhängigkeit von der zur erzielenden sphärischen, torischen und/oder prismatischen Wirkung (d.h. Rezeptwirkung) und/oder nach kosmetischen Gesichtspunkten ausgewählt werden. Ebenfalls kann die Auswahl der Durchbiegung der zweiten Fläche nach fertigungstechnisch bedingten Gesichtspunkten erfolgen. Alternativ kann die zweite Fläche die Rezeptfläche des Brillenglases sein.

Gemäß einer weiteren bevorzugten Ausführungsform kann die zweite Fläche des Brillenglases ebenfalls - ähnlich wie die erste Fläche - eine Grundteilzone und eine Prismenzone aufweisen.

Die Gestaltung der zweiten Fläche in der Grundteilzone kann in Abhängigkeit von der zu erzielenden dioptrischen Wirkung variieren. So kann die zweite Fläche des Brillenglases eine sphärische, rotationssymmetrisch asphärische, torische, atorische oder progressive Fläche sein.

In einer bevorzugten Ausführungsform ist die zweite Fläche in der Grundteilzone eine sphärische oder rotationssymmetrische asphärische Fläche. Wie oben beschrieben kann die Durchbiegung der zweiten Fläche des Brillenglases in der Grundteilzone beispielsweise in herkömmlicher Weise grob in Abhängigkeit von der zur erzielenden sphärischen, torischen und/oder prismatischen Wirkung (d.h. Rezeptwirkung) und/oder nach kosmetischen Gesichtspunkten ausgewählt werden. Ebenfalls kann die Auswahl der Durchbiegung der zweiten Fläche in der Grundteilzone nach fertigungstechnisch bedingten Gesichtspunkten erfolgen. Die erste Fläche des Brillenglases in der Grundteilzone stellt in diesem Fall vorzugsweise die Rezeptfläche des Brillenglases dar.

Alternativ kann die zweite Fläche die Rezeptfläche des Brillenglases sein. Vorzugsweise ist in diesem Fall die erste Fläche eine einfache sphärische oder rotationssymmetrisch asphärische Fläche.

In der Prismenzone kann die zweite Fläche des Brillenglases eine einfache Fläche, z.B. eine sphärische oder torische Fläche, oder eine Freiformfläche sein.

Vorzugsweise ist die zweite Fläche in der Prismenzone eine sphärische Fläche mit einer ersten Krümmung und in der Grundteilzone eine sphärische Fläche mit einer zweiten Krümmung, welche kleiner als die erste Krümmung ist.

Vorzugsweise schließt sich in horizontaler und/oder vertikaler Richtung die zweite Fläche in der Prismenzone zumindest einmal, bevorzugt zweimal stetig differenzierbar an die zweite Fläche in der Grundteilzone an.

Vorzugsweise schließt sich in horizontaler und/oder vertikaler Richtung die zweite Fläche in der Prismenzone unter Ausbildung eines Knicks an die zweite Fläche des Brillenglases in der Grundteilzone an.

Vorzugsweise ist der Prismenteil mit dem Grundteil voll verblendet, so daß keine Stufe zwischen dem Prismenteil und dem Grundteil vorhanden ist. In einer alternativen Ausführungsform kann jedoch in einer Richtung (horizontal oder vertikal je nach Anordnung des Prismenteils) an dem Übergang zwischen der Prismenzone und der Grundteilzone eine Stufe vorhanden sein. Wenn der Prismenteil beispielsweise horizontal versetzt in nasaler oder temporaler Richtung vom geometrischen Mittelpunkt angeordnet ist, kann eine Stufe in vertikaler Richtung vorhanden sein.

Der Prismenteil ist horizontal und/oder vertikal versetzt zu dem Anpaßpunkt oder dem geometrischen Mittelpunkt des Brillenglases angeordnet, wobei
der horizontale und/oder der vertikale Abstand zwischen dem geometrischen Mittelpunkt des Prismenteils und dem Anpaßpunkt oder dem geometrischen Mittelpunkt des Brillenglases 5 bis 35 mm, vorzugsweise 10 bis 20 mm, besonders bevorzugt 15 mm beträgt.

Vorzugsweise verbindet bei einem verblendeten Prismenteil die Trennlinie zwischen der Prismenzone und der Grundteilzone der ersten und gegebenenfalls der zweiten Fläche (bzw. zwischen dem Prismenteil und dem Grundteil) diejenigen Flächenpunkte, in welchen die Pfeilhöhe als Funktion der Koordinaten (x,y) einen lokalen Extremwert (Minimum oder Maximum), einen Wendepunkt oder einen Sprung aufweist. Der geometrische Mittelpunkt des Prismenteils fällt vorzugsweise mit dem geometrischen Mittelpunkt des den Prismenteil umschreibenden Rechtecks zusammen.

Vorzugsweise ist der Prismenteil derart angeordnet und ausgelegt, daß dieser außerhalb des Blickfeldes für das indirekte Sehen in Nullblickrichtung liegt. Ferner bevorzugt ist der Prismenteil derart ausgebildet und angeordnet, daß bei einer Blickauslenkung gegenüber der Nullblickrichtung
von 25° bis 45°, vorzugsweise 30° bis 35°, in horizontaler Richtung, und/oder
von bis zu 40°, vorzugsweise 15° bis 20°, in vertikaler Richtung
die Sehachse parallel zu der Flächennormale der ersten oder der zweiten Fläche des Brillenglases in der Prismenzone ist.

Das Brillenglas ist beispielsweise derart vor den Augen des Brillenträgers angeordnet, daß der Sehstrahl in Nullblickrichtung mit dem Anpaß- bzw. Zentrierpunkt des Brillenglases zusammenfällt.

Vorzugsweise wird dabei eine individuelle Gebrauchssituation, d.h. eine individuelle Gebrauchsstellung des Brillenglases vor den Augen des Brillenträgers sowie individuelle Parameter des Auges bzw. der Augen des Brillenträgers berücksichtigt. Die individuelle Gebrauchssituation wird insbesondere durch die Pupillendistanz, den Hornhautscheitelabstand die Vorneigung, den Fassungsscheibenwinkel charakterisiert. Zusätzlich kann eine individuelle Anordnung des Displays in Bezug auf das Brillenglas und/oder einen individuellen virtuellen Abstand, in welchem die Abbildung des Displays erzeugt werden soll, berücksichtigt werden.

Vorzugsweise werden die erste und/oder die zweite Fläche des Prismenteils bzw. die erste und/oder die zweite Fläche des Brillenglases in der jeweiligen Prismenzone in Abhängigkeit von individuellen Parametern des Brillenträgers berechnet.

Individuelle Parameter des Brillenträgers umfassen insbesondere individuelle Refraktionsdaten, individuelle Parameter der Augen des Brillenträgers (z.B. Pupillendistanz, Augendrehpunktabstand, etc) und/oder individuelle Parameter der Gebrauchsstellung des Brillenglases vor den Augen des Brillenträgers (z.B. Hornhautscheitelabstand, Vorneigung, Fassungsscheibenwinkel, etc.), und/oder individuelle Parameter der Anordnung des Displays in Bezug auf das Brillenglas und/oder einen individuellen virtuellen Abstand, in welchem die Abbildung des Displays erzeugt werden soll, etc..

Vorzugsweise ist auf die augenseitige Fläche in der Prismenzone eine vollreflektierende oder teildurchlässige Reflexionsschicht aufgebracht.

Vorzugsweise ist die Seitenfläche des Brillenglases im Bereich des Prismenteils eine plane Fläche.

Die Seitenfläche des Brillenglases ist die die objektseitige und die augenseitige Fläche des Brillenglases verbindende Fläche.

Die erste Fläche kann die augenseitige Fläche (Vorderfläche) oder die objektseitige Fläche (Rückfläche) des Brillenglases sein.

Vorzugsweise ist die augenseitige Fläche des Brillenglases in der Grundteilzone eine konvexe Fläche und die objektseitige Fläche des Brillenglases in der Grundteilzone eine konkave Fläche, so daß der Grundteil eine Meniskusform aufweist. Ebenfalls weist der Prismenteil vorzugsweise eine Meniskusform auf, d.h. die augenseitige Fläche des Brillenglases in der Prismenzone ist eine konkave Fläche und die objektseitige Fläche des Brillenglases in der Prismenzone eine konvexe Fläche.

### 2. Bevorzugte Brille gemäß einem weiteren Aspekt der Erfindung

Gemäß einem weiteren Aspekt der Erfindung wird eine Brille zum Ein- und/oder Auskoppeln von Daten vorgeschlagen, welche zumindest ein bevorzugtes erfindungsgemäßes Brillenglas aufweist.

Bevorzugt umfaßt die Brille zumindest ein Display, welches derart angeordnet und ausgelegt ist, daß in einer vorgegebenen Gebrauchsstellung der Brille vor den Augen eines Brillenträgers zumindest ein von dem Display kommender Lichtstrahl nach Ablenkung an der Seitenfläche des Brillenglases im Prismenteil zumindest einmal
an der augenseitigen Fläche des Prismenteils per Totalreflektion in Richtung der objektseitigen Fläche des Prismenteils reflektiert wird,
anschließend an der objektseitigen Fläche in Richtung der augenseitigen Fläche reflektiert wird und
durch die augenseitige Fläche des Prismenteils in das Auge des Brillenträgers abgebildet wird.

Vorzugsweise das Display in eine Brillenfassung, vorzugsweise in einem Brillenbügel oder in einem Brückenteil der Brillenfassung integriert ist.

Bevorzugt umfaßt die Brille ferner
eine Energiequelle, welche vorzugsweise in der Brillenfassung integriert ist; und/oder
eine Ansteuereinrichtung zum Ansteuern des Displays, wobei die Ansteuereinrichtung vorzugsweise in der Brillenfassung integriert ist.

Die Ansteuereinrichtung kann insbesondere zum Empfang von anzuzeigenden Informationen bzw. Daten auf dem Display von einer externen Einrichtung ausgelegt sein. Die Daten können insbesondere drahtgebunden über ein Kabel zu der Ansteuereinrichtung übertragen werden. Bevorzugt werden die anzuzeigenden Daten jedoch drahtlos, beispielsweise über eine Funktechnologie (z.B. WLAN, Bluetooth, GSM, UMTS, etc.) an die Ansteuereinrichtung übertragen. Die übertragenen Daten können gemeinsam mit Zusatzdaten, welche von der Ansteuereinrichtung selbst erzeugt werden oder in dieser gespeichert sind, auf dem Display angezeigt werden. Beispielsweise kann die Herzschlagfrequenz von einem Pulsmesser, der von dem Brillenträger getragen wird, drahtlos an die Ansteuereinrichtung übertragen werden. Auch könnten Routeninformationen, welche von einem GPS-System empfangen und generiert werden, beispielsweise drahtlos an die Ansteuervorrichtung übertragen werden.

Vorzugsweise ist die Brille ein autarkes System ist. Unter einem autarken System wird hierbei verstanden, daß alle Bestandteile in den Brillengläsern und in der Fassung integriert sind, so daß es keine Kabelverbindungen zu Systemen außerhalb der Brille vorhanden sind. Gegebenenfalls kann lediglich eine Funkverbindung zu einer Datensendeeinrichtung erfolgen.

Der Fassungsscheibenwinkel der Brillenfassung kann vorzugsweise Werte von 0° bis 35° betragen.

### 3. Bevorzugtes Anzeigegerät gemäß einem weiteren Aspekt der Erfindung

Gemäß einem weiteren Aspekt der Erfindung wird ein Anzeigegerät vorgeschlagen, welches eine Brille mit zumindest einem bevorzugten erfindungsgemäßen Brillenglas und ein Display, welches in der Brillenfassung der Brille angeordnet ist, umfaßt.

Vorzugsweise umfaßt das Anzeigegerät ferner
eine Energiequelle, welche vorzugsweise in der Brillenfassung integriert ist; und/oder
eine Ansteuereinrichtung zum Ansteuern des Displays, wobei die Ansteuereinrichtung vorzugsweise in der Brillenfassung integriert ist.

### 4. Bevorzugtes Verfahren zur Berechnung bzw. Optimierung eines Brillenglases gemäß einem weiteren Aspekt der Erfindung

Gemäß einem weiteren Aspekt der Erfindung wird ein computerimplementiertes Verfahren zur Berechnung bzw. Optimierung eines Brillenglases vorgeschlagen, wobei das Verfahren einen Berechnungs- bzw. Optimierungsschritt zumindest einer ersten Fläche des Brillenglases umfaßt, wobei der Berechnungs- bzw. Optimierungsschritt derart erfolgt, daß
die erste Fläche eine Grundteilzone und eine Prismenzone aufweist,
die Grundteilzone der ersten Fläche mit einer gegenüberliegenden zweiten Fläche des Brillenglases einen Grundteil des Brillenglases bilden, welcher zum Sehen in zumindest eine vorgegebenen Entfernung ausgelegt ist; und
die Prismenzone der ersten Fläche mit der gegenüberliegenden zweite Fläche des Brillenglases einen Prismenteil bilden, welcher derart ausgelegt und angeordnet ist, eine optische Abbildung eines Displays in einem vorgegebenen virtuellen Abstand vor den Augen des Brillenträgers zu erzeugen.

Der Grundteil ist derart ausgelegt und angeordnet, eine vorgegebene dioptrische Wirkung bzw. Rezeptwirkung (d.h. sphärische, astigmatische und/oder prismatische Wirkung) und gegebenenfalls eine Änderung der dioptrischen, insbesondere der sphärischen Wirkung bzw. Addition zu erzielen. Der Prismenteil ist derart ausgelegt und angeordnet, insbesondere eine vorgegebene Ablenkung der aus einem Display kommenden Stahlen zu erzielen, so daß eine optische Abbildung eines Displays in einem vorgegebenen virtuellen Abstand vor den Augen des Brillenträgers erzeugt wird.

Vorzugsweise erfolgt die Berechnung bzw. Optimierung der ersten und der zweiten Fläche des Brillenglases in der Prismenzone derart, daß in einer vorgegebenen Gebrauchsstellung des Brillenglases vor den Augen eines Brillenträgers zumindest ein von dem Display kommender Lichtstrahl nach Ablenkung an der Seitenfläche des Brillenglases im Prismenteil zumindest einmal
an der augenseitigen Fläche des Prismenteils per Totalreflektion in Richtung der objektseitigen Fläche des Prismenteils reflektiert wird,
anschließend an der objektseitigen Fläche in Richtung der augenseitigen Fläche reflektiert wird und
durch die augenseitige Fläche des Prismenteils in das Auge des Brillenträgers abgebildet wird.

Vorzugsweise erfolgt der Berechnungs- bzw. Optimierungsschritt unter Berücksichtigung von individuellen Daten des Brillenträgers.

Vorzugsweise umfaßt das Verfahren ferner einen Schritt des Erfassen von Zieldaten des Brillenglases, wobei die Zieldaten des Brillenglases Daten bezüglich der zu erzielenden dioptrische Wirkung bzw. Rezeptwirkung des Grundteils und/oder Daten bezüglich einer erforderlichen Strahlablenkung der aus dem Display kommenden Lichtstrahlen umfassen.

Die Zieldaten können ferner Daten bezüglich einer individuellen Gebrauchsstellung des Brillenglases vor den Augen des Brillenträgers und/oder Daten hinsichtlich der Anordnung des Displays bezüglich des Brillenglases umfassen. Die Gebrauchsstellung wird insbesondere durch den Hornhautscheitelabstand oder Augendrehpunktabstand, Pupillendistanz, Vorneigung, Fassungsscheibenwinkel, und/oder Objektmodel, etc. charakterisiert.

Die Daten bezüglich der erforderlichen Strahlablenkung durch den Prismenteil können, z.B. anhand einer vorgegebenen durchschnittlichen oder anhand einer zu erfassenden individuellen Anordnung des Displays in Bezug auf das Brillenglas, ermittelt werden. Dabei kann ein vorgegebener durchschnittlicher oder ein individueller virtueller Abstand vor den Augen des Brillenträgers, in dem die optische Abbildung des Displays erzeugt werden soll, berücksichtigt werden.

Vorzugsweise erfolgt die Berechnung bzw. Optimierung der ersten Fläche derart, daß sich in horizontaler und/oder vertikaler Richtung die erste Fläche in der Prismenzone zumindest einmal, bevorzugt zweimal stetig differenzierbar an die erste Fläche in der Grundteilzone anschließt.

Vorzugsweise erfolgt die Berechnung bzw. Optimierung der ersten Fläche derart, daß sich in horizontaler und/oder vertikaler Richtung die erste Fläche in der Prismenzone unter Ausbildung eines Knicks an die erste Fläche in der Grundteilzone anschließt.

Vorzugsweise ist die erste Fläche in der Prismenzone eine Freiformfläche und in der Grundteilzone eine sphärische, rotationssymmetrisch asphärische, torische, atorische oder progressive Fläche.

Vorzugsweise erfolgt die Berechnung bzw. Optimierung der ersten Fläche derart, daß
der maximale Anstieg des Flächenbrechwerts der ersten Fläche in horizontaler und/oder vertikaler Richtung 2 dpt/mm, vorzugsweise 1,5 dpt/mm, besonders bevorzugt 1 dpt/mm beträgt; und/oder
der maximale Anstieg des Flächenastigmatismus der ersten Fläche in horizontaler und/oder vertikaler Richtung 1,4 dpt/mm, vorzugsweise 1,05 dpt/mm, besonders bevorzugt 0,7 dpt/mm beträgt.

Vorzugsweise erfolgt die Berechnung bzw. Optimierung der ersten Fläche derart, daß
der Winkel zwischen der horizontalen Komponente der Flächennormale der ersten Fläche in der Prismenzone und der horizontalen Komponente der Flächennormale der ersten Fläche in der Grundteilzone kleiner als 5° vorzugsweise kleiner als 2°, besonders bevorzugt kleiner als 1° ist; und/oder
der Winkel zwischen der vertikalen Komponente der Flächennormale der ersten Fläche in der Prismenzone und der vertikalen Komponente der Flächennormale der ersten Fläche in der Grundteilzone kleiner als 5°, vorzugsweise kleiner als 2°, besonders bevorzugt kleiner als 1° ist.

Vorzugsweise ist die erste Fläche in der Prismenzone eine sphärische Fläche und in der Grundteilzone eine sphärische, rotationssymmetrisch asphärische, torische, atorische oder progressive Fläche.

Vorzugsweise ist die erste Fläche in der Prismenzone eine sphärische Fläche mit einer ersten Krümmung und in der Grundteilzone eine sphärische Fläche mit einer zweiten Krümmung, welche kleiner als die erste Krümmung ist.

Vorzugsweise erfolgt die Berechnung bzw. Optimierung der ersten Fläche derart, daß an dem Übergang zwischen der Grundteilzone und der Prismenzone
der Winkel zwischen der horizontalen Komponente der Flächennormale der ersten Fläche in der Prismenzone und der horizontalen Komponente der Flächennormale der ersten Fläche in der Grundteilzone kleiner als 45°, vorzugsweise kleiner als 25°, besonders bevorzugt kleiner als 10° ist, und/oder
der Winkel zwischen der vertikalen Komponente der Flächennormale der ersten Fläche in der Prismenzone und der vertikalen Komponente der Flächennormale der ersten Fläche in der Grundteilzone kleiner als 45°, vorzugsweise kleiner als 25°, besonders bevorzugt kleiner als 10°, ist.

Vorzugsweise umfaßt das Verfahren ferner einen Schritt der Berechnung bzw. Optimierung der zweiten Fläche des Brillenglases, wobei die Optimierung vorzugsweise unter Berücksichtigung von individuellen Daten des Brillenträgers erfolgt.

Die zweite Fläche des Brillenglases kann eine sich über den Grundteil und den Prismenteil durchgehend erstreckende, sphärische, rotationssymmetrisch asphärische, torische, atorische oder progressive Fläche sein.

Alternativ kann die zweite Fläche - ähnlich der ersten Fläche - eine Grundteilzone und zumindest eine Prismenzone aufweisen. In der Prismenzone kann die zweite Fläche eine Freiformfläche oder eine einfache Fläche, z.B. eine sphärische oder torische Fläche sein. In der Grundteilzone kann die zweite Fläche eine sphärische, rotationssymmetrisch asphärische, torische, atorische oder progressive Fläche sein.

Gemäß einer bevorzugten Ausführungsform ist die zweite Fläche des Brillenglases in der Prismenzone eine sphärische Fläche mit einer ersten Krümmung und in der Grundteilzone eine sphärische Fläche mit einer zweiten Krümmung, welche kleiner als die erste Krümmung ist.

Vorzugsweise erfolgt die Berechnung der zweiten Fläche derart, daß sich in horizontaler und/oder vertikaler Richtung die zweite Fläche in der Prismenzone zumindest einmal, bevorzugt zweimal stetig differenzierbar an die zweite Fläche in der Grundteilzone anschließt.

Vorzugsweise erfolgt die Berechnung der zweiten Fläche in der Prismenzone derart, daß sich in horizontaler und/oder vertikaler Richtung die zweite Fläche in der Prismenzone unter Ausbildung eines Knicks an die zweite Fläche in der Grundteilzone anschließt.

Vorzugsweise ist der Prismenteil mit dem Grundteil voll verblendet, so daß keine Stufe zwischen dem Prismenteil und dem Grundteil vorhanden ist. In einer alternativen Ausführungsform kann jedoch in einer Richtung (horizontal oder vertikal je nach Anordnung des Prismenteils) an dem Übergang zwischen der Prismenzone und der Grundteilzone eine Stufe vorhanden sein. Wenn der Prismenteil beispielsweise in nasaler oder temporaler Richtung vom geometrischen Mittelpunkt horizontal versetzt angeordnet ist, kann eine Stufe in vertikaler Richtung vorhanden sein.

Vorzugsweise erfolgt ist der Prismenteil horizontal und/oder vertikal versetzt zu dem Anpaßpunkt oder dem geometrischen Mittelpunkt des Brillenglases angeordnet.

Vorzugsweise erfolgt die Berechnung bzw. Optimierung der ersten und gegebenenfalls der zweiten Fläche des Brillenglases derart, daß in einer vorgegebenen Gebrauchsstellung des Brillenglases
- der Prismenteil außerhalb des Blickfeldes eines Brillenträgers beim indirekten Sehen in Nullblickrichtung liegt; und
- bei einer Blickauslenkung in einem vorgegebenen Winkel von 25° bis 45°, vorzugsweise 30° bis 35°, in horizontaler Richtung, und/oder von bis zu 40°, vorzugsweise 15° bis 20°, in vertikaler Richtung
die Sehachse parallel zu der ersten oder der zweiten Fläche des Brillenglases in der Prismenzone ist.

Vorzugsweise ist der Prismenteil horizontal und/oder vertikal versetzt zu dem Anpaßpunkt oder dem geometrischen Mittelpunkt des Brillenglases angeordnet, wobei

der horizontale und/oder vertikale Abstand zwischen dem geometrischen Mittelpunkt des Prismenteils und dem Anpaßpunkt oder dem geometrischen Mittelpunkt des Brillenglases 5 bis 35 mm, vorzugsweise 10 bis 20 mm, besonders bevorzugt 15 mm beträgt.

### 5. Bevorzugtes Verfahren zum Herstellen eines Brillenglases gemäß einem weiteren Aspekt der Erfindung

Gemäß einem weiteren Aspekt der Erfindung wird ein Verfahren zum Herstellen eines Brillenglases vorgeschlagen, umfassend folgenden Schritte:
Bereitstellen von Flächendaten des Brillenglases, wobei das Brillenglas nach einem der genannten, bevorzugten erfindungsgemäßen Verfahren berechnet bzw. optimiert wird;
Fertigen des Brillenglases gemäß den bereitgestellten Flächendaten des Brillenglases.

Die Bearbeitung kann mittels numerisch gesteuerten CNC Maschinen oder mittels eines Gießverfahrens oder einer Kombination der beiden Verfahren erfolgen.

Vorzugsweise umfaßt das Verfahren einen Schritt des Aufbringens einer vorzugsweise teildurchlässigen Reflexionsschicht auf der augenseitigen Fläche des Brillenglases im Bereich des Prismenteils.

Vorzugsweise weist die Fertigung des Brillenglases folgende Schritte auf:
- Bereitstellen eines Grundkörpers,
- Bereitstellen eines Prismenkörpers,
- Verbinden des Grundkörpers und des Prismenkörpers miteinander;
- Fertigbearbeiten des Grundkörpers mit dem verbundenen Prismenkörper, so daß das Brillenglas die erfaßten Zieldaten aufweist, wobei die Zieldaten des Brillenglases Daten bezüglich der zu erzielenden dioptrische Wirkung bzw. Rezeptwirkung des Grundteils und/oder Daten bezüglich einer erforderlichen Strahlablenkung der aus dem Display kommenden Lichtstrahlen umfassen.

Vorzugsweise erfolgt die Verbindung des Prismenkörpers mit dem Grundkörper durch Einschmelzen oder Einkleben.

Vorzugsweise weist der Grundkörper eine Aussparung zur Aufnahme des Prismenkörpers auf.

### 6. Bevorzugte Vorrichtung zur Berechnung bzw. Optimierung eines Brillenglases gemäß einem weiteren Aspekt der Erfindung

Gemäß einem weiteren Aspekt der Erfindung wird eine Vorrichtung zur Berechnung bzw. Optimierung eines Brillenglases vorgeschlagen, wobei die Vorrichtung umfaßt
Berechnungs- und Optimierungsmittel zum Berechnen und Optimieren zumindest einer Fläche des Brillenglases, wobei die Berechnungs- und Optimierungsmittel derart ausgelegt und eingerichtet sind, das Verfahren zur Berechnung bzw. Optimierung des Brillenglases gemäß einem der bevorzugten erfindungsgemäßen Verfahren durchzuführen.

Vorzugsweise umfaßt die Vorrichtung ferner Erfassungsmittel zum Erfassen von Zieldaten des Brillenglases, wobei die Zieldaten des Brillenglases Daten bezüglich der zu erzielenden dioptrischen Wirkung bzw. Rezeptwirkung des Grundteils und/oder Daten bezüglich der erforderlichen Strahlablenkung der aus dem Display kommenden Lichtstrahlen umfassen.

### 7. Bevorzugtes Computerprogrammerzeugnis gemäß einem weiteren Aspekt der Erfindung

Gemäß einem weiteren Aspekt der Erfindung wird ein Computerprogrammerzeugnis vorgeschlagen, welches Programmteile enthält, welche ausgelegt sind, wenn geladen und ausgeführt auf einem Computer, ein bevorzugtes erfindungsgemäßes Verfahren zur Berechnung bzw. Optimierung eines Brillenglases durchzuführen.

### 8. Bevorzugtes Speichermedium mit einem darauf gespeichertem Computerprogramm gemäß einem weiteren Aspekt der Erfindung

Gemäß einem weiteren Aspekt der Erfindung wird ein Speichermedium mit einem darauf gespeichertem Computerprogramm vorgeschlagen, wobei das Computerprogramm ausgelegt ist, wenn geladen und ausgeführt auf einem Computer, ein bevorzugtes erfindungsgemäßes Verfahren zur Optimierung eines Brillenglases durchzuführen.

### 9. Bevorzugtes Vorrichtung zur Herstellung eines Brillenglases gemäß einem weiteren Aspekt der Erfindung

Gemäß einem weiteren Aspekt der Erfindung wird eine Vorrichtung zur Herstellung eines Brillenglases vorgeschlagen, umfassend
Berechnungs- und Optimierungsmittel zum Berechnen bzw. Optimieren zumindest einer Fläche des Brillenglases, wobei die Berechnungs- und Optimierungsmittel derart ausgelegt und eingerichtet sind, ein bevorzugtes erfindungsgemäßes Verfahren zur Berechnung bzw. Optimierung des Brillenglases durchzuführen;
Bearbeitungsmittel zum Bearbeiten des optimierten Brillenglases.

Die Bearbeitungsmittel können z.B. numerisch gesteuerte CNC-Maschinen, Mittel zum Durchführung eines Gießverfahrens oder andere geeignete Mittel zum Bearbeiten des berechneten bzw. optimierten Brillenglases umfassen.

### 10. Bevorzugte Verwendung eines Brillenglases gemäß einem weiteren Aspekt der Erfindung

Gemäß einem weiteren Aspekt der Erfindung wird eine Verwendung eines bevorzugten erfindungsgemäßen Brillenglases in einer vorgegebenen durchschnittlichen oder (individuell festgelegten) individuellen Gebrauchsstellung des Brillenglases vor den Augen eines Brillenträgers zum Ein- und/oder Auskoppeln von Daten vorgeschlagen.

Vorzugsweise erfolgt die Verwendung einer Brille in einer vorgegebenen durchschnittlichen oder individuellen Gebrauchsstellung des Brillenglases vor den Augen des Brillenträgers zum Ein- und/oder Auskoppeln von Daten.

Die Gebrauchsstellung wird insbesondere durch den Hornhautscheitelabstand oder Augendrehpunktabstand, Pupillendistanz, Vorneigung und/oder Fassungsscheibenwinkel, Objektmodel bzw. Objektentfernung, etc. charakterisiert. Ferner umfaßt die Gebrauchsstellung Daten bezüglich der Anordnung und gegebenenfalls der Größe des Displays, sowie gegebenenfalls den virtuellen Abstand vor den Augen des Brillenträgers in dem die optische Abbildung des Displays erzeugt werden soll.

Bevorzugte Ausführungsformen der genannten Aspekte werden nachfolgend anhand von Zeichnungen beispielhaft beschrieben.

Es zeigen:
- **Fig. 1**: Strahlengang durch ein (Bauernfeind-)Prisma;
- **Fig. 2**: Strahlengang innerhalb des Prismenteils bzw. -bereichs eines bevorzugten, erfindungsgemäßen Brillenglases;
- **Fig.3**: Brillenglas mit integriertem Prismenteil gemäß einem zweiten Ausführungsbeispiel einer bevorzugten erfindungsgemäßen Brille;
Fig. 3a Frontansicht des Brillenglases von Fig. 3;
Fig. 3b Gebrauchsstellung des Brillenglases von Fig. 3;
- **Fig.4**: Brille mit einem Brillenglas mit integriertem temporal versetztem Prismenteil gemäß dem zweiten Ausführungsbeispiel einer bevorzugten erfindungsgemäßen Brille;
Fig. 4a Frontalansicht der Brille;
Fig. 4b Gebrauchsstellung der Brille (Ansicht von oben);

- **Fig. 5**: Strahlengänge in dem System Brillenglas-Auge bei unterschiedlichen Blickauslenkungen
Fig. 5a Ansicht von oben;
Fig. 5b Seitenansicht;
Fig. 5c Frontalansicht;
- **Fig. 6**: Schematische Ansicht eines Brillenträgers mit einer aufgesetzten Brille gemäß einer bevorzugten Ausführungsform der Erfindung, welche ein Brillenglas mit temporal versetztem integriertem Prismenteil aufweist;
Fig. 6a Frontalansicht;
Fig. 6b Ansicht von oben;
- **Fig. 7**: Unterschiedliche Ansichten eines Brillenglases mit integriertem Prisma gemäß dem zweiten Ausführungsbeispiel;
Fig. 7a Ansicht von oben;
Fig. 7b Ansicht in Perspektive;
Fig. 7c Seitenansicht;
Fig. 7d Frontalansicht;
- **Fig. 8**: Ansicht von oben eines Brillenglases mit integriertem Prismenteil gemäß einem dritten Ausführungsbeispiel einer bevorzugten Ausführungsform der Erfindung;
- **Fig. 9**: Eingebettetes Pfeilhöhenfeld des Prismas in sphärischer Rückfläche;
- **Fig. 10**: Pfeilhöhendifferenzen zwischen Sphäre und Prisma;
- **Fig. 11**: Winkeldifferenz in x-Richtung zwischen Sphäre und Prisma;
- **Fig. 12**: Winkeldifferenz in y-Richtung zwischen Sphäre und Prisma;
- **Fig. 13**: Flächenastigmatismus des Prismas;
- **Fig. 14**: Brechwertänderung des Prismas in x-Richtung;
- **Fig. 15**: Brechwertänderung des Prismas in y-Richtung;
- **Fig. 16**: Astigmatismusänderung in x-Richtung;
- **Fig. 17**: Astigmatismusänderung in y-Richtung;
- **Fig. 18**: Brillenglas mit einem integriertem Prismenteil gemäß dem dritten Ausführungsbeispiel;
- **Fig. 19**: Brille mit einem Brillenglas mit integrierten Prismenteil gemäß dem dritten Ausführungsbeispiel;
Fig. 19a Frontalansicht;
Fig. 19b Ansicht von oben in Gebrauchsstellung der Brille;
- **Fig. 20**: Gießform für ein erfindungsgemäßes Brillenglas mit integriertem Prismenteil;
- **Fig. 21**: Brille mit einem Brillenglas mit integriertem Prismenteil gemäß einem vierten Ausführungsbeispiel einer bevorzugten Ausführungsform der Erfindung;

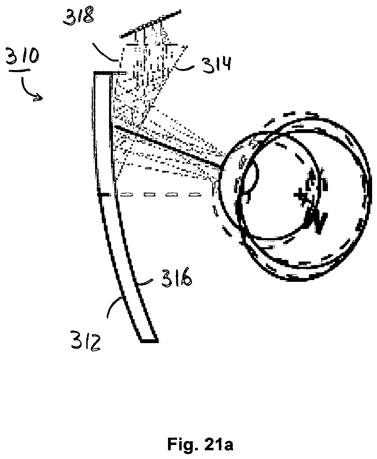

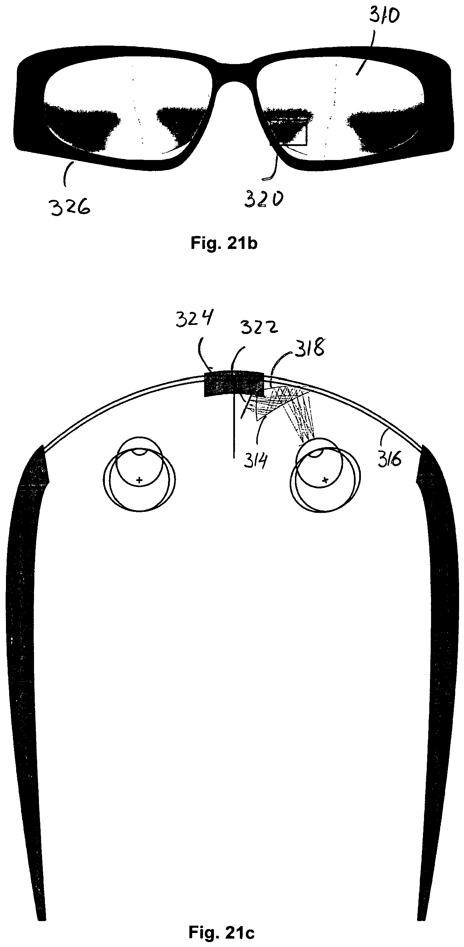

Fig. 21 a Strahlengang durch den Prismenteil in Gebrauchsstellung des Brillenglases;
Fig. 21b Frontalansicht;
Fig. 21c Ansicht von oben und Strahlengang durch den Prismenteil in Gebrauchsstellung des Brillenglases;

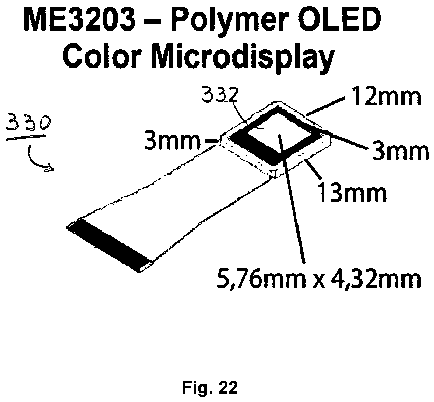

- **Fig. 22**: Display;

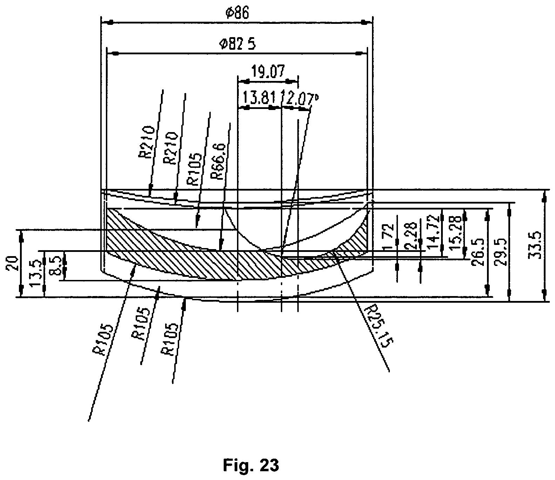

- **Fig. 23**: Gießform für ein bevorzugtes erfindungsgemäßes Brillenglas;

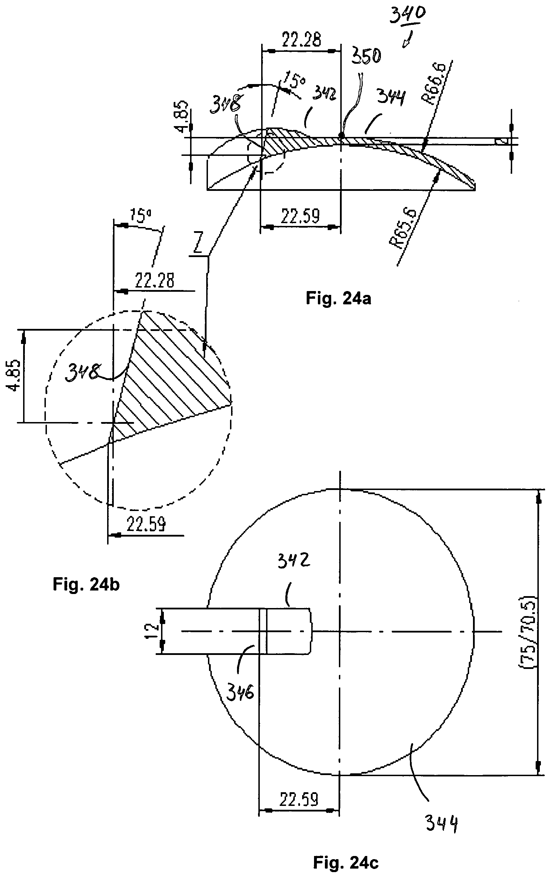

- **Fig. 24**: Ausführungsform eines Brillenglases;
Fig. 24a zeigt einen Querschnitt durch das Brillenglas, Fig. 24b zeigt eine vergrößerte Ansicht des Abschnitts "Z" in Fig. 24a;
Fig. 24c zeigt eine Frontalansicht;

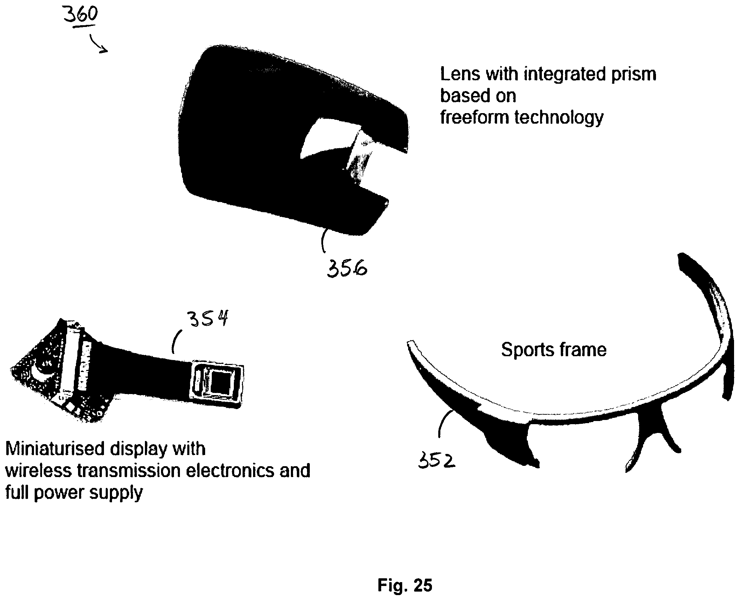

- **Fig. 25**: Ausführungsform eines Brillengestells;

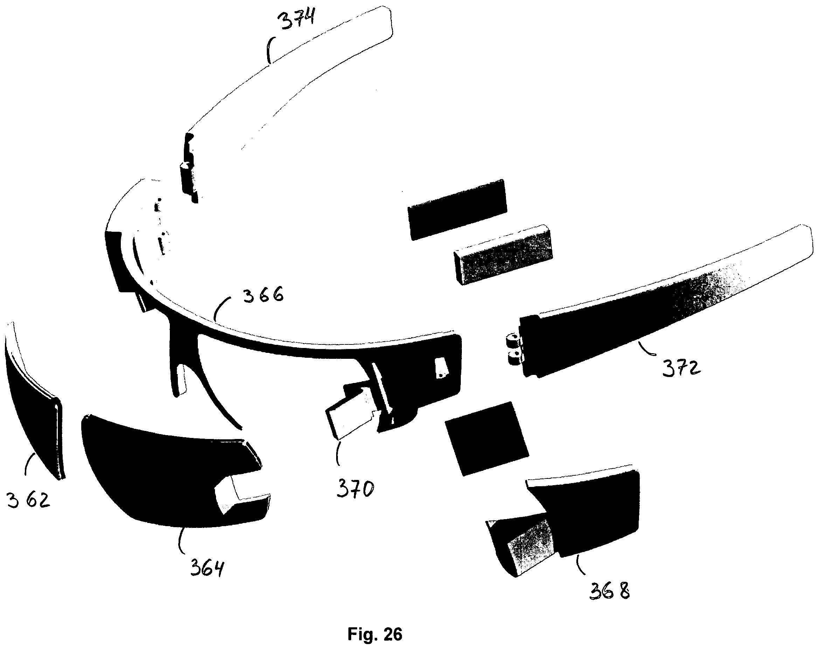

- **Fig. 26**: Explosionszeichnung eines Ausführungsbeispiels eines Brillengestells mit Brillengläsern;

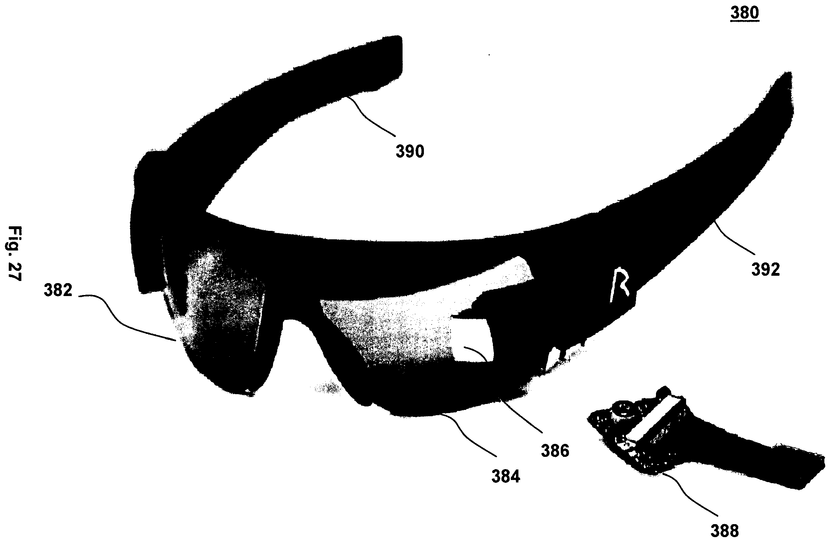

- Fig. 27: Ausführungsbeispiel einer bevorzugten erfindungsgemäßen Brille;

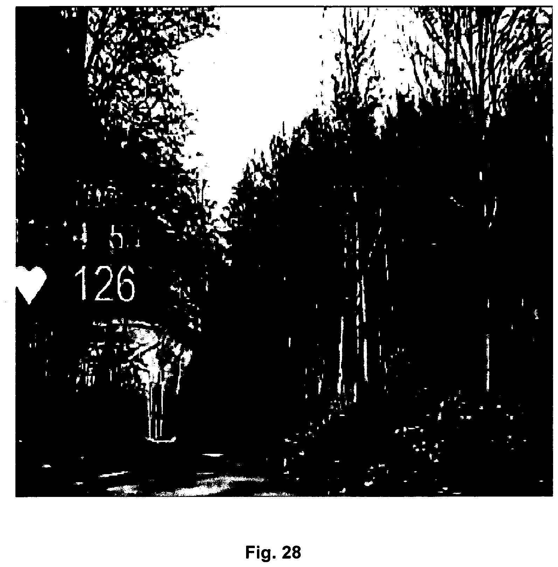

- **Fig. 28**: Beispiel eines Sehbildes durch eine bevorzugte erfindungsgemäße Brille gemäß einem Ausführungsbeispiel.

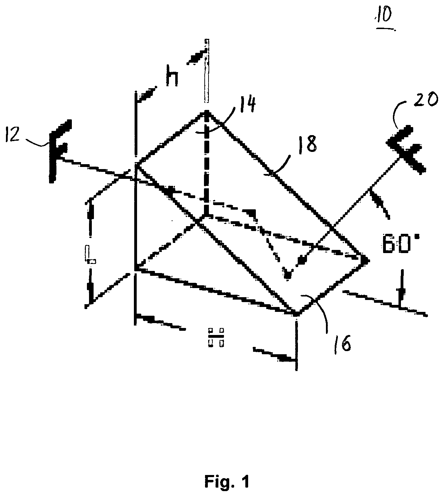

**Fig. 1** zeigt den Strahlengang durch ein Prisma **10,** z.B. durch ein sogenanntes Bauernfeindprisma. Ein aus dem Objekt **12** kommender Lichtstrahl tritt durch die Seiten- bzw. Eintrittsfläche **14** des Prismas ein, wird an der Reflektionsfläche **16** in Richtung Austrittsfläche **18** reflektiert und tritt durch die Austrittsfläche **18** aus, so daß in einem vorgegebenen virtuellen Abstand ein Bild **20** des Objekts **12** erzeugt wird.

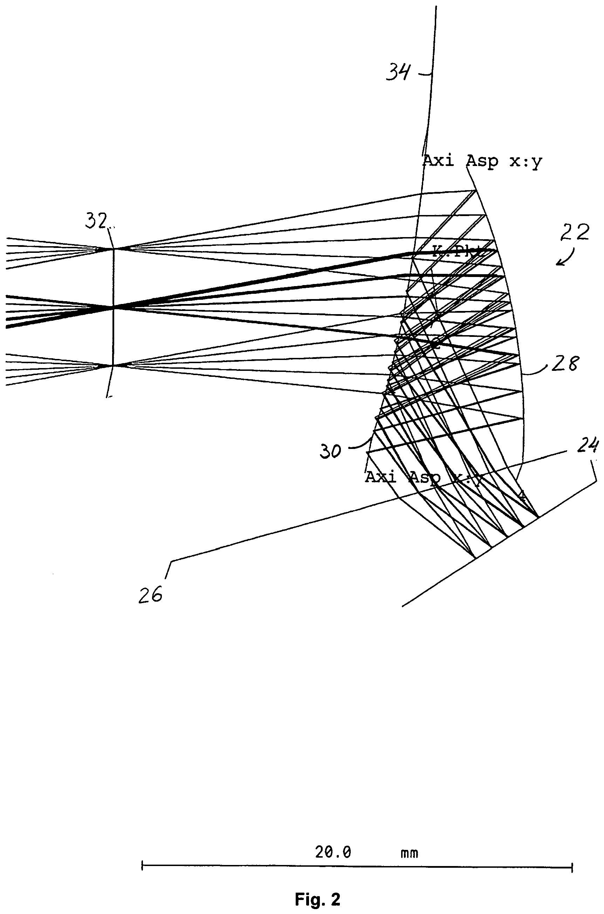

**Fig. 2** zeigt den Strahlengang durch den Prismenteil **22** eines bevorzugten erfindungsgemäßen Brillenglases. Der von einem Display **24,** welches seitlich in Bezug auf das Brillenglas angeordnet ist, kommende Lichtstrahl wird nach Eintritt durch die Seitenfläche **26** des Brillenglases im Prismenteil **22** (nachfolgend auch Seitenfläche des Prismenteils genannt) an der augenseitigen Fläche **30** des Brillenglases in der Prismenzone (nachfolgend auch augenseitige Fläche des Prismenteils genannt) in Richtung der objektseitigen Fläche **28** des Brillenglases in der Prismenzone (nachfolgend auch objektseitige Fläche des Prismenteils genannt) totalreflektiert. Anschließend wird der Strahl an der objektseitigen Fläche **28** des Brillenglases in Richtung der augenseitigen Fläche **30** reflektiert. Nach dem Austritt durch die augenseitige Fläche **30** des Prismenteils verläuft der Strahl durch die Pupille **32** eines der Augen des Brillenträgers, so daß eine optische Abbildung des Displays **24** in einem vorgegebenen virtuellen Abstand erzeugt wird.

Die augenseitige Fläche **30** des Prismenteils ist vorzugsweise eine Freiformfläche, welche vorzugsweise nahtlos in die augenseitige Fläche des Brillenglases in der Grundteilzone **34** (augenseitige Fläche des Grundteils) übergeht. Die Seitenfläche **26** des Prismenteils kann beispielsweise eine plane Fläche sein. Die objektseitige Fläche des Prismenteils **28** kann beispielsweise eine sphärische Fläche sein. Alternativ kann die objektseitige Fläche des Prismenteils eine Freiformfläche sein, welche insbesondere derart berechnet bzw. optimiert ist, die Abbildungsfehler des Brillenglases in der Prismenzone bzw. die Abbildungsfehler des Prismenteils zu minimieren.

Auf der objektseitigen Fläche des Prismenteils **28** kann eine Reflektionsschicht aufgebracht werden. Die Reflektionsschicht kann eine teildurchlässige oder eine vollreflektierende Reflektionsschicht sein.

Ein wichtiger Vorteil des bevorzugten Prismenteils bzw. des bevorzugten Strahlengangs durch den Prismenteil ist, daß die augenseitige Fläche doppelt für die Abbildung benutzt wird.

Bei der Optimierung des Prismenteils und insbesondere der Flächengestaltung und/oder Position des Prismenteils auf dem Brillenglas und/oder Anordnung des Prismenteils im Bezug auf das Display werden vorzugsweise individuelle Parameter der Augen des Brillenträgers und/oder der Gebrauchsstellung des Brillenglases (Vorneigung, Hornhautscheitelabstand, Pupillendistanz, Fassungsscheibenwinkel, etc.) und/oder individuelle Zentrierdaten berücksichtigt. Alternativ können Parameter eines durchschnittlichen Auges und/oder einer durchschnittlichen Gebrauchsstellung berücksichtigt werden. Eine standardisierte durchschnittliche Gebrauchsstellung eines Brillenglases ist z.B. in DIN 58208 Teil 2 angegeben.

### Erstes Ausführungsbeispiel

- Objektseitige Fläche des Brillenglases:: Prismenteil als "Nahteil" integriert, d.h. komplexe Fläche, welche aus objektseitigen Flächen des Grundteils und des Prismenteils zusammengesetzt ist;
- augenseitige Fläche des Brillenglases:: einteilige, sich über Grund- und Prismenteil durchgehend erstreckende Fläche, d.h. keine Ausbildung eines getrennten "Nahteils"

Gemäß einem ersten Ausführungsbeispiel ist die objektseitige Fläche eine zusammengesetzte (komplexe) Fläche, welche eine Grundteilzone und eine Prismenzone aufweist, wobei sich die Gestaltung der objektseitigen Fläche des Brillenglases in der Grundteilzone und in der Prismenzone unterscheidet. In die objektseitige Fläche des Brillenglases wird die objektseitige Fläche des Prismenteils als "Nahteil" (in Anlehnung an Nahteile von bifokalen Brillengläsern) integriert. In anderen Worten ist die objektseitige Fläche des Brillenglases als eine aus der objektseitigen Fläche des Grundteils und der objektseitigen Fläche des Prismenteils zusammengesetzte komplexe Fläche ausgebildet.

Je nach Gestaltung kann sich die objektseitige Fläche des Prismenteils an die objektseitige Fläche des Grundteils mittels einer Stufe, eines Knicks, etc. anschließen. Vorzugsweise ist die Stufe verblendet.

Insbesondere kann die objektseitige Fläche des Prismenteils, wie oben erläutert, als eine sphärische Fläche mit einem ersten Krümmungsradius, welcher kleiner als der Krümmungsradius der augenseitigen Fläche des Grundteils ist, ausgebildet sein. Abweichungen von der sphärischen Form können jedoch in der Überganszone zwischen der Prismenzone und der Grundzone auftreten, z.B. um die vorhandene Stufe zu verblenden bzw. die Höhendifferenz der objektseitigen Fläche des Prismenteils und der objektseitigen Fläche des Grundteils an dem Übergang Prismenteil-Grundteil auszugleichen.

Die objektseitige Fläche des Grundteils kann eine einfache sphärische oder rotationssymmetrisch asphärische Fläche sein, deren Durchbiegung beispielsweise in herkömmlicher Weise grob in Abhängigkeit von der zur erzielenden sphärischen, torischen und/oder prismatischen Wirkung (d.h. Rezeptwirkung) und/oder nach kosmetischen Gesichtspunkten ausgewählt werden kann. Ebenfalls kann die Auswahl der Durchbiegung nach fertigungstechnisch bedingten Gesichtspunkten erfolgen.

Alternativ kann die objektseitige Fläche des Grundteils die Rezeptfläche sein, d.h. als eine sphärische oder rotationssymmetrisch asphärische (bei einem nicht astigmatischen Einstärkenbrillenglas), eine torische oder atorische (bei einem astigmatischen Brillenglas) oder eine progressive Fläche (bei einem progressiven Brillenglas) ausgebildet sein. Zusätzlich kann eine Prismenverordnung berücksichtigt werden.

Die augenseitige Fläche des Brillenglases ist eine einteilige, sich über den Grundteil und den Prismenteil durchgehend erstreckende, konkave Fläche. Die augenseitige Fläche des Brillenglases stellt vorzugsweise die Rezeptfläche des Brillenglases dar. Im Fall eines Einstärkenbrillenglas zur Korrektur einer sphärischen Fehlsichtigkeit eines Brillenträgers kann die augenseitige Fläche des Brillenglases als eine sphärische oder eine rotationssymmetrische asphärische Fläche mit einem zum Erzielen der vorgegebenen dioptrischen Wirkung geeigneten Krümmungsradius ausgebildet sein. Im Fall eines astigmatischen Einstärkenbrillenglases kann die augenseitige Fläche des Brillenglases eine torische oder eine atorische Fläche sein. Im Fall eines progressiven Brillenglases kann die augenseitige Fläche des Brillenglases eine progressive Fläche sein.

### Zweites Ausführungsbeispiel

- Objektseitige Fläche des Brillenglases:: Prismenteil als "Nahteil" integriert, d.h. komplexe Fläche, welche aus objektseitigen Flächen des Grundteils und des Prismenteils zusammengesetzt ist;
- augenseitige Fläche des Brillenglases:: Prismenteil als "Nahteil" integriert, d.h. komplexe Fläche, welche aus augenseitigen Flächen des Grundteils und des Prismenteils zusammengesetzt ist; die augenseitige Fläche des Prismenteils ist vorzugsweise eine Freiformfläche.

Bei dem Brillenglas gemäß dem ersten Ausführungsbeispiel ist die augenseitige Fläche des Brillenglases als eine einteilige sich über den Grundteil und den Prismenteil erstreckende (z.B. sphärische) Fläche ausgebildet.

Gemäß einem zweiten Ausführungsbeispiel ist die augenseitige Fläche des Brillenglases, wie die objektseitige Fläche des Brillenglases, in eine Grundteilzone und eine prismatische Zone bzw. Prismenzone unterteilt, wobei sich die Gestaltung der objektseitigen Fläche des Brillenglases in der Grundteilzone und in der Prismenzone unterscheidet. In anderen Worten ist die augenseitige Fläche des Brillenglases eine aus der augenseitigen Fläche des Grundteils und der augenseitigen Fläche des Prismenteils zusammengesetzte komplexe Fläche. Vorzugsweise ist die augenseitige Fläche des Prismenteils eine Freiformfläche, welche derart optimiert bzw. ausgelegt wird, die erforderliche Strahlablenkung von Lichtstrahlen von dem Display zu erzielen, wobei die Rezeptwirkung berücksichtigt wird, um eine möglichst scharfe und verzerrungsfreie Abbildung des Displays erzeugen zu können.

Die augenseitige Freiformfläche des Prismenteils wird vorzugsweise unter Berücksichtigung von individuellen Daten des Brillenträgers, umfassend insbesondere Refraktionsdaten des Brillenträgers, Daten bezüglich der individuellen Gebrauchsstellung des Brillenglases vor den Augen des Brillenträgers, Daten bezüglich der Augen des Brillenträgers und/oder Daten bezüglich der individuellen räumlichen Anordnung des Displays der Brille bzw. Anordnung des Displays bezüglich des Brillenglases berechnet bzw. optimiert. Alternativ können auch lediglich durchschnittliche Daten bzw. Parameter berücksichtigt werden.

Die objektseitige Fläche des bevorzugten Brillenglases gemäß dem zweiten Ausführungsbeispiel kann wie die objektseitige Fläche eines bevorzugten Brillenglases gemäß dem ersten Ausführungsbeispiel aufgebaut sein. Insbesondere kann die objektseitige Fläche des Prismenteils, wie oben erläutert, als eine sphärische Fläche mit einem ersten Krümmungsradius, welcher kleiner als der Krümmungsradius der augenseitigen Fläche des Grundteils ist, ausgebildet sein.

Die Herstellung des Brillenglases erfolgt vorzugsweise durch eine Kombination der für bifokale Brillengläser entwickelten Herstellungsverfahren und der für individuelle Brillengläser entwickelten Herstellungsverfahren. Insbesondere kann die Freiformfläche mittels CNC-Maschinen nach den ermittelten Flächendaten hergestellt werden.

### Beispiele

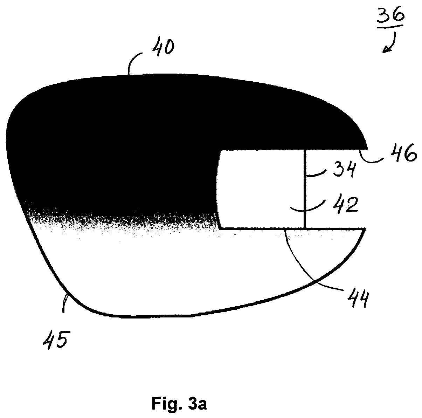

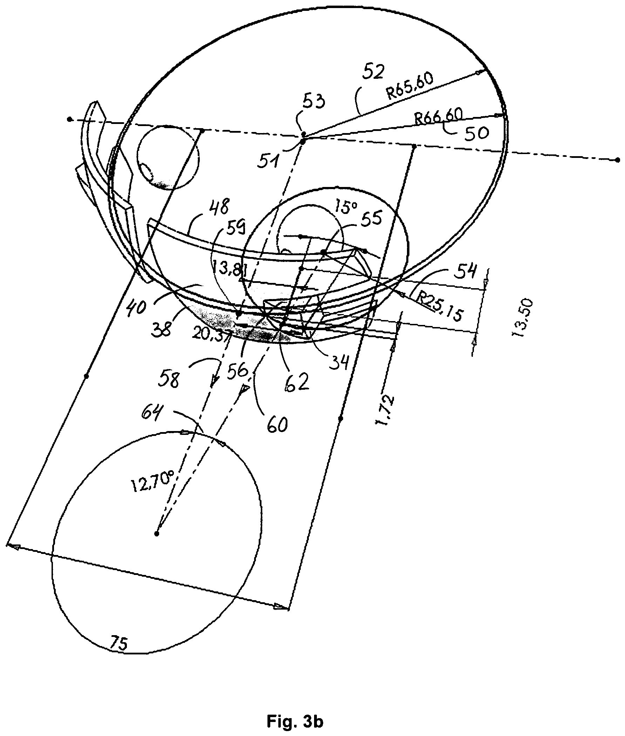

**Fig. 3a** zeigt eine frontale Ansicht eines bevorzugten erfindungsgemäßen Brillenglases **36** gemäß dem zweiten Ausführungsbeispiel mit einem temporal (d.h. in Richtung der Schläfen) versetzten Prismenteil **44** und einem Grundteil **45.** **Fig. 3b** zeigt eine perspektivische Ansicht des Systems Brillenglas-Auge in einer vorgegeben Gebrauchsstellung des Brillenglases vor den Augen des Brillenträgers.

Sowohl die objektseitige als auch die augenseitige Fläche des Brillenglases sind jeweils in eine Prismenzone und eine Grundteilzone unterteilt.

In die objektseitige Fläche **38** des Brillenglases ist die objektseitige Fläche des Prismenteils als "Nahteil" integriert. Die objektseitige Fläche **38** des Brillenglases weist eine Grundteilzone **40** und eine Prismenzone **42** auf und ist eine komplexe Fläche, welche aus der objektseitigen Fläche des Grundteils **45** und der objektseitigen Fläche des Prismenteils **44** zusammengesetzt ist. Angrenzend an die Eintrittsfläche für den Strahlengang, d.h. an die Eintritts- bzw. Seitenfläche des Prismenteils **44,** weist das Brillenglas einen Ausschnitt **46** auf, um die Scheibenlänge der Brillenfassung vergrößern zu können.

Die augenseitige Fläche **48** des Brillenglases ist ebenfalls eine komplexe Fläche, welche aus den augenseitigen Flächen des Prismenteils und des Grundteils zusammengesetzt ist, und eine Prismenzone und eine Grundteilzone aufweist.

Die objektseitige Fläche des Grundteils ist eine sphärische Fläche mit einem Krümmungsradius **50,** wobei die die objektseitige Fläche des Grundteils enthaltende Sphäre den Mittelpunkt **51** aufweist. In dem in Fig. 3b gezeigten Ausführungsbeispiel beträgt der Krümmungsradius **52** der objektseitigen Fläche des Grundteils 66,6 mm.

Die augenseitige Fläche des Grundteils **45** ist ebenfalls sphärisch mit einem Krümmungsradius **52** von 65,6 mm, wobei die die augenseitige Fläche des Grundteils enthaltene Sphäre den Mittelpunkt **53** aufweist. Die dioptrische Wirkung des Grundteils **45** ist dementsprechend ungefähr Null dpt, d.h. der Grundteil **45** ist als eine "plano"-Linse ohne dioptrische Wirkung ausgebildet. Der Grundteil kann jedoch derart ausgebildet sein, daß eine vorgegebene dioptrische Wirkung (sphärische, astigmatische und/oder prismatische) und gegebenenfalls deren Veränderung (Addition) erzielt werden kann. Demgemäß kann die objektseitige oder die augenseitige Fläche des Grundteils als eine Rezeptfläche (d.h. als eine sphärische oder rotationssymmetrisch asphärische Fläche mit einem geeigneten Krümmungsradius, als eine torische oder atorische Fläche oder als eine progressive Fläche) ausgebildet sein.

Die objektseitige Fläche **38** des Brillenglases in der Prismenzone **42** (objektseitige Fläche des Prismenteils) ist eine sphärische Fläche mit einem Krümmungsradius **54,** wobei die die objektseitige Fläche des Prismenteils enthaltene Sphäre den Mittelpunkt **55** aufweist. In dem in Fig. 3b gezeigten Brillenglas beträgt der Krümmungsradius **54** der objektseitigen Fläche des Prismenteils 25,15 mm. Der Krümmungsradius der objektseitigen Fläche des Prismenteils kann jedoch auch andere Werte in Abhängigkeit von den Rezept- bzw. Refraktionsdaten des Brillenträgers aufweisen. Für diese Fläche können z.B. unterschiedliche "Basiskurven" vorgesehen werden, so daß ein breites Wirkungsspektrum abgedeckt werden kann.

Der Ursprung des Koordinatensystems befindet sich im geometrischen Mittelpunkt der objektseitigen Fläche bzw. im geometrischen Mittelpunkt des (rohrunden) Brillenglases. Falls es sich um ein vordezentriertes rohrundes Brillenglas handeln sollte, ist der Ursprung des Koordinatensystems um den Dezentrierungsvektor gegenüber dem geometrischen Mittelpunkt zu verschieben. Die horizontale Richtung (x-Achse) wird z.B. durch die Glashorizontale gemäß Permanentgravuren auf dem Brillenglas vorgegeben.

In vertikaler Richtung (y-Achse) schließt sich die sphärische objektseitige Fläche 38 des Prismenteils an die sphärische objektseitige Fläche des Grundteils mittels einer Stufe **56** an. Die Seiten der Stufe können leicht angeschrägt sein, so daß der Winkel, welcher die Stufe mit der objektseitigen Fläche des Brillenglases in dem Grundteil bildet, sich von 90° unterscheidet. Dadurch wird ein Herausnehmen des fertigen Brillenglases aus der Gießform bei einem Herstellen mittels eines Gießverfahrens erleichtert. Die Stufe **56** kann mittels geeigneter Gestaltung der objektseitigen Fläche des Prismenteils verblendet werden, vorzugsweise derart, daß sich die objektseitige Fläche des Prismenteils an die objektseitige Fläche des Grundteils einmal, vorzugsweise zweimal, stetig differenzierbar anschließt.

In horizontaler Richtung (x-Achse, z.B. Glashorizontale gemäß Permanentgravuren auf dem Brillenglas) ist zwischen der objektseitigen Fläche des Prismenteils und der objektseitigen Fläche des Grundteils keine Stufe vorhanden. Die objektseitige Fläche des Prismenteils schließt sich mit einem Knick an die objektseitige Fläche des Grundteils an. Vorzugsweise beträgt der Winkel zwischen den Flächennormalen der objektseitigen Flächen des Prismenteils und des Grundteils an dem Übergang zwischen dem Grundteil und dem Prismenteil weniger als 45°, vorzugsweise weniger als 25°, besonders bevorzugt weniger als 10°.

Die objektseitige Fläche des Prismenteils kann jedoch derart ausgebildet werden, daß sich die objektseitige Fläche des Prismenteils vorzugsweise zweimal stetig differenzierbar an die objektseitige Fläche des Grundteils anschließt.

Der als Nahteil ausgebildete Prismenteil mit einem Radius der objektseitigen Fläche von 25,15 mm trifft unter einem Winkel von 12,07° auf die objektseitige Fläche des Grundteils mit Radius von 66,6mm. Die Achse schneidet dabei die Koordinate (13,81 mm, 0mm, 1,72mm) in Pfeilhöhenkoordinaten bezogen auf die Glasmitte bzw. auf den optischen Mittelpunkt der objektseitigen Fläche **38.** Der Prismenteil ist mittig um die y-Achse positioniert. Die maximale Höhe des Prismenteils beträgt ungefähr 12 mm.

In anderen Worten schließen die horizontalen Komponenten der Flächennormale **58** der objektseitigen Fläche des Grundteils in dem geometrischen Mittelpunkt **59** der Vorderfläche des Brillenglases und der Flächennormale **60** der objektseitigen Fläche des Prismenteils in dem geometrischen Mittelpunkt **62** der objektseitigen Prismenfläche (bzw. geometrischer Mittelpunkt des Prismenteils) einen Winkel **64** ein. Bei dem in Fig. 3b dargestellten Brillenglas beträgt der Winkel **64** 12,7°.

Die augenseitige Fläche des Prismenteils ist eine Freiformfläche, welche sich mit einem kleinen Knick an die augenseitige Fläche des Grundteils anschließt.

Das Brillenglas wird dabei vorzugsweise so berechnet bzw. optimiert, daß sich von dem geometrischen Mittelpunkt des Brillenglases (s.o.) bzw. der geometrischen Mitte der Vorderfläche des Brillenglases die Pfeilhöhe der augenseitigen Fläche des Prismenteils (Freiformfläche des Prismenteils) mit einem kleinen Knick an die augenseitige Fläche des Grundteils anschließt (d.h. mit einem kleinen Knick in der augenseitigen Fläche). Dies kann, z.B. mittels einer translatorischen Verschiebung der augenseitigen Fläche des Prismenteils (Freiformprismenfläche) sowie durch eine geeignete Auswahl der Basiskurve erzielt werden.

Der Prismenteils kann in einem ersten Koordinatensystem mit einem vorgegebenen Koordinatenursprung berechnet werden. Die Pfeilhöhenkoordinaten des Prismenteils sind dementsprechend in dem ersten Koordinatensystem angegeben. Durch eine Koordinatentransformation, welche die oben beschriebene Translation des Prismenteils berücksichtigt, können die Pfeilhöhen der Flächen des Prismenteils (objektseitige Fläche des Prismenteils, augenseitige Freiformfläche des Prismenteils und Seitenfläche des Prismenteils) in dem oben angegebenen Koordinatensystem mit einem Ursprung in dem (ggfs. um die Vordezentrierung korrigierten) geometrischen Mittelpunkt der objektseitigen Fläche des Prismenteils berechnet bzw. transformiert werden.

Vorzugsweise ist der Winkel zwischen der horizontalen Komponente der Flächennormale der augenseitigen Fläche des Prismenteils und der horizontalen Komponente der Flächennormale der augenseitigen Fläche des Grundteils kleiner als 5°, vorzugsweise kleiner als 2°, besonders bevorzugt kleiner als 1°.

Die Flächen des Brillenglases, insbesondere die Freiformfläche des Prismenteils, sind vorzugsweise unter Berücksichtigung von individuellen Daten des Brillenträgers, umfassend insbesondere Refraktionsdaten des Brillenträgers, Daten bezüglich der individuellen Gebrauchsstellung des Brillenglases vor den Augen des Brillenträgers (Vorneigung, Fassungsscheibenwinkel, Hornhautscheitelabstand, Zentrierdaten, etc.), Daten bezüglich der Augen des Brillenträgers (z.B. Pupillendistanz) und/oder Daten bezüglich der räumlichen Anordnung des Displays der Brille bzw. Anordnung des Displays bezüglich des Brillenglases berechnet bzw. optimiert worden. Alternativ können auch lediglich durchschnittliche Daten berücksichtigt werden.

Vorzugsweise wird das Brillenglas derart vor den Augen des Brillenträgers angeordnet, daß die Normale der Pupillenfläche parallel zur der Flächennormale der objektseitigen Fläche im geometrischen Mittelpunkt des Brillenglases ist. Dabei wird insbesondere eine Pupille mit einem Pupillendurchmesser von 5 mm berücksichtigt.

Die Bezugspunkte für die Pupille, den Prismenteil (objektseitige Fläche des Prismenteils) das Display und die Mitte der Prismenfläche (augenseitige Freiformfläche des Prismenteils) in diesem Ausführungsbeispiel betragen beispielsweise:
- Pupille (13,8138; 0; -16,7827);
- Prismenteil (13,8138; 0; 1,7173);
- Seitenfläche des Prismenteils (22,2753; 0; -4,8476);
- Display (23,8429; 0; 1,1915)
- Mitte Freiformfläche des Prismenteils (13,115; 0; 4,9762).

Wie oben erläutert, befindet sich der Ursprung des Koordinatensystems im (ggfs. korrigierten) geometrischen Mittelpunkt der objektseitigen Fläche bzw. im (ggfs. korrigierten) geometrischen Mittelpunkt des Brillenglases. Die horizontale Richtung (x-Achse) wird z.B. durch Glashorizontale gemäß Permanentgravuren auf dem Brillenglas vorgegeben.

Die Flächennormale der Seitenfläche **34** des Brillenglases schließt vorzugsweise einen Winkel von -45° bis +45°, vorzugsweise von -15° bis +15°, besonders bevorzugt 0° mit der Flächennormale eines Displays (nicht gezeigt in Fig. 3b). Das Display ist vorzugsweise derart angeordnet, daß die Flächennormale des Displays und die Flächennormale der objektseitigen Fläche des Brillenglases in dem geometrischen Mittelpunkt des Brillenglases einen Winkel von ungefähr 58,83° schließen. Die optimale Blickrichtung in dem Prismenteil ist in diesem Ausführungsbeispiel folglich parallel zur der Flächennormale der objektseitigen Fläche in dem geometrischen Mittelpunkt des Brillenglases. Eine Einstellung der Blickauslenkung erfolgt in diesem Ausführungsbeispiel durch Verdrehen des gesamten Brillenglases um den Augendrehpunkt um den gewünschten Winkel (horizontal und vertikal). Vorzugsweise sind die Position, der Blickwinkel in das Prisma bzw. in dem Prismenteil und/oder der gewünschte Blickwinkel individuell anpaßbar. In anderen Worten werden die Position, der Blickwinkel in das Prisma bzw. in dem Prismenteil und/oder der gewünschte Blickwinkel individuell in Abhängigkeit von der individuellen Gebrauchsstellung des Brillenglases vor den Augen eines bestimmten Brillenträgers festgelegt bzw. bestimmt.

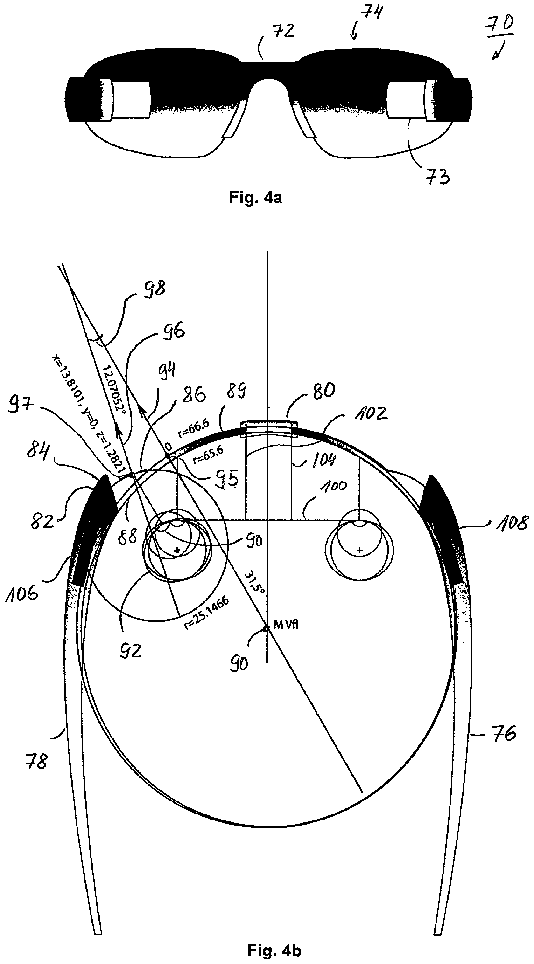

**Fig. 4a** zeigt eine Brille **70** mit einem in einer Brillenfassung **72** eingesetzten bevorzugten erfindungsgemäßen Brillenglas **74** mit temporal versetztem Prismenteil **73.** **Fig. 4b** zeigt eine schematische Darstellung des Systems Brille-Auge bei aufgesetzter Brille (Ansicht von oben).

Die Brillenfassung **72** die Brillenfassung weist zwei Brillenbügel **76** und **78** und einen Brückenteil **80** auf. In der Brillenfassung ist ein Display **82** integriert. Das Display kann beispielsweise ein OLED, ein Flüssigkristalldisplay oder ein anderes geeignetes Display sein. Vorzugsweise weist das Display räumliche Dimensionen gleich oder kleiner als 12 mm x 13 mm x 3 mm (Breite x Länge x Höhe) auf.

Das Display **82** ist derart angeordnet, daß die von dem Display ausgehenden Lichtstrahlen nach Eintritt durch die vorzugsweise plane Seitenfläche **84** des Prismenteils an der augenseitigen Fläche des Prismenteils zumindest einmal in Richtung der objektseitigen Fläche **86** des Brillenglases (total)reflektiert werden. Nach der Totalreflektion an der augenseitigen Fläche werden die Strahlen an der objektseitigen Fläche in Richtung der augenseitigen Fläche des Prismenteils reflektiert. Vorzugsweise ist das Display an der Seitenfläche des Prismenteils angeordnet. Weiter bevorzugt wird die Position des Displays in Abhängigkeit von der zu erzielenden Rezeptwirkung des Brillenglases (d.h. Wirkungs- bzw. Refraktionsdaten des Brillenträgers) und/oder von individuellen Parametern der Augen des Brillenträgers und/oder der individuellen Gebrauchsstellung des Brillenglases bestimmt bzw. festgelegt. Das Display **82** kann z.B. in gleicher Weise in Bezug auf das Brillenglas **74** angeordnet werden, wie in Zusammenhang mit Fig. 3a und 3b beschrieben.

Nach dem Austritt durch die augenseitige Fläche **88** verlaufen die Strahlen durch die Pupille **90** des beispielsweise linken Auge **92** des Brillenträgers, so daß eine optische Abbildung des Displays **82** in einem vorgegebenen virtuellen Abstand erzeugt wird. Der virtuelle Abstand kann in Abhängigkeit von der Hauptanwendung der Brille variieren. Der virtuelle Abstand kann beispielsweise 1 m bis 5m, vorzugsweise 2m bis 3m betragen. So ist zum Beispiel ein virtueller Abstand von 3 bis 5 m für eine beim Joggen getragene Brille gut geeignet. Für andere Einsatzgebiete kann ein kürzerer oder längerer Abstand von Vorteil sein. Alternativ kann das Bild des Displays **82** in Unendlichen erzeugt werden. Der Prismenteil bzw. die Anordnung, Flächengestaltung und der Strahlengang durch das Prismenteil werden vorzugsweise derart optimiert, daß die Refraktion des Brillenträgers mit berücksichtigt wird.

Das Brillenglas kann ein Brillenglas sein, welches im wesentlichen den gleichen Aufbau bzw. die gleichen Parameter wie das in Fig. 3a und 3b gezeigte Brillenglas aufweist. Hinsichtlich der Merkmale des Brillenglases wird auf die entsprechende Beschreibung des in Fig. 3a und 3b gezeigten Brillenglases verwiesen.

Alternativ kann das Brillenglas ebenfalls - wie bei dem ersten Ausführungsbeispiel - lediglich eine komplexe, aus einer Fläche des Prismenteils und einer Fläche des Grundteils zusammengesetzte Fläche aufweisen.

Die objektseitige Fläche **89** des Grundteils kann z.B. eine sphärische Fläche mit einem Krümmungsradius von 66,6 mm sein, wobei die die sphärische Fläche des Grundteils enthaltene Sphäre den Mittelpunkt **90** aufweist. Die augenseitige Fläche **88** des Brillenglases ist eine sich über den Grundteil und den Prismenteil durchgehend erstreckende, konkave, sphärische Fläche mit einem Radius von beispielsweise 65,6 mm. Der Grundteil weist dementsprechend eine dioptrische Wirkung von ungefähr Null auf, d.h. ist als eine "Plan"-Linse ausgebildet. Wie bereits oben erläutert kann der Grundteil jedoch ebenfalls derart ausgebildet sein, daß dieser eine zur Korrektur der Fehlsichtigkeit des Brillenträgers erforderliche dioptrische Wirkung und gegebenenfalls eine vorgegebene Änderung der dioptrische Wirkung (Addition) aufweist. Die augenseitige Fläche kann dementsprechend als eine sphärische oder rotationssymmetrisch asphärische Fläche mit einem geeigneten Krümmungsradius (bei einem nicht astigmatischen Einstärkenbrillenglas), als eine torische oder atorische Fläche (bei einem astigmatischen Einstärkenbrillenglas) oder eine progressive Fläche (bei einem progressiven Brillenglas) ausgebildet sein.

Die objektseitige Fläche **86** des Prismenteils des in Fig. 4a und 4b dargestellten Brillenglases mit einer plano Wirkung ist - wie bei dem in Fig. 3a und 3b dargestellten Brillenglas - eine sphärische Fläche mit einem Krümmungsradius von 25,15 mm. Der Krümmungsradius der objektseitigen Fläche des Prismenteils kann jedoch in Abhängigkeit von der erforderlichen dioptrischen Wirkung des Brillenglases bzw. von den zu berücksichtigen Refraktionsdaten des Brillenträgers andere geeignete Werte annehmen. Für diese Fläche können unterschiedliche "Basiskurven" vorgesehen werden, so daß ein breites Wirkungsspektrum abgedeckt werden kann.

Die horizontalen Komponenten der Flächennormale **94** der objektseitigen Fläche des Grundteils in dem geometrischen Mittelpunkt **95** der Vorderfläche des Brillenglases und der Flächennormale **96** der objektseitigen Fläche des Prismenteils in dem geometrischen Mittelpunkt **97** der objektseitigen Prismenfläche (bzw. geometrischer Mittelpunkt des Prismenteils) schließen einen Winkel **98** ein, welcher bei diesem Ausführungsbeispiel 12,07° beträgt.

Der Punkt **97** hat folgende Koordinaten (x=13,81, y=0, z=1,28), wobei das Koordinatensystem ebenfalls wie das Koordinatensystem in Fig. 3b definiert ist.

Hinsichtlich weiterer hier nicht näher beschriebenen Merkmale des Brillenglases wird auf die entsprechende Beschreibung des in Fig. 3a und 3b gezeigten Brillenglases verwiesen.

Ferner bezeichnet das Bezugszeichen **100** in Fig. 4b die Linie, welche die Pupillenmitten der beiden Augen des Brillenträgers verbindet; das Bezugszeichen **102** und **104** die Abgrenzlinien des Brückenteils **80.**

In der Brillenfassung sind ebenfalls zumindest eine Energiequelle **106** sowie eine Ansteuereinrichtung **108** zum Ansteuern des Displays integriert. Das Ansteuern des Displays kann z.B. mittels Funkübertragung erfolgen. Alternativ kann eine Flachbandkabelverbindung zwischen dem Display und der Ansteuereinrichtung vorgesehen werden.

Wie oben beschrieben sind alle Bestandteile (einschließlich Display, Energiequelle, Ansteuereinrichtung) in der Brille (bzw. in den Brillengläsern und in der Brillenfassung) integriert, so daß die Brille ein autarkes System, d.h. ein System ohne Kabelverbindung mit anderen Systemen, darstellt.

Vorzugsweise dient die Brille als ein Anzeigegerät, d.h. als Schnittstelle zu beliebigen Endgeräten. Vorzugsweise erfolgt die Verbindung mit den Endgeräten drahtlos mittels Funkübertragung.

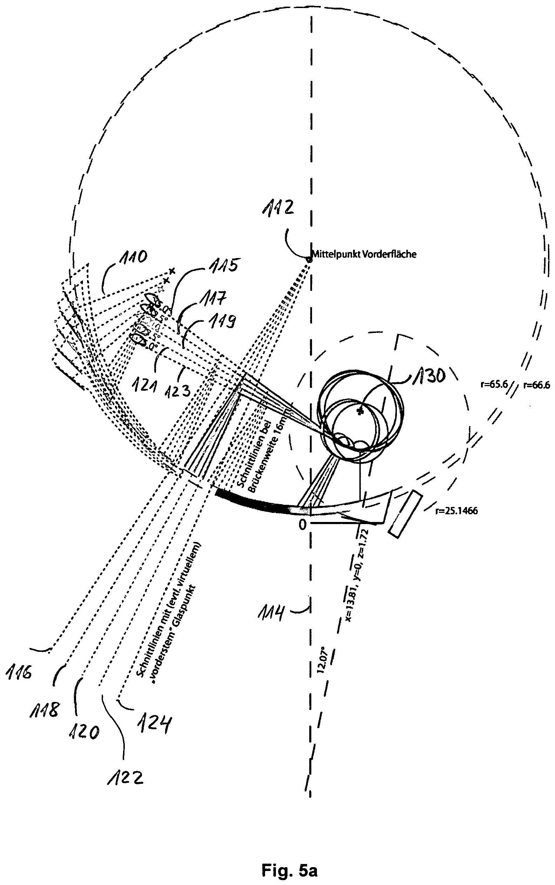

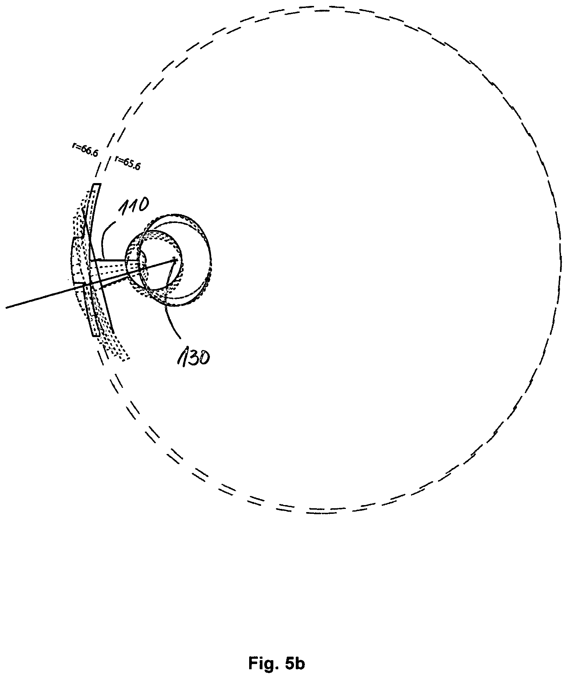

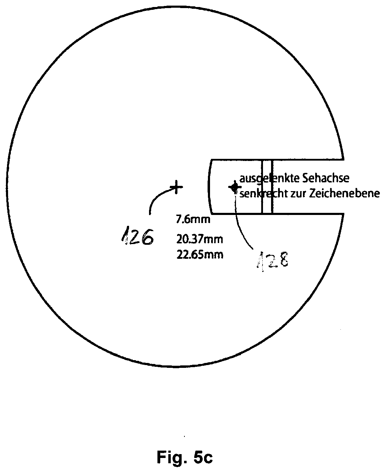

**Figuren 5a** und **5b** zeigen ein Brillenglas, welches um den Augendrehpunkt **130** in verschiedenen Positionen für eine Blickauslenkung gedreht wurde und die entsprechenden Strahlengänge in dem System Brillenglas-Auge in einer vorgegebenen (durchschnittlichen oder individuellen) Gebrauchsstellung des Brillenglases. **Fig. 5a** zeigt eine Ansicht von oben und **Fig. 5b** eine Seitenansicht im Schnitt der ausgelenkten Sehachse **110.** In **Fig. 5c** ist eine Frontalansicht eines ungerandeten Brillenglases mit einem temporal versetzten Prismenteil gemäß dem zweiten Ausführungsbeispiel gezeigt. Das in Fig. 5a bis 5c gezeigte Brillenglas hat beispielsweise die gleichen Parameter (Position und Krümmungsradien der augenseitigen und objektseitigen Flächen des Grundteils und des Prismenteils) wie das in 3a und 3b oder das in Fig. 4a und 4b gezeigte Brillenglas.

**Fig. 5a** zeigt schematisch die Verdrehungen des Brillenglases um den Augendrehpunkt für verschiedene Blickauslenkungen von 25° bis 30° in 2,5° Schritten für den Blick durch den Prismenteil eines Brillenglases mit definierter Position des Prismenteils. Abhängig von der Blickauslenkung schiebt sich der als "Nahteil" ausgebildete Prismenteil in das Blickfeld des Brillenträgers. Die Symmetrieachse der Fassung dreht sich mit der zugrunde gelegten Blickauslenkung. In dem Fall der Fig. 5a ändert sich der Fassungsscheibenwinkel. Selbstverständlich kann auch bei einer individuellen Optimierung des Prismenteils die Position, Fassungsscheibenwinkel, und andere individuelle Parameter der Gebrauchsstellung des Brillenglases berücksichtigt werden, so daß sich nur die Prismenflächen (objektseitige und/oder augenseitige Flächen des Prismenteils) nicht jedoch die Position des Brillenglases ändert.

In Fig. 5a bezeichnet das Zeichen **112** den Mittelpunkt der die sphärische Vorderfläche des Grundteils enthaltenen Sphäre, das Bezugszeichen **114** die Flächennormale der Vorderfläche durch den (ggfs. korrigierten) geometrischen Mittelpunkt des (rohrunden) Brillenglases.

In Fig. 5a und 5b stellen die farbige, gestrichelte Linien **115, 117, 119, 121 und 123** die Verbindungslinien der beiden Pupillen (vereinfacht als symmetrischer Fall mit einer Pupillendistanz von 64 mm). Die farbige, gestrichelte Linien **116, 118, 120, 122** und **124** beziehen sich auf die Nullblickrichtungen bei unterschiedlichen Blickauslenkungen.

**Fig. 5b** zeigt eine Seitenansicht im Schnitt der ausgelenkten Sehachse **110** des in einer vorgegebenen Gebrauchsstellung (durchschnittlich oder individuell) vor dem Auge des Brillenträgers, wobei die ausgelenkte Sehachse in diesem Schnitt senkrecht auf der Prismenfläche steht. Wie aus Fig. 5b ersichtlich ist, wandert mit der Vorneigung des Brillenglases der Prismenteil nach unten.

**Fig. 5c** zeigt eine Frontalansicht senkrecht zu dem geometrischen Mittelpunkt **126** des Brillenglases. Der Punkt **128** auf der objektseitigen Fläche des Prismenteils ist der Durchstoßpunkt der ausgelenkten Sehachse mit der objektseitigen Fläche des Brillenglases

Die Abstände der senkrechten Projektionen der Prismenübergänge zum Brillenglas bzw. Kanten zur Seitenfläche des Brillenglases betragen jeweils 7,6 mm, 20,37 mm und 22,65 mm.

Der Prismenteil wird vorzugsweise derart ausgelegt und angeordnet, daß die ausgelenkte Sehachse die Prismenfläche unter den gleichen Bedingungen trifft, wie in Fig. 5a und 5b gefordert. Theoretisch ist dann jede beliebige Drehung des Brillenglases um den Augendrehpunkt **130** und den Sehstrahl erlaubt. Jedoch ist es aus physiologischen Gründen von Vorteil, wenn die ausgelenkte Sehachse seitlich (temporal oder nasal) kleiner als 35° und nach vertikal (nach unten oder nach oben) kleiner als 20° bleibt. Ebenfalls ist es von Vorteil, wenn der Prismenteil derart ausgelegt und angeordnet ist, daß das Sehfeld so wenig wie möglich beeinträchtigt wird. Vorteilhaft ist eine Position bzw. Anordnung des Prismenteils seitlich horizontal (temporal oder nasal) und vertikal nach unten versetzt.

Besonders bevorzugt wird die Position des Prismenteils individuell für einen bestimmten Brillenträger und eine bestimmte Gebrauchsstellung optimiert. Die Position des Prismenteils kann insbesondere in Abhängigkeit von dem Blickwinkel, Fassungsscheibenwinkel, Hornhautscheitelabstand, Basiskurve des Grundglases, etc. optimiert festgelegt bzw. berechnet werden.

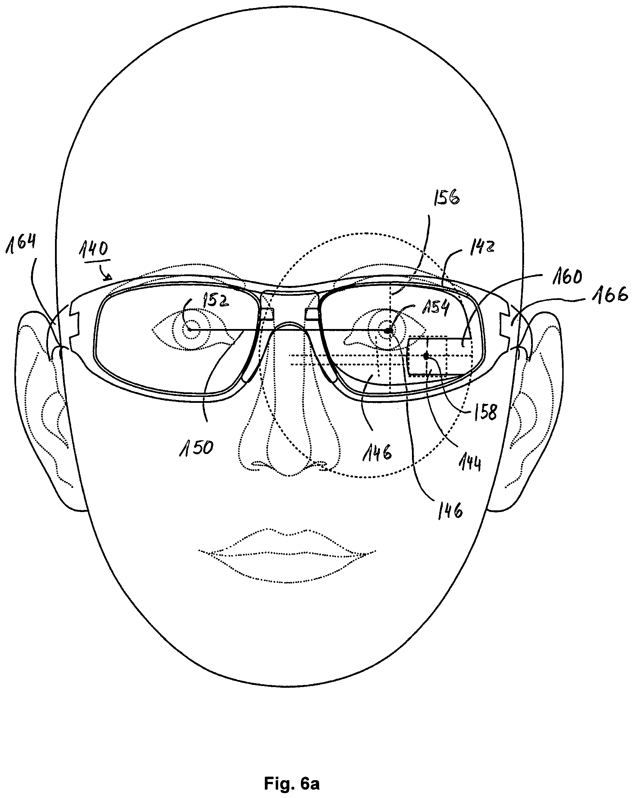

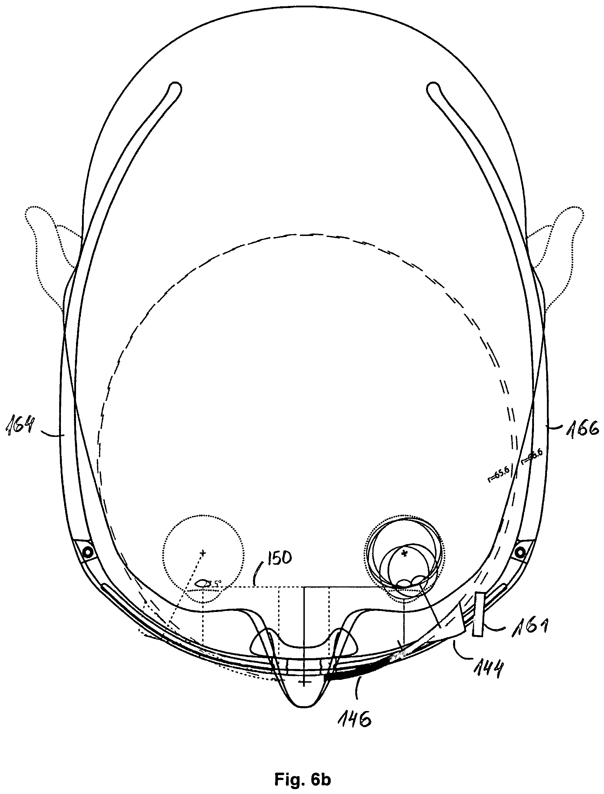

**Figuren 6a** und **6b** zeigen jeweils eine Frontalansicht (Fig. 6a) und eine Ansicht von oben (Fig. 6b) eines Brillenträgers mit einer aufgesetzten Brille **140** mit einem bevorzugten erfindungsgemäßen Brillenglas **142.** Das in Fig. 6a bis 6c gezeigte Brillenglas weist beispielsweise den gleichen Aufbau (Position und Krümmungsradien der augenseitigen und objektseitigen Flächen des Grundteils und des Prismenteils, etc.) wie das in 3a und 3b oder das in Fig. 4a und 4b gezeigte Brillenglas auf.

Das Brillenglas **142** weist einen temporal versetzten integrierten Prismenteil **144** und einen Grundteil **146** auf.

Die Brille ist beispielsweise derart vor den Augen des Brillenträgers angeordnet, daß der Sehstrahl in Nullblickrichtung mit dem Anpaßpunkt **148** des Brillenglases zusammenfällt. In Fig. 6a und 6b gibt die virtuelle Linie **150,** welche die Pupillenmitten **152, 154** des rechten und des linken Auge des Brillenträgers verbindet, die horizontale Richtung in Gebrauchsstellung der Brille an. Die senkrecht zu der Linie **150** stehende Linie **156,** welche in einer Ebene liegt, welche die Linie **150** und die Tangente der Vorderfläche in dem Anpaßpunkt enthält, gibt die vertikale Richtung an. Die Normale zu der Ebene, welche die Linie **150** und die Tangente der Vorderfläche in dem Anpaßpunkt enthält, gibt die z-Richtung an. Es ist jedoch möglich eine davon abweichende, individuelle Anordnung der Brille bei der Optimierung des Brillenglases und insbesondere des Prismenteils zu berücksichtigen.

Der Prismenteil **144** ist horizontal Richtung temporal und vertikal nach unten von dem Anpaßpunkt des Brillenglases versetzt, so daß bei einer vorgegebenen Blickauslenkung in einem Winkel von 25° bis 45° temporal, vorzugsweise 30° bis 35° und vorzugsweise in einem Winkel bis zu 40°, vorzugsweise 15° bis 20° nach unten die ausgelenkte Sehachse durch den Mittelpunkt der Vorderfläche des Prismenteils verläuft. Der vertikale Abstand zwischen dem Anpaßpunkt **148** und dem geometrischen Mittelpunkt **158** des Prismenteils hängt insbesondere von den Zentrierdaten und dem gewünschten Blickwinkel ab. Insbesondere kann dieser Abstand in einem statischen Fall in Abhängigkeit von Werten für die Pupillendistanz, Hornhautscheitelabstand, Fassungsscheibenwinkel, Vorneigung und der gewünschten Blickauslenkung bestimmt bzw. festgelegt werden.

Der Prismenteil weist vorzugsweise folgende Abmessungen auf:
- Höhe des den Prismenteil umschriebenen Rechtecks in vertikaler y-Richtung, zwischen 5 und 20 mm, vorzugsweise zwischen 10 und 15 mm, besonders bevorzugt 12 mm;
- Breite des den Prismenteil umschriebenen Rechtecks in horizontaler x-Richtung zwischen 5 und 20 mm, vorzugsweise zwischen 10 und 15 mm, besonders bevorzugt 12 mm;
- Maximale Höhe in z-Richtung (Dicke des Prismenteils) zwischen 2 und 20 mm, vorzugsweise zwischen 4 und 10 mm, besonders bevorzugt 7 mm.

Die Brillenfassung weist einen Teil **160** auf, welcher sich vorzugsweise zumindest teilweise über den Prismenteil bzw. über das Brillenglas erstreckt. In der Brillenfassung, vorzugsweise in dem sich über den Prismenteil erstreckenden Teil **160,** ist ein Display **161** integriert.

Ebenfalls weist die Brillenfassung einen Brückenteil **162** und zwei Brillenbügel **164** und **166** auf.

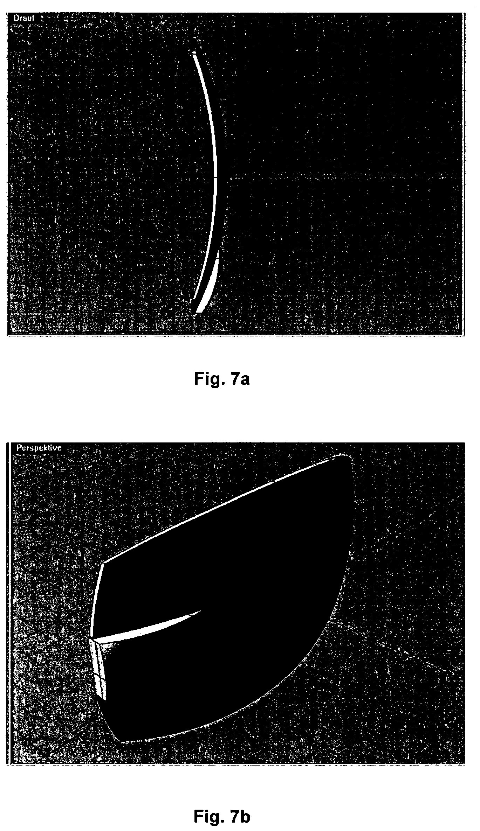

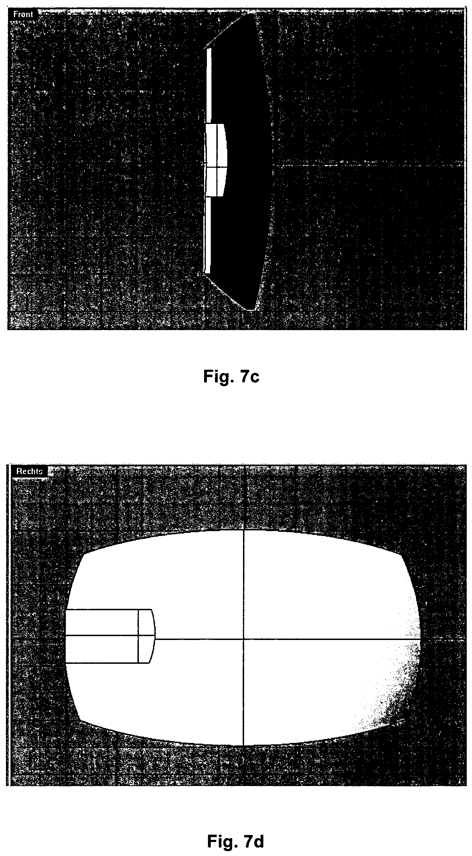

**Figuren 7a bis 7d** zeigen ein Brillenglas mit einem integrierten Prismenteil, welcher eine in Frontalansicht nicht mehr "runde" Form aufweist (**Fig. 7a** Ansicht von oben, **Fig. 7b** Ansicht in Perspektive, **Fig. 7c** Seitenansicht, **Fig. 7d** Frontalansicht)

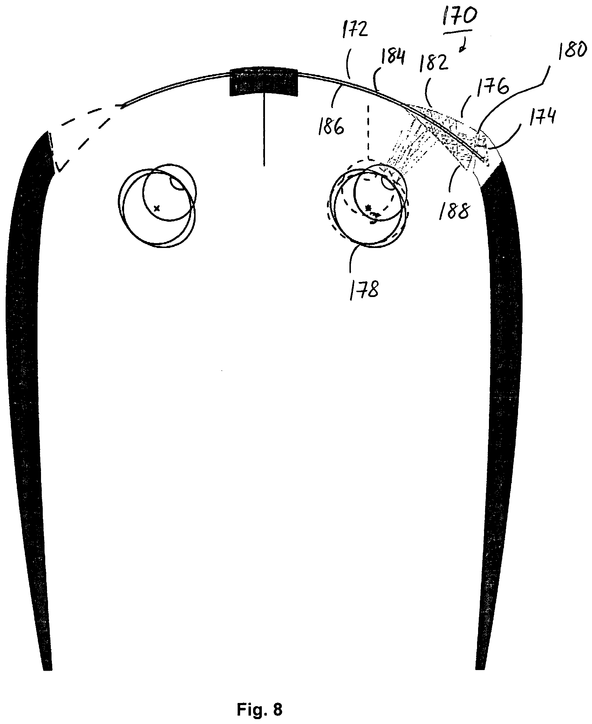

Die objektseitige Fläche des Prismenteils eines Brillenglases gemäß dem ersten oder dem zweiten Ausführungsbeispiel und wie z.B. in Fig. 3a, 3b oder 4a, 4b gezeigt ist als eine sphärische Fläche ausgebildet. Abweichungen von der sphärischen Form können lediglich in der Überganszone zwischen der Prismenzone und der Grundzone auftreten, z.B. um die vorhandene Stufe zu verblenden bzw. die Höhendifferenz der objektseitigen Fläche des Prismenteils und der objektseitigen Fläche des Grundteils an dem Übergang Prismenteil-Grundteil auszugleichen. Die objektseitige Fläche des Prismenteils kann jedoch ebenfalls als eine nicht sphärische, insbesondere eine Freiformfläche ausgebildet sein, welche insbesondere derart berechnet und optimiert wird, die Brechwert- und/oder astigmatischen Fehler des Prismenteils zu minimieren. Insbesondere kann die objektseitige Fläche des Prismenteils derart berechnet und optimiert werden, daß sie einmal, bevorzugt zweimal, stetig differenzierbar an die objektseitige Fläche des Grundteils anschließt. **Fig. 8** zeigt eine Brille **170** mit einem bevorzugten Brillenglas **172** gemäß dem zweiten Ausführungsbeispiel und einem in die Brillenfassung integriertem Display **174,** wobei die Brille in Gebrauchsstellung vor den Augen des Brillenträgers angeordnet ist. Ebenfalls zeigt Fig. 8 den Strahlengang der aus dem Display **174** ausgehenden Strahlen durch den Prismenteil **176.** Das Zeichen **178** bezeichnet das Auge des Brillenträgers, vor dem das Brillenglas mit dem Prismenteil angeordnet ist.

Das Display **174** ist derart angeordnet, daß die von dem Display ausgehenden Lichtstrahlen nach Eintritt durch die Seitenfläche **180** des Prismenteils zumindest einmal, vorzugsweise mehrmals an der augenseitigen Fläche des Prismenteils mittels Totalreflektion in Richtung der objektseitigen Fläche des Prismenteils reflektiert werden, und an der objektseitigen Fläche des Prismenteils **182** in Richtung der augenseitigen Fläche **188** des Prismenteils (zurück)reflektiert werden. Nach dem Austritt durch die augenseitige Fläche des Prismenteils **188** verlaufen die Strahlen durch die Pupille des jeweiligen Auges **178** des Brillenträgers, so daß eine optische Abbildung des Displays **174** in einem vorgegebenen endlichen oder unendlichen virtuellen Abstand erzeugt wird.

Sowohl die objektseitige als auch die augenseitige Fläche des Brillenglases **172** sind zusammengesetzte komplexe Flächen, welche jeweils eine Grundteilzone und eine Prismenzone aufweisen. In die objektseitige Fläche des Brillenglases ist die objektseitige Fläche des Prismenteils, wie oben erläutert, als "Nahteil" integriert. Die objektseitige Fläche **182** des Prismenteils **176** ist eine sphärische Fläche mit einem Krümmungsradius von 25,15 mm. Der Krümmungsradius der sphärischen Fläche kann jedoch insbesondere auch andere geeignete Werte annehmen, z.B. in Abhängigkeit von den Refraktionsdaten des Brillenträgers.

Bei dem in Fig. 8 gezeigten Brillenglas beträgt der Krümmungsradius der sphärischen objektseitigen Fläche **184** des Grundteils beispielsweise 66,5 mm. Die sphärische objektseitige Fläche **184** des Grundteils kann jedoch einen anderen Krümmungsradius von beispielsweise 54 oder 80 mm aufweisen. Ebenfalls kann die objektseitige Fläche **184** des Grundteils eine torische Fläche mit Hauptkrümmungsradien von beispielsweise 80 und 50 mm (Rₕ=80mm, Rᵥ=50mm) sein.

Die augenseitige Fläche des Brillenglases setzt sich aus der augenseitigen Fläche des Grundteils **186** und der darin eingelassenen augenseitigen Fläche **188** des Prismenteils (Prismenfläche) zusammen. Die augenseitige Fläche **186** des Grundteils stellt die Rezeptfläche des Brillenglases dar. Bei einer dioptrischen Wirkung von ungefähr Null ist die augenseitige Fläche **186** des Grundteils als eine sphärische Fläche mit einem Radius von 65,6 mm ausgebildet.

Die augenseitige Fläche **188** des Prismenteils ist eine Freiformfläche, welche sich einmal, vorzugsweise zweimal stetig an die augenseitige Fläche **186** des Grundteils anschließt. Vorzugsweise ist die augenseitige Fläche des Brillenglases, und insbesondere die augenseitige Freiformfläche **188** des Prismenteils, derart ausgebildet, daß folgende fertigungstechnisch bedingte Vorgaben bzw. Grenzwerte eingehalten werden:
Flächenbrechwert bezogen auf Brechungsindex n = 1,525
   - ganzflächig:: kleiner als 27 dpt, bevorzugt kleiner als 20,25 dpt, besonders bevorzugt kleiner als 13,5 dpt
   - Prismenbereich:: kleiner als 24 dpt, bevorzugt kleiner als 25,5 dpt, besonders bevorzugt kleiner als 17,0 dpt
   - lokales Maximum:: kleiner als 38 dpt, bevorzugt kleiner als 28 dpt, besonders bevorzugt kleiner als 19,0 dpt
   - absolutes Maximum:: kleiner als 42 dpt, bevorzugt kleiner als 31,5 dpt, besonders bevorzugt kleiner als 21,0 dpt.

Sowohl für den Prismen- als auch für den Grundteil gilt für den maximalen Brechwertanstieg (bezogen auf einen Brechungsindex n = 1,525):
- Astigmatismus:: kleiner als 1,4 dpt/mm, bevorzugt kleiner als 1,05 dpt/mm, besonders bevorzugt kleiner als 0,7 dpt pro mm
- je Hauptschnitt:: kleiner als 2 dpt/mm, bevorzugt kleiner als 1,5 dpt/mm, besonders bevorzugt kleiner 1,0 dpt pro mm

Der Prismenbereich ist vorzugsweise ein ca. 1 - 2 cm² großer, eher länglicher Bereich, z.B. 5 mm x 15 mm. Ein lokales Maximum beschränkt sich auf wenige mm² und nur in einem Hauptschnitt mit größerem Zylinder (Cyl.), z.B. 1 mm x 3 mm. Ein absolutes Maximum kommt vorzugsweise nur am Glasrand vor und praktisch nur in einem Punkt.

Die augenseitige Fläche des Prismenteils bzw. die Prismenfläche **188** wird in einem ersten Ansatz nach Fertigung einer augenseitigen sphärischen Fläche in einem zweiten Schritt gefertigt. Dafür wird die Prismenfläche derart extrapoliert bzw. berechnet bzw. optimiert, daß die Flächendaten der "zweiten" Rückfläche lediglich im Bereich des Prismenteils bzw. in der Prismenzone in der sphärischen Rückfläche liegt.

Weiter bevorzugt erfolgt die Berechnung bzw. die Optimierung der augenseitigen Freiformfläche des Prismenteils unter Berücksichtigung der Gebrauchsstellung des Brillenglases bzw. der Brille vor den Augen des Brillenträgers. Dabei kann eine durchschnittliche Gebrauchsstellung, wie z.B. in DIN 58 208 normiert, oder eine individuelle Gebrauchsstellung berücksichtigt werden.

Die Gebrauchsstellung wird insbesondere durch den Augendrehpunktabstand, die Vorneigung bzw. den pantoskopischen WinkeL, den Fassungsscheibenwinkel, die Pupillendistanz, den Hornhautscheitelabstand, die Zentrierdaten, die Objektentfernung im Fernbezugspunkt und/oder die Objektentfernung im Nahbezugspunkt charakterisiert. Ferner umfaßt die Gebrauchsstellung Daten bezüglich der Anordnung und gegebenenfalls der Größe des Displays, sowie gegebenenfalls den virtuellen Abstand in dem die optische Abbildung des Displays erzeugt werden soll.

Typische Werte bei einer Verwendung der Brillenfassung bzw. der Brille gemäß einer durchschnittlichen Gebrauchsstellung sind:
- Augendrehpunktabstand etwa 27,9 mm, 28,5 mm oder 28,8 mm;
- Vorneigung sind etwa 6° bis 15°, vorzugsweise 7° bis 9°;
- Fassungsscheibenwinkel etwa 0° bis 35°, vorzugsweise 0° bis 11°;
- Pupillendistanz etwa 63 mm bis 65 mm,
- Hornhautscheitelabstand beträgt etwa 13 mm bis 15 mm,
- Objektentfernung im Fernbezugspunkt etwa 0 dpt;
- Objektentfernung im Nahbezugspunkt etwa -2,5 dpt.

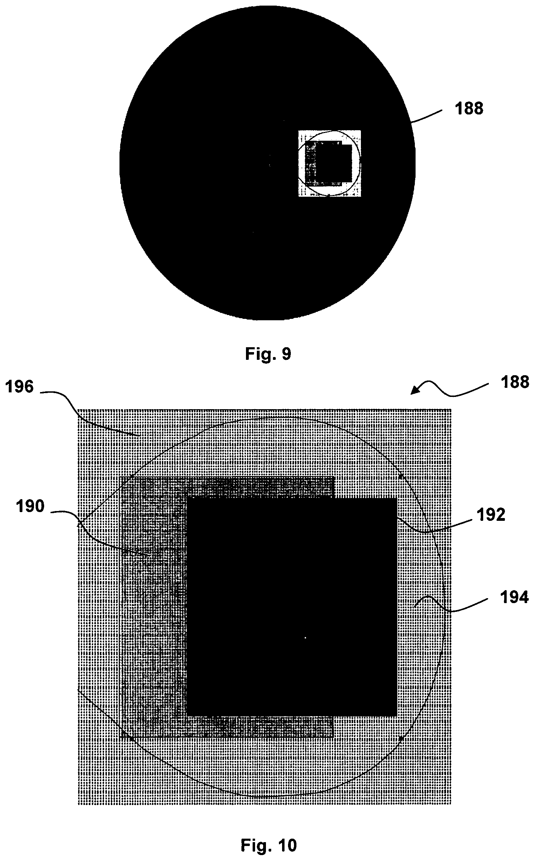

**Fig. 9** zeigt das eingebettete Pfeilhöhenfeld der Prismenfläche **188** in der sphärischen augenseitigen Fläche eines Brillenglases gemäß dem zweiten Ausführungsbeispiel. **Fig. 10** zeigt die Pfeilhöhendifferenzen zwischen Sphäre und Prisma bzw. die Pfeilhöhendifferenzen zwischen der (virtuellen) Fortsetzung der sphärischen Fläche des Grundteils in dem Prismenteil und der augenseitigen Fläche des Prismenteils.

In Figuren 9 und 10 bezeichnen die grau hinterlegten Bereiche **190, 192** die für die optische Abbildung des Prismenteils relevanten Bereiche (optisch aktive Bereiche) der Prismenfläche **188.** Der rote Bereich **194** zeigt die Pfeilhöhen, die "in" der sphärischen Fläche liegen, der grüne Bereich **196** sind die Pfeilhöhen, die bereits außerhalb der sphärischen augenseitigen Fläche liegen. Die augenseitige Freiformfläche des Prismenteils bzw. die Freiform-Prismenfläche **188** wurde:
- an den Punkten (-16, -5); (-16, +5) und (-27, -5) sowie (-27, 5) im Prismenkoordinatensystem;
- bzw. an den Punkten (9,2, -5); (9,2, +5) und (20,2, -5) sowie (20,2, 5) im Glaskoordinatensystem der sphärischen Fläche des Grundteils aufgehängt.

Die Basiskurve beträgt beispielsweise 8 dpt.

Wird die augenseitige Freiformfläche des Prismenteils **188** mit den gegebenen Pfeilhöhen außerhalb der optisch aktiven Bereiche **190, 192** (grau) fortgesetzt, so bettet sich die Freiform-Prismenfläche mit einem Knick in die augenseitigen Fläche des Grundteils am rot (**194**) - grünen (**196**) Übergang bzw. an dem Übergang der augenseitigen Fläche des Prismenteils in die augenseitigen Fläche des Grundteils ein. Der rote Bereich **194** soll außerhalb der grauen Bereiche **190, 192** so klein wie möglich gehalten werden. Deshalb wird bei der Fortsetzung der Prismenfläche **188** für einen Fertigungsdatensatz die Fläche des Prismenteils so steil wie möglich nach "oben" gezogen.

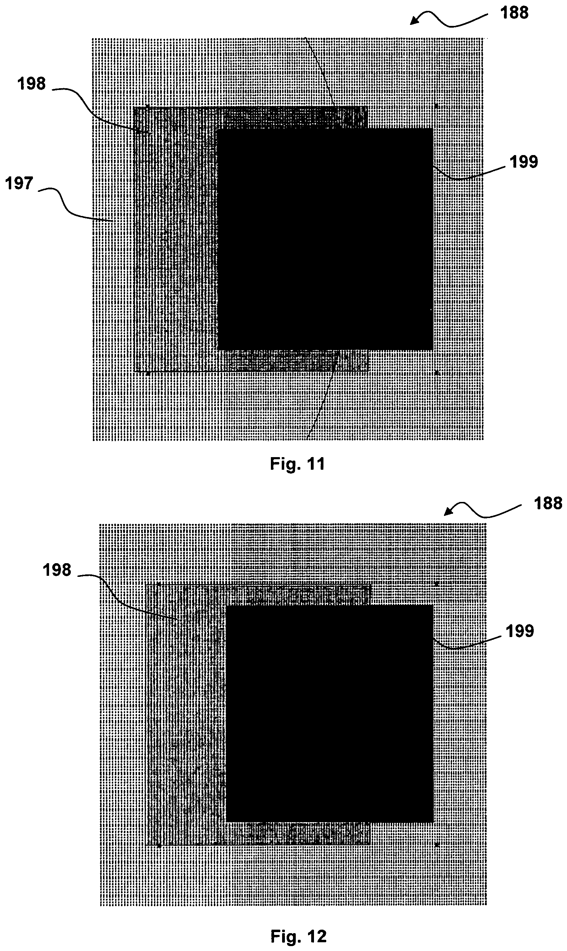

**Fig. 11** zeigt die Winkeldifferenzen in x-Richtung zwischen der (virtuellen Fortsetzung) der sphärischen Fläche des Grundteils in dem Prismenteil und der augenseitigen Freiformfläche des Prismenteils (Prismenfläche). Die x-Komponente der Flächennormale der Prismenfläche ist im roten Bereich **197** steiler, als die der sphärischen Fläche. In anderen Worten ist die Prismenfläche in Richtung Zentrum flacher als die sphärische Fläche in dem roten Bereich **197.** Die Kanten werden beim Finishen verschliffen bzw. beim Polieren verrundet.

**Fig. 12** zeigt die Winkeldifferenz in x-Richtung zwischen der (virtuellen) Fortsetzung der sphärischen Fläche des Grundteils in dem Prismenteil und der Prismenfläche. Die y-Komponente der Flächennormale der Prismenfläche ist immer flacher, als die der Sphäre, wobei lediglich auf der x-Achse Gleichheit gilt. In anderen Worten "taucht" die Fläche schnell aus der Sphäre auf. Die Kanten werden beim Finishen verschliffen bzw. beim Polieren verrundet.

In Fig. 11 und 12 bezeichnen die Zeichen **198, 199** die optisch relevanten bzw. optisch aktiven Bereichen.

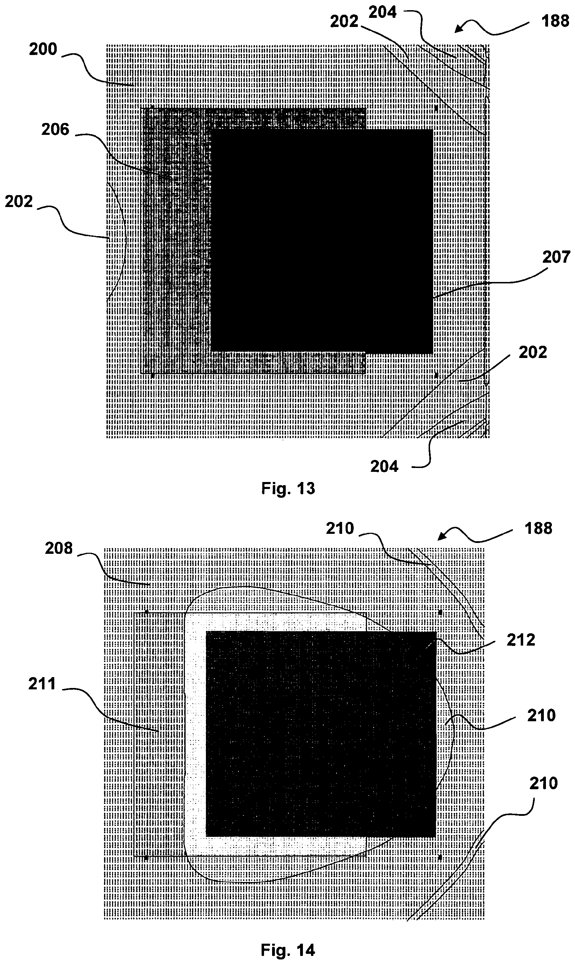

**Fig. 13** zeigt den Flächenastigmatismus der Prismenfläche. Der Flächenastigmatismus ist im grünen Bereich **200** kleiner als 4 dpt. Im orangen Bereich **202** liegt der Flächenastigmatismus der Prismenfläche zwischen 4 und 6 dpt. Im roten Bereich **204** ist der Flächenastigmatismus der Prismenfläche größer als 6 dpt. Der Flächenastigmatismus in dem optisch relevanten bzw. optisch aktiven Bereichen **206, 207** beträgt überall weniger als 4 dpt.

**Fig. 14** zeigt die Brechwertänderung der Prismenfläche in x-Richtung. Die Brechwertänderung der Prismenfläche in x-Richtung ist im grünen Bereich **208** kleiner als 0,7 dpt/mm, im orangen Bereich **210** zwischen 0,7 dpt/mm und 1 dpt/mm. Die optisch relevanten Bereiche **211, 212** liegen fast vollständig im orangen Bereich **210,** in welchem die Brechwertänderung in x-Richtung zwischen 0,7 dpt/mm und 1 dpt/mm ist.

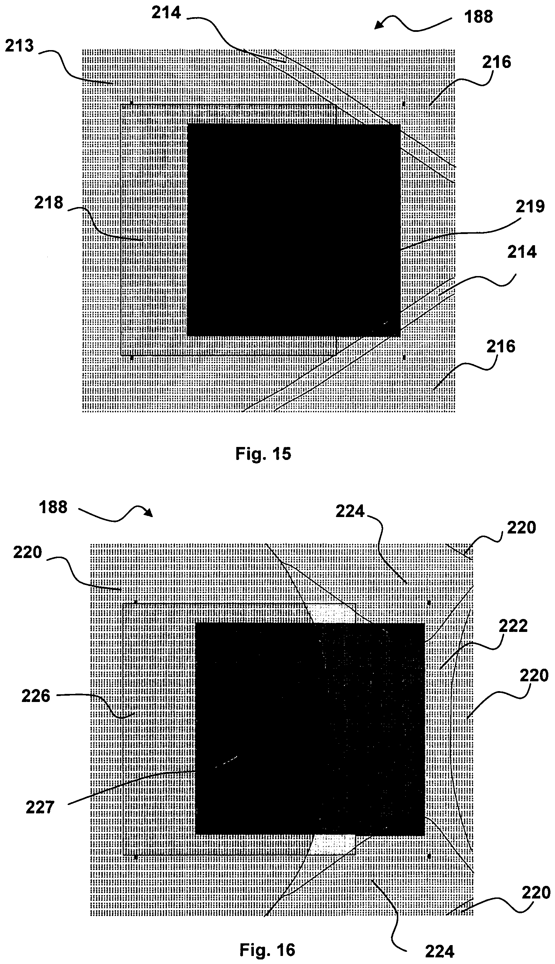

**Fig. 15** zeigt die Brechwertänderung der Prismenfläche in y-Richtung. Die Brechwertänderung in y-Richtung ist im grünen Bereich **213** kleiner 0,7 dpt/mm, im orangen Bereich **214** zwischen 0,7 dpt/mm und 1 dpt/mm und im roten Bereich **216** größer als 1 dpt/mm. Die optisch relevanten Bereich **218, 219** liegen fast vollständig im grünen **213** und orangen **214** Bereich, in welchen die Brechwertänderung in y-Richtung kleiner als 0,7 dpt/mm bzw. zwischen 0,7 dpt/mm und 1 dpt/mm ist.

**Fig. 16** zeigt die Astigmatismusänderung der Prismenfläche in x-Richtung. Die Astigmatismusänderung in x-Richtung ist im grünen Bereich **220** kleiner als 0,5 dpt/mm, im orangen Bereich **222** zwischen 0,5 dpt/mm und 0.7 dpt/mm und im roten Bereich **224** größer als 0.7 dpt/mm. Die optisch relevanten Bereiche **226, 227** liegen in den größten Teilen im grünen **220** und orangen **222** Bereich, im Randbereich der Totalreflexionsfläche gibt es kleine rote Bereiche.

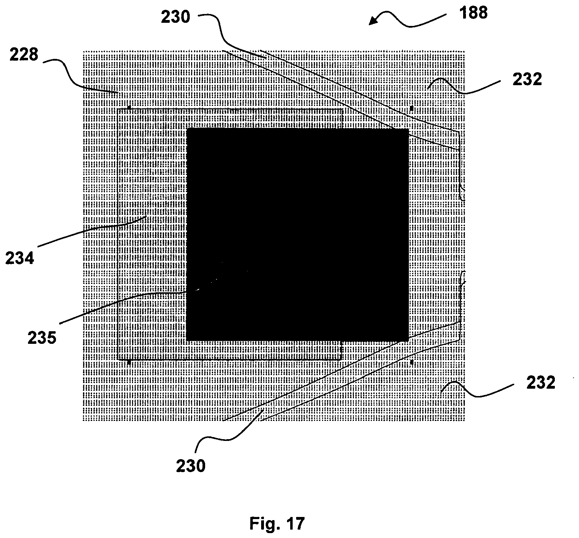

**Fig. 17** zeigt die Astigmatismusänderung der Prismenfläche in y-Richtung. Die Astigmatismusänderung in y-Richtung ist im grünen Bereich **228** kleiner als 0,5 dpt/mm, im orangen Bereich **230** zwischen 0,5 dpt/mm und 0,7 dpt/mm und im roten Bereich **232** größer als 0,7 dpt/mm. Die optisch relevanten Bereiche **234, 235** liegen fast vollständig im grünen Bereich **228,** in welchem die Astigmatismusänderung der Prismenfläche in y-Richtung kleiner als 0,5 dpt/mm ist.

Die Extrapolation der Prismenflächendaten bzw. der Flächendaten der Freiformfläche des Prismenteils kann beispielsweise folgendermaßen erfolgen: Gemäß einem ersten Ansatz wird eine Fläche zum Ursprung der sphärischen Fläche extrapoliert. Dazu wird das Pfeilhöhenfeld auf Polarkoordinaten umgerechnet. Entlang äquidistanter Radien werden Streckenzüge optimiert, wobei Pfeilhöhe (Hub der Drehmaschine), deren erste Ableitung (Neigung der Fläche entspricht der Geschwindigkeit des Stichels der Drehmaschine), die zweite Ableitung (Krümmung entspricht der Beschleunigung des Stichels der Drehmaschine) und die dritte Ableitung (Änderung der Krümmung - entspricht der Änderung der Beschleunigung des Stichels der Drehmaschine) berücksichtigt werden. Vorzugsweise werden die zweite und die dritte Ableitung so klein wie möglich gehalten. Das Brillenglas wird lediglich einmal aufgeblockt.

Alternativ gemäß einem zweiten Ansatz wird die Prismenfläche auf der "Innenseite" gespiegelt und das Brillenglas prismatisch aufgeblockt. Insbesondere wird eine Fläche zum Zentrum der Spiegelung der Prismenfläche extrapoliert. Dazu wird das Pfeilhöhenfeld in entsprechende Polarkoordinaten umgerechnet. Entlang äquidistanter Radien werden Streckenzüge optimiert.

Gemäß einem dritten Ansatz die Prismenfläche auf der "Außenseite" gespiegelt werden und das Brillenglas extrem dezentriert aufgeblockt. Es wird eine Fläche zum Zentrum der Spiegelung der Prismenfläche extrapoliert. Dazu wird das Pfeilhöhenfeld in entsprechende Polarkoordinaten umgerechnet. Entlang äquidistanter Radien werden Streckenzüge optimiert.

Die Extrapolation bzw. Berechnung bzw. Optimierung der Prismenfläche erfolgt vorzugsweise derart, daß die oben genannten fertigungstechnisch bedingten Vorgaben bzw. Grenzwerte eingehalten werden.

### Weitere Beispiele

Nachfolgend sind weitere Beispiele von Brillengläsern angegeben, wobei die Brillengläser jeweils eine zusammengesetzte objektseitige Fläche und eine zusammengesetzte augenseitige Fläche aufweisen.

Beispielsweise kann die objektseitige Fläche des Grundteils eine sphärische Fläche mit einem Radius von 80 mm sein. Die augenseitige Fläche des Brillenglases kann dann, wie oben erläutert, eine aus der augenseitigen Fläche des Grundteils und der augenseitigen Fläche des Prismenteils zusammengesetzte Fläche sein. Die augenseitige Fläche des Prismenteils ist vorzugsweise eine Freiformfläche, welche sich in horizontaler Richtung nahtlos an die augenseitige Fläche des Grundteils bezüglich des Krümmungsradius ansetzt. Vorzugsweise wird in vertikaler Richtung der Flächenradius auf ungefähr 50mm an dem Flächenradius der augenseitigen Fläche des Grundteils angepaßt. Die Anpassung des Flächenradius in vertikaler Richtung erfolgt vorzugsweise innerhalb einer vertikalen Strecke von ca. 4 mm, besonders bevorzugt kleiner als 4 mm.

In einem anderen Beispiel ist die objektseitige Fläche des Grundteils eine sphärische Fläche mit einem Radius von 80 mm. Die augenseitige Fläche des Brillenglases setzt sich aus der als Rezeptfläche ausgebildeten augenseitigen Fläche des Grundteils und der darin eingelassenen augenseitigen Fläche des Prismenteils bzw. Prismenfläche mit resultierendem Knick zusammen.

In einem weiteren Beispiel ist die augenseitige Fläche des Grundteils eine sphärische Fläche mit einem Radius von 54 mm. Die augenseitige Freiformfläche des Prismenteils setzt sich in vertikaler Richtung nahtlos an die augenseitige Fläche des Grundteils bezüglich des Krümmungsradius an. In horizontaler Richtung wird der Flächenradius auf ungefähr 80mm angepaßt, wofür ca. 4 mm, vorzugsweise weniger als 4 mm notwendig sind. Alternativ kann sich die augenseitige Fläche des Brillenglases aus der als Rezeptfläche ausgebildeten augenseitigen Fläche des Grundteils und der darin eingelassenen Prismenfläche mit resultierendem Knick zusammensetzten.

Gemäß einem weiteren Ausführungsbeispiel ist die Vorderfläche des Grundteils eine sphärische Fläche mit einem Radius von beispielsweise 66,6mm. Die augenseitige Freiformfläche des Prismenteils wird in horizontaler und vertikaler Richtung bezüglich des Flächenradius an dem Flächenradius der augenseitigen Fläche des Grundteils angepaßt, wofür ca. 4 mm, vorzugsweise weniger als 4 mm erforderlich sind.

Die Vorderfläche des Brillenglases kann ebenfalls eine torische Fläche sein. Gemäß einem weiteren Ausführungsbeispiel ist die Vorderfläche eine torische Fläche mit Hauptkrümmungsradien von beispielsweise 80 und 50 mm (Rₕ=80mm, Rᵥ=50mm). Die augenseitige Freiformfläche des Prismenteils setzt in horizontaler Richtung und vertikaler Richtung nahtlos an der augenseitige Fläche des Grundteils bezüglich des Krümmungsradius an.

Die Herstellung eines Brillenglases gemäß dem ersten oder dem zweiten Ausführungsbeispiel mit einem als "Nahteil" in der objektseitigen Fläche des Brillenglases integrierten objektseitigen Fläche des Prismenteils kann mittels der für die Herstellung von bifokalen Brillengläser entwickelten Herstellungsverfahren erfolgen. Diesbezüglich wird z.B. auf das Buch "Optik und Technik der Brille " von Hans Diepes und Ralf Blendowske, Optische Fachveröffntlichung GmbH, Heidelberg, 2002, welches auch zur Erläuterung aller in dieser Anmeldung nicht näher erläuterten Fachbegriffe herangezogen werden kann, verwiesen. In gleicher Weise wird auf das Buch "Die Optik des Auges und der Sehhilfen" von Dr. Roland Enders, Herausgeber: Zentralverband der Augenoptiker, Düsseldorf, 1995 verwiesen.

Beispielsweise wird in einem ersten Schritt ein Blank bzw. ein Linsenrohling bzw. ein Grundkörper mit einer objektseitigen Fläche, welche eine konkave Ausnehmung zur Aufnahme eines Prismenkörpers aufweist, bereitgestellt. Der Grundkörper kann z.B. mittels eines Gießverfahrens hergestellt werden. In der konkaven Ausnehmung wird ein Prismenkörper eingesetzt und fest mit dem Grundteil (z.B. mittels Kleben oder Einschmelzen) verbunden. Der Prismenkörper kann aus Glas bzw. Kunststoff mit einem höheren Brechungsindex als der Brechungsindex des Glases bzw. des Kunststoffes des Grundkörpers ausgebildet sein. Nach der Verbindung des Grundkörpers mit dem Prismenkörper kann die objektseitige Fläche gegebenenfalls weiter bearbeitet werden, z.B. geschliffen und/oder poliert werden. Die augenseitige Fläche kann in einem weiteren Schritt z.B. mittels CNC-Maschinen fertig bearbeitet werden.

### Drittes Ausführungsbeispiel

- Obiektseitige Fläche des Brillenglases:: einteilige, sich über Grund- und Prismenteil durchgehend erstreckende Fläche, d.h. keine Ausbildung eines Nahteils;
- augenseitige Fläche des Brillenglases:: Prismenteil als "Nahteil" integriert, d.h. komplexe Fläche, welche aus augenseitigen Flächen des Grundteils und des Prismenteils zusammengesetzt ist, augenseitige Fläche des Prismenteils ist vorzugsweise eine Freiformfläche; die Herstellung des Brillenglases erfolgt nach den für individuelle Brillengläser entwickelten Technologien (ILT Technologien).

In dem ersten und dem zweiten Ausführungsbeispiel ist die objektseitige Fläche eine zusammengesetzte (komplexe) Fläche, welche eine Grundteilzone und eine Prismenzone aufweist, wobei sich die Gestaltung der objektseitigen Fläche des Brillenglases in der Grundteilzone und in der Prismenzone unterscheidet. In anderen Worten ist bei dem ersten und zweiten Ausführungsbeispiel die objektseitige Fläche des Brillenglases als eine aus der objektseitigen Fläche des Grundteils und der objektseitigen Fläche des Prismenteils zusammengesetzte komplexe Fläche ausgebildet.

Die objektseitige Fläche des Brillenglases kann jedoch gemäß einem dritten Ausführungsbeispiel als eine sich über den Grundteil und den Prismenteil erstreckende Fläche, beispielsweise eine sphärische/asphärische, torische/atorische oder progressive Fläche ausgebildet werden.

So kann die objektseitige Fläche des Brillenglases beispielsweise eine sphärische oder rotationssymmetrisch asphärische Fläche sein. Die Durchbiegung der objektseitigen Fläche des Brillenglases kann beispielsweise in herkömmlicher Weise grob in Abhängigkeit von der zu erzielenden sphärischen, torischen und/oder prismatischen Wirkung (d.h. Rezeptwirkung) und/oder nach kosmetischen Gesichtspunkten ausgewählt werden. Ebenfalls kann die Auswahl der Durchbiegung der zweiten Fläche nach fertigungstechnisch bedingten Gesichtspunkten erfolgen.

Die augenseitige Fläche des Brillenglases ist, wie bei dem zweiten Ausführungsbeispiel, eine komplexe Fläche, welche aus der augenseitigen Fläche des Grundteils und der augenseitigen Fläche des Prismenteils zusammengesetzt ist. Die augenseitige Fläche des Grundteils ist je nach der zu erzielenden dioptrischen Wirkung des Brillenglases bzw. der zu erzielenden dioptrischen Wirkung des Grundteils als eine sphärische oder rotationssymmetrisch asphärische (nicht astigmatisches Einstärkenbrillenglas), eine torische oder atorische (astigmatisches Einstärkenbrillenglas) oder eine progressive Fläche (progressives Brillenglas) ausgebildet werden. Die augenseitige Fläche des Prismenteils ist eine Freiformfläche, welche - wie oben z.B. in Zusammenhang mit der Berechnung bzw. Optimierung der augenseitigen Freiformprismenfläche des Brillenglases gemäß dem zweiten Ausführungsbeispiel beschrieben - derart berechnet bzw. optimiert wird, die vorgegebene Ablenkung der aus dem Display kommenden Strahlen zu erzielen. Bei der Berechnung bzw. Optimierung der augenseitigen Freiformfläche des Prismenteils wird insbesondere eine vorgegeben durchschnittliche (z.B. standardisierte) oder eine vorgegebene individuelle Gebrauchsstellung des Brillenglases bzw. der Brille bzw. Verwendung der Brille in einer vorgegebenen durchschnittlichen oder individuellen Gebrauchsstellung berücksichtigt.

Vorzugsweise schließt sich die augenseitige Fläche des Prismenteils in vertikaler und/oder horizontaler Richtung einmal, bevorzugt zweimal stetig differenzierbar an die augenseitige Fläche des Grundteils an.

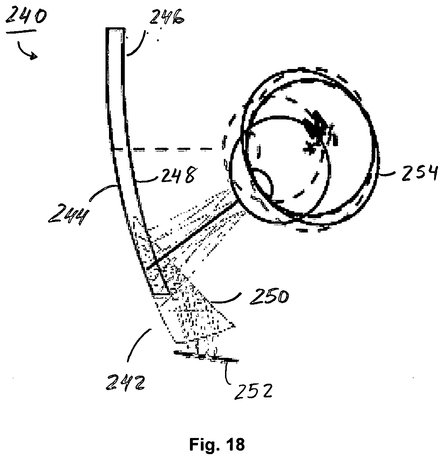

**Fig. 18** zeigt ein Brillenglas **240** mit einem integrierten Prismenteil **242** gemäß dem dritten Ausführungsbeispiel in einer vorgegeben Gebrauchsstellung des Brillenglases.

Die objektseitige Fläche **244** des Brillenglases kann eine sphärische Fläche sein. Die augenseitige Fläche **246** des Brillenglases ist eine komplexe Fläche, welche - wie oben beschrieben - aus der augenseitigen Fläche **248** des Grundteils und der augenseitigen Freiformfläche **250** des Prismenteils zusammengesetzt ist. Ebenfalls zeigt **Fig. 18** den Strahlengang der aus einem Display **252** kommenden Strahlen durch den Prismenteil des Brillenglases bei einem Blick des Auges **254** durch den Prismenteil.

Wie oben beschrieben kann auf die objektseitige Fläche des Brillenglases im Bereich des Prismenteils eine vollreflektierende oder teildurchlässige Reflektionsschicht aufgebracht werden. Die augenseitige Fläche des Prismenteils **250** schließt sich in vertikaler und/oder horizontaler Richtung einmal, bevorzugt zweimal, stetig differenzierbar an die augenseitige Fläche des Grundteils **248** an.

Die Herstellung des Brillenglases gemäß dem dritten Ausführungsbeispiel erfolgt vorzugsweise aus Halbfabrikaten mit einer vorgefertigten objektseitigen Fläche, wobei nach Erfassung der Daten des Brillenglases die komplexe augenseitige Fläche für eine vorgegebene durchschnittliche oder individuelle Gebrauchsstellung und eine vorgegebene durchschnittliche oder individuelle Anordnung des Displays berechnet bzw. optimiert wird. Die Fertigung der komplexen augenseitigen Fläche des Brillenglases erfolgt dann mittels numerisch gesteuerten CNC Maschinen nach den Flächendaten der augenseitigen Fläche des Brillenglases. Vorteil dieses Verfahren ist, daß das Brillenglas sehr gute kosmetische Eigenschaften aufweist, da die Vorderfläche eine einfache durchgehende Fläche ist. Ein weiterer Vorteil ist, daß bei der Herstellung von Brillengläsern gemäß dem dritten Ausführungsbeispiel weitgehend auf die bei der Herstellung von progressiven und Einstärkenbrillengläsern eingesetzten, Rodenstock ILT ("Individual Lens Technology") Technologien zurückgegriffen werden kann.

### Viertes Ausführungsbeispiel

- Objektseitige Fläche des Brillenglases:: einteilige, sich über Grund- und Prismenteil durchgehend erstreckende Fläche, d.h. keine Ausbildung eines Nahteils;
- augenseitige Fläche des Brillenglases:: Prismenteil als "Nahteil" integriert, d.h. komplexe Fläche, welche aus augenseitigen Flächen des Grundteils und des Prismenteils zusammengesetzt ist; Im Unterschied zu dem dritten Ausführungsbeispiel erfolgt die Herstellung des Brillenglases nach den für bifokale Brillengläser entwickelten Herstellungsverfahren aus einem Grundkörper und einem Prismenkörper aus Glas oder Kunststoff.

In einem Brillenglas gemäß einem vierten Ausführungsbeispiel ist der Prismenteil in die augenseitige Fläche des Brillenglases als Nahteil integriert. Wie bei dem Brillenglas gemäß dem dritten Ausführungsbeispiel weist das Brillenglas gemäß dem vierten Ausführungsbeispiel eine sich über den Grundteil und den Prismenteil erstreckende, konvexe, objektseitige Fläche auf. Diese Fläche kann - wie bei dem dritten Ausführungsbeispiel - eine sphärische oder rotationssymmetrisch asphärische objektseitige Fläche aufweisen. Alternativ kann die objektseitige Fläche die Rezeptfläche des Brillenglases darstellen.

Die augenseitige Fläche des Brillenglases ist eine komplexe Fläche, welche aus der augenseitigen Fläche des Grundteils und der augenseitigen Fläche des Prismenteils zusammengesetzt ist. Im Unterschied zu dem dritten Ausführungsbeispiel erfolgt die Herstellung des Brillenglases nach den für bifokale Brillengläser entwickelten Herstellungsverfahren aus einem Grundkörper und einem Prismenkörper aus Glas oder Kunststoff.

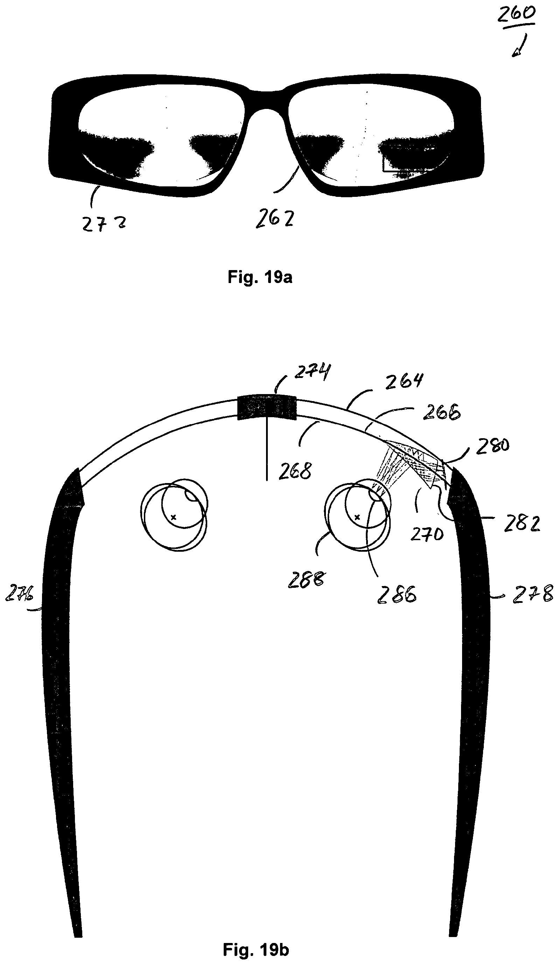

**Fig. 19** zeigt eine Brille **260** mit einem Brillenglas **262** mit integriertem Prismenteil gemäß dem vierten Ausführungsbeispiel, wobei **Fig. 19a** eine Frontalansicht und **Fig. 19b** eine Ansicht von oben der in Gebrauchsstellung vor den Augen der Brillenträger angeordneten Brille zeigt.

Die objektseitige Fläche des Brillenglases **264** kann eine sphärische Fläche sein. Die augenseitige Fläche **266** des Brillenglases ist eine komplexe Fläche, welche aus der augenseitigen Fläche **268** des Grundteils und der augenseitigen Fläche **270** des Prismenteils zusammengesetzt ist.

Die Brille **260** weist eine Brillenfassung **272** mit einem Brückenteil **274** und zwei Brillenbügel **276** und **278** auf. In der Brillenfassung ist ein Display **280** integriert.

Das Display **280** ist derart angeordnet, daß die von dem Display ausgehenden Lichtstrahlen nach Eintritt durch die Seitenfläche **282** des Prismenteils zumindest einmal, vorzugsweise mehrmals an der augenseitigen Fläche des Prismenteils mittels Totalreflektion in Richtung der objektseitigen Fläche des Prismenteils reflektiert werden, und an der objektseitigen Fläche **284** des Prismenteils in Richtung der augenseitigen Fläche **270** des Prismenteils (zurück)reflektiert werden. Nach dem Austritt durch die augenseitige Fläche des Prismenteils **270** verlaufen die Strahlen durch die Pupille **286** des jeweiligen Auges **288** des Brillenträgers, so daß eine optische Abbildung des Displays **280** in einem vorgegebenen endlichen oder unendlichen virtuellen Abstand erzeugt wird.

Das Brillenglas kann nach den für bifokale Brillengläser entwickelten Herstellungsverfahren aus einem Grundkörper und einem Prismenkörper aus Glas oder Kunststoff hergestellt werden. Die Brechungsindices des jeweils Grund- und Prismenkörpers können unterschiedlich sein, insbesondere kann der Brechungsindex des Prismenkörpers größer als der Brechungsindex des Grundkörpers sein. Wie oben in Zusammenhang mit der Herstellung von Brillengläsern mit einem in die Vorderfläche integrierten Prismenteil ausgeführt wurde, kann das Brillenglas mittels eines Gießverfahrens hergestellt werden.

Beispielsweise wird in einem ersten Schritt ein Blank bzw. ein Linsenrohling bzw. ein Grundkörper mit einer konvexen sphärischen objektseitigen Fläche und einer konkaven augenseitigen Fläche mittels eines Gießverfahrens hergestellt. Die augenseitige Fläche weist eine Ausnehmung zur Aufnahme des Prismenkörpers auf. Der Prismenkörper wird in der Ausnehmung eingesetzt und fest mit dem Grundteil (z.B. mittels Kleben oder Einschmelzen) verbunden. Nach der Verbindung des Grundkörpers mit dem Prismenkörper kann die augenseitige Fläche gegebenenfalls weiter bearbeitet, z.B. geschliffen und/oder poliert, werden.

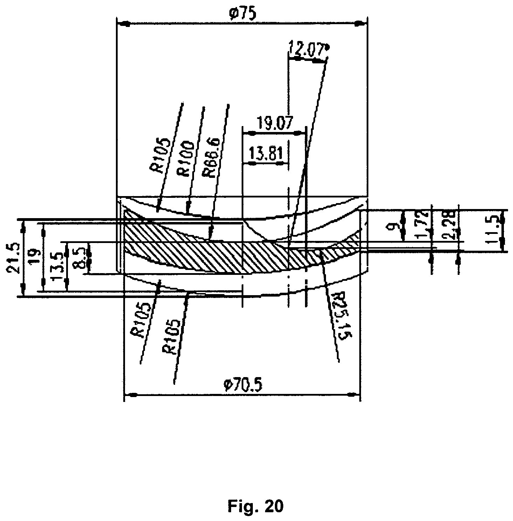

**Fig. 20** zeigt ein Beispiel einer Gießform, welche bei der Herstellung von Brillengläsern mit einem in der objektseitigen Fläche des Brillenglases integrierten Prismenteils verwendet werden kann. Die Gießform besteht beispielsweise aus zwei Radien von 66,6 mm und 25,15 mm für den Prismenteil. Die weiteren Abmessungen der Gießform können der Fig. 20 entnommen werden.

In Fig. 20 werden insbesondere verschiedene Stadien der Gießform vor dem Einsetzen der Ergänzungsteile, nach dem Verschmelzen der Ergänzungsteile bis zur endgültigen Form gezeigt. Dies ist vorteilhaft bzw. notwendig, um vorhandene Formen zum verschmelzen nutzen zu können, so daß es beim Erwärmen nicht zu einem Verzug der Gießformen kommt.

Ein weiteres Ausführungsbeispiel eines erfindungsgemäßen Brillenglases ist in den **Figuren 21a** bis **21c** gezeigt, wobei **Fig. 21** **a** den Strahlengang durch den Prismenteil in Gebrauchsstellung des Brillenglases, **Fig. 21b** eine Frontalansicht einer Brille mit einem bevorzugten erfindungsgemäßen Brillenglas und **Fig. 21 c** eine Ansicht von oben der Brille in Gebrauchsstellung und entsprechend dem Strahlengang durch den Prismenteil in Gebrauchsstellung des Brillenglases, zeigt.

Wie in dem dritten und dem vierten Ausführungsbeispiel weist das Brillenglas **310** eine sphärische Vorderfläche **312** auf. Die augenseitige Fläche des Brillenglases setzt sich aus der augenseitigen Fläche **314** des Grundteils und der augenseitigen Fläche **316** des Prismenteils zusammen.

Der Prismenteil mit einer sphärischen objektseitigen Fläche **318** und einer augenseitigen Freiformfläche **316** wird auf der augenseitigen Fläche eines halbfertigen Brillenglases (bzw. eines Brillenglases mit einer fertigen objektseitigen Fläche und gegebenenfalls einer fertigen augenseitigen Fläche) aufgeklebt. Bei dem in Fig. 21b gezeigten Brillenglas ist der Prismenteil **320** horizontal in nasaler Richtung und vertikal nach unten versetzt angeordnet.

Bei der in Fig. 21b und 21c gezeigten Brille ist das Display **322** vorzugsweise in einem Brückenteil **324** der Brillenfassung **326** angeordnet.

Alternativ kann in der augenseitigen Fläche eine Ausnehmung bzw. beispielsweise eine Aussparung zur Aufnahme des Prismenteils mit einem entsprechenden Radius ausgefräst werden. Der Prismenteils wird dann in der Ausnehmung bzw. Aussparung eingeklebt.

**Fig. 22** zeigt ein Display **330,** welches besonders geeignet ist, in der Brillenfassung eines bevorzugten erfindungsgemäßen Brillenglases integriert zu werden. Bei dem in Fig. 22 gezeigten Display handelt es sich um ein Polymer OLED Farb-Mikrodisplay. Das Display weist folgende Abmessungen auf: Display: 13 mm x 12 mm x 3 mm (Breite x Länge x Höhe bzw. Dicke). Die aktive Fläche **332** des Displays ist ungefähr 5,76 mm x 4,32 mm. Vorzugsweise beträgt das Gewicht des Display gleich oder weniger als 5 Gramm.

Wie bereits oben beschrieben können in der Brillenfassung zusätzlich zumindest eine Energiequelle, z.B. eine Batterie, und/oder eine Ansteuereinrichtung zum Ansteuern des Displays integriert werden. Das Ansteuern des Displays kann z.B. mittels Funkübertragung erfolgen. Alternativ kann eine Flachbandkabelverbindung zwischen der Ansteuereinrichtung und dem Display vorgesehen werden. Vorzugsweise beträgt das Gewicht der Ansteuereinrichtung weniger als 10 Gramm. Die Position der Ansteuereinrichtung kann beispielsweise variabel im Bügel sein. Die beispielsweise als Chip realisierte Ansteuereinrichtung zum Ansteuern des Displays ist vorzugsweise gleich oder kleiner als 21 mm x 12mm x 4mm (Breite x Länge x Höhe).

Die Energiequelle bzw. die Batterie soll räumlich möglichst klein, vorzugsweise gleich oder kleiner als 30mm x 11 mm x 4mm sein. Die Batterie kann beispielsweise in einem der Bügel der Brillenfassung angeordnet sein, wobei gegebenenfalls zwischen der Batterie und dem in dem anderen Bügel angeordneten Display und der Ansteuereinrichtung eine Kabelverbindung besteht. Vorzugsweise beträgt das Gewicht der Batterie gleich oder weniger als 2 Gramm.

Wie oben beschrieben sind vorzugsweise alle Bestandteile (einschließlich Display, Energiequelle, Ansteuereinrichtung) in der Brille (bzw. in den Brillengläsern und in der Brillenfassung) integriert, so daß die Brille ein autarkes System, d.h. ein System ohne Kabelverbindung mit anderen Systemen, darstellt.

Vorzugsweise dient die Brille als ein Anzeigegerät, d.h. als Schnittstelle zu beliebigen Endgeräten. Vorzugsweise erfolgt die Verbindung mit den Endgeräten mittels Funkübertragung.

In den obigen Ausführungsbeispielen weist die Brille lediglich ein erfindungsgemäßes Brillenglas mit einem integrierten Prismenteil auf. Die Brille kann jedoch beispielsweise auch zwei erfindungsgemäße Brillengläser mit jeweils integrierten Prismenteilen aufweisen, z.B. um ein dreidimensionales virtuelles Stereobild zu erzeugen. Die beiden Prismenteile sind dann vorzugsweise derart angeordnet, daß ein Stereobild entsteht.

Weitere bevorzugte Ausführungsformen einer erfindungsgemäßen Brille sind in den Figuren 23 bis 28 gezeigt.

Insbesondere zeigt **Fig. 23** ein weiteres Beispiel einer Gießform, welche bei der Herstellung von Brillengläsern mit einem in der objektseitigen Fläche des Brillenglases integrierten Prismenteils verwendet werden kann. Die Gießform umfaßt beispielsweise zwei Radien von 66,6 mm und 25,15 mm für den Prismenteil. Die weiteren Abmessungen der Gießform können der Fig. 23 entnommen werden.

**Fig. 24a bis 24c** zeigen eine Ausführungsform eines bevorzugten Brillenglases **340** mit einem Prismenteils **342** und einem Grundteil **344.** Fig. 24a zeigt eine Ansicht eines Querschnitts durch das Brillenglas entlang der Linie, welche die beiden Permanentmarkierungen des Brillenglases verbindet, Fig. 24b zeigt eine vergrößerte Ansicht des Abschnitts "Z" des in Fig. 24a gezeigten Brillenglases. Fig. 24c zeigt eine Frontalansicht der objektseitigen Fläche des Brillenglases.

Der Durchmesser des rohrunden Brillenglases beträgt 75 mm. Alternativ kann das Brillenglas andere Durchmesser aufweisen, z.B. 70,5 mm. Die Krümmungsradien der sphärischen Flächen des Grundteils **344** betragen jeweils 66,6 und 65,6 mm. Die Mittendicke des Brillenglases beträgt 2 mm. Das Brillenglas weist einen Ausschnitt **346** mit einer Breite vom 12 mm auf. Der Winkel zwischen der Seitenfläche **348** des Brillenglases in dem Prismenteils (Seitenfläche des Prismenteils) und der parallel zu der Oberflächennormale der Vorderfläche des Brillenglases im geometrischen Mittelpunkt **350** des rohrunden Brillenglases verlaufenden Gerade beträgt 15°. Die weiteren Abmessungen des Brillenglases können der Fig. 24a bis 24c entnommen werden.

**Fig. 25** zeigt einzelne Bestandteile - Brillenfassung **352,** Display **354** und Brillenglas **356** einer bevorzugten erfindungsgemäßen Brille **360.** Die Brillenfassung ist eine so genannte Sportbrillenfassung mit einem relativ großen Fassungsscheibenwinkel. Das Display **354** ist wie oben beschrieben ein miniaturisiertes Display mit integrierter Energiequelle und Drahtlos- bzw. Funkübetragungselektronik.

Das Brillenglas ist ein Brillenglas gemäß der zweiten Ausführungsform mit einer augenseitigen Freiformfläche des Prismenteils, welche mittels Freiform-Technologie hergestellt wird. Das Brillenglas ist entsprechend gerandet.

**Fig. 26** zeigt eine Explosionszeichnung der Bestandteile eines Ausführungsbeispiels einer bevorzugten Brille. In Fig. 26 bezeichnen die Zeichen **362** und **364** die beiden Brillengläser, das Zeichen **366** den Brillenglasaufnahmeteil der Brillenfassung, das Zeichen **368** den Prismenaufnahmeteil der Brillenfassung, das Zeichen **370** das Display, die Zeichen **372** und **374** die Brillenbügel. Das Display **370** wird in dem Prismenaufnahmeteil **368** integriert.

**Fig. 27** zeigt ein Beispiel einer bevorzugten erfindungsgemäßen Brille **380.** In Fig. 27 bezeichnen die Zeichen **382** und **384** die beiden Brillengläser, das Zeichen **386** den Prismenteil, das Zeichen **388** das Display, die Zeichen **390** und **392** die Brillenbügel.

**Fig. 28** zeigt ein Beispiel eines Sehbildes durch eine bevorzugte erfindungsgemäße Brille gemäß einem Ausführungsbeispiel.

### Bezugszeichenliste

**Fig. 1**
   - 10: Prisma
   - 12: Objekt
   - 14: Seiten- bzw. Eintrittsfläche
   - 16: Reflektionsfläche
   - 18: Austrittsfläche
   - 20: Bild des Objekts
**Fig. 2**
   - 22: Prismenteil
   - 24: Display
   - 26: Seitenfläche des Prismenteils
   - 28: objektseitige Fläche des Prismenteils
   - 30: augenseitige Fläche des Prismenteils
   - 32: Pupille
   - 34: augenseitige Fläche des Grundteils
**Fig. 3a****,** **3b**
   - 36: Brillenglas
   - 38: objektseitige Fläche des Brillenglases
   - 40: Grundteilzone der objektseitigen Fläche
   - 42: Prismenzone der objektseitigen Fläche
   - 44: Prismenteil
   - 45: Grundteil
   - 46: Ausschnitt
   - 48: augenseitige Fläche des Brillenglases
   - 50: Krümmungsradius der sphärischen objektseitigen Fläche des Grundteils
   - 51: Mittelpunkt
   - 52: Krümmungsradius der sphärischen augenseitigen Fläche des Grundteils
   - 53: Mittelpunkt
   - 54: Krümmungsradius der sphärischen objektseitigen Fläche des Prismenteils
   - 55: Mittelpunkt
   - 56: Stufe
   - 58: Flächennormale der objektseitigen Fläche
   - 59: geometrischer Mittelpunkt der Vorderfläche des Brillenglases
   - 60: Flächennormale der objektseitigen Fläche des Prismenteils
   - 62: geometrischer Mittelpunkt der objektseitigen Prismenfläche (bzw. geometrischer Mittelpunkt des Prismenteils)
   - 64: Winkel
**Fig. 4a, 4b**
   - 70: Brille
   - 72: Brillenfassung
   - 74: Brillenglas
   - 75: Prismenteil
   - 76,78: Brillenbügel
   - 80: Brückenteil
   - 82: Display
   - 84: Seitenfläche des Prismenteils
   - 86: objektseitige Fläche des Prismenteils
   - 88: augenseitige Fläche des Prismenteils
   - 89: objektseitige Fläche des Grundteils
   - 90: Pupille
   - 92: Auge
   - 94: Flächennormale der objektseitigen Fläche des Grundteils
   - 95: geometrischer Mittelpunkt der Vorderfläche des Brillenglases
   - 96: Flächennormale der objektseitigen Fläche des Prismenteils
   - 97: geometrischer Mittelpunkt der objektseitigen Prismenfläche
   - 98: Winkel
   - 100: Linie, welche die Pupillenmitten verbindet
   - 102, 104: Abgrenzlinien des Brückenteils
   - 106: Energiequelle
   - 108: Ansteuereinrichtung
**Fig. 5a bis 5c**
   - 110: Sehachse
   - 112: Mittelpunkt der (sphärischen) Vorderfläche des Grundteils,
   - 114: Flächennormale der Vorderfläche durch den geometrischen Mittelpunkt des Brillenglases;
   - 117, 119, 121, 123: Verbindungslinien der beiden Pupillen
   - 116, 118, 120, 122, 124: Nullblickrichtungen bei unterschiedlichen Blickauslenkungen.
   - 126: geometrischen Mittelpunkt des Brillenglases
   - 128: Durchstoßpunkt der ausgelenkten Sehachse mit der objektseitigen Fläche des Brillenglases
   - 130: Augendrehpunkt
**Figuren 6a****,** **6b**
   - 140: Brille
   - 142: Brillenglas
   - 144: Prismenteil
   - 146: Grundteil
   - 148: Anpaßpunkt
   - 150: virtuelle Linie, welche die Pupillenmitten verbindet
   - 152, 154: Pupillenmitten
   - 156: Linie senkrecht zu der Linie
   - 160: sich über den Prismenteil erstreckende Teil der Brillenfassung
   - 161: Display
   - 162: Brückenteil
   - 164, 166: Brillenbügel
**Fig. 8**
   - 170: Brille
   - 172: Brillenglas
   - 174: Display
   - 176: Prismenteil
   - 178: Auge
   - 180: Seitenfläche des Prismenteils
   - 182: objektseitige Fläche des Prismenteils
   - 184: objektseitige Fläche des Grundteils
   - 186: augenseitige Fläche des Grundteils
   - 188: augenseitige Fläche des Prismenteils
**Fig. 9, 10**
   - 190,192: optisch aktive Bereiche des Prismenfläche;
   - 194: Pfeilhöhen, welche "in" der sphärischen Fläche liegen
   - 196: Pfeilhöhen, welche außerhalb der sphärischen Fläche liegen.
**Fig. 11, 12**
   - 197: Bereich der Prismenfläche, in welchem die x-Komponente der Flächennormale der Prismenfläche steiler ist, als die der sphärischen Fläche
   - 198,199: optische aktive Bereiche der Prismenfläche
**Fig. 13**
   - 200: Bereich der Prismenfläche, in welchem der Flächenastigmatismus der Prismenfläche kleiner als 4 dpt ist
   - 202: Bereich der Prismenfläche, in welchen der Flächenastigmatismus der Prismenfläche zwischen 4 und 6 dpt liegt
   - 204: Bereich der Prismenfläche, in welchen der Flächenastigmatismus der Prismenfläche größer als 6 dpt ist.
   - 206, 207: optische aktive Bereiche der Prismenfläche
**Fig. 14**
   - 208: Bereich der Prismenfläche, in welchem die Brechwertänderung der Prismenfläche in x-Richtung kleiner als 0,7 dpt/mm ist,
   - 210: Bereich der Prismenfläche, in welchem Brechwertänderung der Prismenfläche in x-Richtung zwischen 0,7 dpt/mm und 1 dpt/mm ist
   - 211,212: optisch relevante Bereiche der Prismenfläche
**Fig. 15**
   - 213: Bereich der Prismenfläche, in welchem die Brechwertänderung in y-Richtung kleiner 0,7 dpt/mm ist,
   - 214: Bereich der Prismenfläche, in welchem die Brechwertänderung in y-Richtung zwischen 0,7 dpt/mm und 1 dpt/mm ist
   - 216: Bereich der Prismenfläche, in welchem die Brechwertänderung in y-Richtung größer als 1 dpt/mm ist.
   - 218, 219: optisch relevante Bereiche der Prismenfläche
**Fig. 16**
   - 220: Bereich der Prismenfläche, in welchem die Astigmatismusänderung in x-Richtung kleiner als 0,5 dpt/mm ist,
   - 222: Bereich der Prismenfläche, in welchem die Astigmatismusänderung in x-Richtung zwischen 0,5 dpt/mm und 0.7 dpt/mm ist;
   - 224: Bereich der Prismenfläche, in welchem die Astigmatismusänderung in x-Richtung größer als 0.7 dpt/mm ist.
   - 226, 227: optisch relevante Bereiche der Prismenfläche
**Fig. 17**
   - 228: Bereich der Prismenfläche, in welchem die Astigmatismusänderung der Prismenfläche in y-Richtung kleiner als 0,5 dpt/mm ist,
   - 230: Bereich der Prismenfläche, in welchem die Astigmatismusänderung der Prismenfläche in y-Richtung zwischen 0,5 dpt/mm und 0,7 dpt/mm ist
   - 232: Bereich der Prismenfläche, in welchem die Astigmatismusänderung der Prismenfläche in y-Richtung größer als 0,7 dpt/mm ist
   - 234, 235: optisch relevante Bereiche der Prismenfläche
**Fig. 18**
   - 240: Brillenglas
   - 242: Prismenteil
   - 244: objektseitige Fläche des Brillenglases
   - 246: augenseitige Fläche des Brillenglases
   - 248: augenseitige Fläche des Grundteils
   - 250: augenseitige Fläche des Prismenteils
   - 252: Display
   - 254: Auge
**Fig. 19a****,b**
   - 260: Brille
   - 262: Brillenglas
   - 263: Prismenteil
   - 264: objektseitige Fläche des Brillenglases
   - 266: augenseitige Fläche des Brillenglases
   - 268: augenseitige Fläche des Grundteils
   - 270: augenseitige Fläche des Prismenteils
   - 272: Brillenfassung
   - 274: Brückenteil
   - 276,278: Brillenbügel
   - 280: Display
   - 282: Seitenfläche des Prismenteils
   - 284: objektseitige Fläche des Prismenteils
   - 286: Pupille
   - 288: Auge
**Fig. 21a bis 21c**
   - 310: Brillenglas
   - 312: augenseitige Fläche des Brillenglases
   - 314: augenseitige Fläche des Grundteils
   - 316: augenseitige Fläche des Prismenteils
   - 318: objektseitige Fläche des Prismenteils
   - 320: Prismenteil
   - 322: Display
   - 324: Brückenteil
   - 326: Brillenfassung
**Fig. 22**
   - 330: Display
   - 332: aktive Fläche des Displays
**Fig. 24a bis 24c**
   - 340: Brillenglas
   - 342: Prismenteil
   - 344: Grundteil
   - 346: Ausschnitt
   - 348: Seitenfläche des Prismenteils
   - 350: geometrischer Mittelpunkt des rohrunden Brillenglases
**Fig. 25**
   - 352: Brillenfassung
   - 354: Display
   - 356: Brillenglas
   - 360: Brille
**Fig. 26**
   - 362,364: Brillengläser
   - 366: Brillenglasaufnahmeteil
   - 368: Prismenaufnahmeteil
   - 370: Display
   - 372,374: Brillenbügel
**Fig. 27**
   - 380: Brille
   - 382,384: Brillengläser
   - 386: Prismenteil
   - 388: Display
   - 390,392: Brillenbügel

## Patentansprüche

1. Brillenglas (36; 74; 142; 172; 240; 262; 310; 340; 364; 384) mit einer ersten (38; 246; 266; 312), einer zweiten, gegenüberliegenden Fläche (48; 244; 264) und einer Seitenfläche (26; 44; 84; 180; 282; 348), welche die erste und die zweite Fläche verbindet, wobei die erste Fläche die augenseitige und die zweite Fläche die objektseitige Fläche des Brillenglases ist oder wobei die erste Fläche die objektseitige und die zweite Fläche die augenseitige Fläche des Brillenglases ist, und wobei
zumindest die erste Fläche (38; 246; 266; 312) des Brillenglases eine Grundteilzone (40) und zumindest eine Prismenzone (42) aufweist, wobei sich die Gestaltung der ersten Fläche in der Grundteilzone und in der Prismenzone unterscheidet;
die Grundteilzone (40) der ersten Fläche (38; 246; 266; 312) mit der gegenüberliegenden zweiten Fläche (48; 244; 264) des Brillenglases einen Grundteil (45; 146; 344) des Brillenglases bilden; und
die Prismenzone (42) der ersten Fläche (38; 246; 266; 312) mit der gegenüberliegenden zweiten Fläche (48; 244; 264) des Brillenglases einen Prismenteil (22; 44; 75; 144; 176; 242; 263; 320 342; 386) bilden, welcher derart ausgelegt und angeordnet ist, eine optische Abbildung eines Displays (24; 82; 161; 252; 280; 322; 330; 354; 370; 388) in einem vorgegebenen virtuellen Abstand vor den Augen des Brillenträgers zu erzeugen, wobei
der Prismenteil (22; 44; 75; 144; 176; 242; 263; 320 342; 386) horizontal und/oder vertikal versetzt zu dem geometrischen Mittelpunkt (58; 126; 350) der objektseitigen Fläche des Brillenglases angeordnet ist, so dass der horizontale und/oder der vertikale Abstand zwischen dem geometrischen Mittelpunkt (62; 97) der objektseitigen Fläche des Prismenteils (22; 44; 75; 144; 176; 242; 263; 320 342; 386) und dem geometrischen Mittelpunkt (58; 126; 350) der objektseitigen Fläche des Brillenglases 5 bis 35 mm beträgt, und wobei
der Prismenteil (22; 44; 75; 144; 176; 242; 263; 320 342; 386) derart ausgelegt und angeordnet ist, daß in einer vorgegebenen Gebrauchsstellung des Brillenglases vor den Augen eines Brillenträgers zumindest ein von dem Display kommender Lichtstrahl nach Ablenkung an der Seitenfläche (26; 44; 84; 180; 282; 348) des Brillenglases im Prismenteil (22; 44; 75; 144; 176; 242; 263; 320 342; 386) zumindest einmal
an der augenseitigen Fläche (30; 88; 188; 250; 270; 316) des Brillenglases im Prismenteil per Totalreflektion in Richtung der objektseitigen Fläche (28; 86; 182; 284; 318) des Brillenglases im Prismenteil reflektiert wird,
anschließend an der objektseitigen Fläche (28; 86; 182; 284; 318) des Brillenglases im Prismenteil in Richtung der augenseitigen Fläche (30; 88; 188; 250; 270; 316) des Brillenglases im Prismenteil reflektiert wird und
durch die augenseitige Fläche (30; 88; 188; 250; 270; 316) des Brillenglases im Prismenteil in das Auge (92; 178; 254; 288) des Brillenträgers abgebildet wird, und wobei sich in horizontaler und/oder vertikaler Richtung die erste Fläche (38; 246; 266; 312) in der Prismenzone (42) zumindest einmal, bevorzugt zweimal stetig differenzierbar an die erste Fläche in der Grundteilzone (40) anschließt; oder
wobei sich in horizontaler und/oder vertikaler Richtung die erste Fläche (38; 246; 266; 312) in der Prismenzone (42) unter Ausbildung eines Knicks an die erste Fläche in der Grundteilzone (40) anschließt.

2. Brillenglas (36; 74; 142; 172; 240; 262; 310; 340; 364; 384) gemäß Anspruch 1, wobei die erste Fläche (38; 246; 266; 312) in der Prismenzone (42) eine Freiformfläche und in der Grundteilzone (40) eine sphärische, rotationssymmetrisch asphärische, torische, atorische oder progressive Fläche ist.

3. Brillenglas (36; 74; 142; 172; 240; 262; 310; 340; 364; 384) gemäß Anspruch 2, wobei
der maximale Anstieg des Flächenbrechwerts der ersten Fläche (38; 246; 266; 312) in horizontaler und/oder vertikaler Richtung 2 dpt/mm, vorzugsweise 1,5 dpt/mm, besonders bevorzugt 1 dpt/mm beträgt; und/oder
der maximale Anstieg des Flächenastigmatismus der ersten Fläche (38; 246; 266; 312) in horizontaler und/oder vertikaler Richtung 1,4 dpt/mm, vorzugsweise 1,05 dpt/mm, besonders bevorzugt 0,7 dpt/mm beträgt.

4. Brillenglas (36; 74; 142; 172; 240; 262; 310; 340; 364; 384) gemäß Anspruch 1 , wobei die erste Fläche (38; 246; 266; 312) in der Prismenzone (42) eine sphärische Fläche und in der Grundteilzone (40) eine sphärische, rotationssymmetrisch asphärische, torische, atorische oder progressive Fläche ist.

5. Brillenglas (36; 74; 142; 172; 240; 262; 310; 340; 364; 384) gemäß einem der vorangegangenen Ansprüche, wobei
der horizontale und/oder der vertikale Abstand zwischen dem geometrischen Mittelpunkt (62; 97) des Prismenteils (22; 44; 75; 144; 176; 242; 263; 320 342; 386) und dem geometrischen Mittelpunkt (58; 126; 350) des Brillenglases 10 bis 20 mm, besonders bevorzugt 15 mm beträgt.

6. Brillenglas (36; 74; 142; 172; 240; 262; 310; 340; 364; 384) gemäß einem der vorangegangenen Ansprüche, wobei der Prismenteil (22; 44; 75; 144; 176; 242; 263; 320 342; 386) derart angeordnet und ausgelegt ist, daß dieser außerhalb des Blickfeldes für das indirekte Sehen in Nullblickrichtung liegt, wobei in der vorgegebenen Gebrauchsstellung die Nullblickrichtung durch den Anpaß- bzw. Zentrierpunkt des Brillenglases verläuft, und
wobei der Prismenteil (22; 44; 75; 144; 176; 242; 263; 320 342; 386) vorzugsweise derart ausgebildet und angeordnet ist, daß bei einer Blickauslenkung gegenüber der Nullblickrichtung:
von 25° bis 45°, vorzugsweise 30° bis 35° in horizontaler Richtung, und/oder
von bis zu 40°, vorzugsweise 15° bis 20° in vertikaler Richtung die ausgelenkte Sehachse senkrecht zu der ersten (38; 246; 266; 312) oder der zweiten Fläche (48; 244; 264) des Brillenglases in der Prismenzone (42) ist.

7. Brillenglas (36; 74; 142; 172; 240; 262; 310; 340; 364; 384) gemäß einem der vorangegangenen Ansprüche, wobei die Seitenfläche (26; 44; 84; 180; 282; 348) des Brillenglases im Bereich des Prismenteils (22; 44; 75; 144; 176; 242; 263; 320 342; 386) eine plane Fläche ist.

8. Brille (70; 140; 170; 260; 360; 380) zum Ein- und/oder Auskoppeln von Daten, welche zumindest ein Brillenglas (36; 74; 142; 172; 240; 262; 310; 340; 364; 384) gemäß einem der vorangegangenen Ansprüche aufweist.

9. Brille (70; 140; 170; 260; 360; 380) gemäß Anspruch 8 mit zumindest einem Display (24; 82; 161; 174; 252; 280; 322; 354; 388), welches derart angeordnet und ausgelegt ist, daß in einer vorgegebenen Gebrauchsstellung der Brille vor den Augen eines Brillenträgers zumindest ein von dem Display (24; 82; 161; 174; 252; 280; 322; 354; 388) kommender Lichtstrahl nach Ablenkung an der Seitenfläche (26; 44; 84; 180; 282; 348) des Brillenglases im Prismenteil (22; 44; 75; 144; 176; 242; 263; 320 342; 386) zumindest einmal
an der augenseitigen Fläche (30; 88; 188; 250; 270; 316) des Brillenglases im Prismenteil per Totalreflektion in Richtung der objektseitigen Fläche (28; 86; 182; 284; 318) des Brillenglases im Prismenteil reflektiert wird,
anschließend an der objektseitigen Fläche (28; 86; 182; 284; 318) des Brillenglases im Prismenteil in Richtung der augenseitigen Fläche (30; 88; 188; 250; 270; 316) des Brillenglases im Prismenteil reflektiert wird und
durch die augenseitige Fläche (30; 88; 188; 250; 270; 316) des Brillenglases im Prismenteil in das Auge (92; 178; 254; 288) des Brillenträgers abgebildet wird.

10. Brille (70; 140; 170; 260; 360; 380) gemäß Anspruch 9, wobei das Display (24; 82; 161; 174; 252; 280; 322; 354; 388) in eine Brillenfassung (72; 272; 326), vorzugsweise in einem Brillenbügel (76; 78; 164; 166; 276; 278; 372; 374; 390; 392) oder in einem Brückenteil (80; 162; 274; 324) der Brillenfassung (72; 272; 326) integriert ist.

11. Brille (70; 140; 170; 260; 360; 380) gemäß einem der Ansprüche 8 bis 10, umfassend ferner:
eine Energiequelle (106), welche vorzugsweise in der Brillenfassung (72; 272; 326) integriert ist; und/oder
eine Ansteuereinrichtung (108) zum Ansteuern des Displays (24; 82; 161; 174; 252; 280; 322; 354; 388), wobei die Ansteuereinrichtung (108) vorzugsweise in der Brillenfassung (72; 272; 326) integriert ist.

12. Brille (70; 140; 170; 260; 360; 380) gemäß einem der Ansprüche 8 bis 11, wobei die Brille ein autarkes System ist.

13. Verfahren zur computerimplementierten Berechnung bzw. Optimierung eines Brillenglases (36; 74; 142; 172; 240; 262; 310; 340; 364; 384) mit einer ersten Fläche (38; 246; 266; 312), einer zweiten gegenüberliegenden Fläche (48; 244; 264) und einer Seitenfläche, welche erste und die zweite Fläche verbindet, wobei die erste Fläche die augenseitige und die zweite Fläche die objektseitige Fläche des Brillenglases ist oder wobei die erste Fläche die objektseitige und die zweite Fläche die augenseitige Fläche des Brillenglases ist, umfassend einen Berechnungs- bzw. Optimierungsschritt zumindest der ersten Fläche (38; 246; 266; 312) des Brillenglases, wobei der Berechnungs- bzw. Optimierungsschritt
ein Festlegen einer Grundteilzone (40) und einer Prismenzone (40) der ersten Fläche (38; 246; 266; 312), wobei sich die Gestaltung der ersten Fläche in der Grundteilzone und in der Prismenzone unterscheidet, und
ein Berechnen bzw. Optimieren der ersten Fläche (38; 246; 266; 312) umfasst, wobei das Berechnen zw. Optimieren der ersten Fläche derart erfolgt, daß
die erste Fläche (38; 246; 266; 312) in der Grundteilzone mit der gegenüberliegenden zweiten Fläche (48; 244; 264) des Brillenglases einen Grundteil des Brillenglases bilden, und
die erste Fläche (38; 246; 266; 312) in der Prismenzone mit der gegenüberliegenden zweiten Fläche (48; 244; 264) des Brillenglases einen Prismenteil (22; 44; 75; 144; 176; 242; 263; 320 342; 386) bilden, welcher derart ausgelegt und angeordnet ist, eine optische Abbildung eines Displays (24; 82; 161; 252; 280; 322; 330; 354; 370; 388) in einem vorgegebenen virtuellen Abstand vor den Augen des Brillenträgers zu erzeugen, wobei der Prismenteil (22; 44; 75; 144; 176; 242; 263; 320 342; 386) horizontal und/oder vertikal versetzt zu dem geometrischen Mittelpunkt (58; 126; 350) des Brillenglases angeordnet ist, so dass der horizontale und/oder der vertikale Abstand zwischen dem geometrischen Mittelpunkt (62; 97) des Prismenteils (22; 44; 75; 144; 176; 242; 263; 320 342; 386) und dem geometrischen Mittelpunkt (58; 126; 350) des Brillenglases 5 bis 35 mm beträgt,
wobei sich in horizontaler und/oder vertikaler Richtung die erste Fläche (38; 246; 266; 312) in der Prismenzone (42) zumindest einmal, bevorzugt zweimal stetig differenzierbar an die erste Fläche in der Grundteilzone (40) anschließt; oder
wobei sich in horizontaler und/oder vertikaler Richtung die erste Fläche (38; 246; 266; 312) in der Prismenzone (42) unter Ausbildung eines Knicks an die erste Fläche in der Grundteilzone (40) anschließt, und
wobei die Berechnung bzw. Optimierung der ersten (38; 246; 266; 312) und vorzugsweise der zweiten Fläche (48; 244; 264) des Brillenglases in der Prismenzone (42) derart erfolgt, daß in einer vorgegebenen Gebrauchsstellung des Brillenglases vor den Augen eines Brillenträgers zumindest ein von dem Display (24; 82; 161; 252; 280; 322; 330; 354; 370; 388) kommender Lichtstrahl nach Ablenkung an der Seitenfläche (26; 44; 84; 180; 282; 348) des Brillenglases im Prismenteil (22; 44; 75; 144; 176; 242; 263; 320 342; 386) zumindest einmal
an der augenseitigen Fläche (30; 88; 188; 250; 270; 316) des Brillenglases im Prismenteil per Totalreflektion in Richtung der objektseitigen Fläche (28; 86; 182; 284; 318) des Brillenglases im Prismenteil reflektiert wird,
anschließend an der objektseitigen Fläche (28; 86; 182; 284; 318) des Brillenglases im Prismenteil in Richtung der augenseitigen Fläche des Brillenglases im Prismenteil (30; 88; 188; 250; 270; 316) reflektiert wird und,
durch die augenseitige Fläche (30; 88; 188; 250; 270; 316) des Brillenglases im Prismenteil in das Auge des Brillenträgers abgebildet wird.

14. Verfahren gemäß Anspruch 13, wobei die Berechnung bzw. Optimierung des Brillenglases (36; 74; 142; 172; 240; 262; 310; 340; 364; 384) derart erfolgt, daß in einer vorgegebenen Gebrauchsstellung des Brillenglases der Prismenteil (22; 44; 75; 144; 176; 242; 263; 320 342; 386) außerhalb des Blickfeldes eines Brillenträgers beim indirekten Sehen in Nullblickrichtung liegt, wobei in der vorgegebenen Gebrauchsstellung die Nullblickrichtung durch den Anpaß- bzw. Zentrierpunkt des Brillenglases verläuft; und
- bei einer Blickauslenkung in horizontaler Richtung in einem vorgegebenen Winkel von 25° bis 45°, vorzugsweise 30° bis 35°; und/oder
- bei einer Blickauslenkung in vertikaler Richtung in einem vorgegebenen Winkel von bis zu 40°, vorzugsweise 15° bis 20°,
die ausgelenkte Sehachse senkrecht zu der ersten (38; 246; 266; 312) oder der zweiten Fläche (48; 244; 264) des Brillenglases in der Prismenzone ist.

15. Verfahren zum Herstellen eines Brillenglases (36; 74; 142; 172; 240; 262; 310; 340; 364; 384), umfassend folgenden Schritte:
Bereitstellen von Flächendaten des Brillenglases, wobei das Brillenglas nach dem Verfahren gemäß einem der Ansprüche 13 oder 14 berechnet bzw. optimiert wird;
Fertigen des Brillenglases gemäß den bereitgestellten Flächendaten des Brillenglases.

16. Computerprogrammerzeugnis, welches Programmteile enthält, welche ausgelegt sind, wenn geladen und ausgeführt auf einem Computer, ein Verfahren zur Berechnung bzw. Optimierung eines Brillenglases gemäß einem der Ansprüche 13 oder 14 durchzuführen.

17. Vorrichtung zur Herstellung eines Brillenglases (36; 74; 142; 172; 240; 262; 310; 340; 364; 384) umfassend
Berechnungs- und Optimierungsmittel zum Berechnen bzw. Optimieren zumindest einer Fläche des Brillenglases, wobei die Berechnungs- und Optimierungsmittel derart ausgelegt und eingerichtet sind, das Verfahren zur Berechnung bzw. Optimierung des Brillenglases gemäß einem der Ansprüche 13 oder 14 durchzuführen;
Bearbeitungsmittel zum Bearbeiten des optimierten Brillenglases.

18. Verwendung eines Brillenglases (36; 74; 142; 172; 240; 262; 310; 340; 364; 384) gemäß einem der Ansprüche 1 bis 7 in einer vorgegebenen durchschnittlichen oder individuellen Gebrauchsstellung des Brillenglases vor den Augen eines Brillenträgers zum Ein- und/oder Auskoppeln von Daten.

19. Verwendung einer Brille (70; 140; 170; 260; 360; 380) gemäß einem der Ansprüche 8 bis 12 in einer vorgegebenen durchschnittlichen oder individuellen Gebrauchsstellung des Brillenglases vor den Augen des Brillenträgers zum Ein- und/oder Auskoppeln von Daten.

## Claims

1. Spectacle lens (36; 74; 142; 172; 240; 262; 310; 340; 364; 384) with a first (38; 246; 266; 312), a second face (48; 244; 264) located opposite and a side face (26; 44; 84; 180; 282; 348), which connects the first and second face, wherein the first face is the face on the eye side and the second face is the face on the object side of the spectacle lens, or wherein the first face is the face on the object side and the second face is the face on the eye side of the spectacle lens, and wherein
at least the first face (38; 246; 266; 312) of the spectacle lens has a base part zone (40) and at least one prism zone (42), wherein the configuration of the first face differs in the base part zone and in the prism zone;
the base part zone (40) of the first face (38; 246; 266; 312) with the second face (48; 244; 264) of the spectacle lens located opposite forms a base part (45; 146; 344) of the spectacle lens; and
the prism zone (42) of the first face (38; 246; 266; 312) with the second face (48; 244; 264) of the spectacle lens located opposite forms a prism part (22; 44; 75; 144; 176; 242; 263; 320; 342; 386), which is designed and arranged in such a manner as to generate an optical image of a display (24; 82; 161; 252; 280; 322; 330; 354; 370; 388) at a predefined virtual distance in front of the eyes of the spectacle wearer, wherein
the prism part (22; 44; 75; 144; 176; 242; 263; 320; 342; 386) is arranged horizontally and/or vertically offset in relation to the geometric centre point (58; 126; 350) of the face of the spectacle lens on the object side, so that the horizontal and/or vertical distance between the geometric centre point (62; 97) of the face on the object side of the prism part (22; 44; 75; 144; 176; 242; 263; 320; 342; 386) and the geometric centre point (58; 126; 350) of the face on the object side of the spectacle lens amounts to 5 to 35 mm, and wherein
the prism part (22; 44; 75; 144; 176; 242; 263; 320; 342; 386) is designed and arranged in such a manner that in a predefined position of use of the spectacle lens in front of the eyes of the spectacle wearer at least one light ray coming from the display after deflection at the side face (26; 44; 84; 180; 282; 348) of the spectacle lens in the prism part (22; 44; 75; 144; 176; 242; 263; 320; 342; 386) is reflected at least once
at the face (30; 88; 188; 250; 270; 316) of the spectacle lens on the eye side in the prism part through total reflection in the direction of the face (28; 86; 182; 284; 318) of the spectacle lens on the object side in the prism part,
is then reflected on the face (28; 86; 182; 284; 318) of the spectacle lens on the object side in the prism part in the direction of the face (30; 88; 188; 250; 270; 316) of the spectacle lens on the eye side in the prism part and
is projected through the face (30; 88; 188; 250; 270; 316) of the spectacle lens on the eye side in the prism part into the eye (92; 178; 254; 288) of the spectacle wearer, and wherein in the horizontal and/or vertical direction the first face (38; 246; 266; 312) in the prism zone (42) connects at least once, preferably twice, to the first face in the base part zone (40) in a constantly differentiable manner; or
wherein in the horizontal and/or vertical direction the first face (38; 246; 266; 312) in the prism zone (42) connects to the first face in the base part zone (40) with the formation of a bend.

2. Spectacle lens (36; 74; 142; 172; 240; 262; 310; 340; 364; 384) according to claim 1, wherein the first face (38; 246; 266; 312) is a free-form face in the prism zone (42) and a spherical, rotationally symmetrically non-spherical, toric, atoric or progressive face in the base part zone (40).

3. Spectacle lens (36; 74; 142; 172; 240; 262; 310; 340; 364; 384) according to claim 2, wherein
the maximum rise in the surface power of the first face (38; 246; 266; 312) in horizontal and/or vertical direction amounts to 2 dpt/mm, preferably 1.5 dpt/mm, particularly preferred 1 dpt/mm; and/or
the maximum rise in the surface power of the first face (38; 246; 266; 312) in horizontal and/or vertical direction amounts to 1.4 dpt/mm, preferably 1.05 dpt/mm, particularly preferred 0.7 dpt/mm.

4. Spectacle lens (36; 74; 142; 172; 240; 262; 310; 340; 364; 384) according to claim 1, wherein the first face (38; 246; 266; 312) is a spherical face in the prism zone (42) and a spherical, rotationally symmetrically non-spherical, toric, atoric or progressive face in the base part zone (40).

5. Spectacle lens (36; 74; 142; 172; 240; 262; 310; 340; 364; 384) according to one of the preceding claims, wherein
the horizontal and/or vertical distance between the geometric centre point (62; 97) of the prism part (22; 44; 75; 144; 176; 242; 263; 320; 342; 386) and the geometric centre point (58; 126; 350) of the spectacle lens amounts to 10 to 20 mm, particularly preferred 15 mm.

6. Spectacle lens (36; 74; 142; 172; 240; 262; 310; 340; 364; 384) according to one of the preceding claims, wherein the prism part (22; 44; 75; 144; 176; 242; 263; 320; 342; 386) is arranged and designed in such a manner that it lies outside the field of vision for indirect vision in zero viewing direction, wherein in the predefined position of use the zero viewing direction runs through the adjustment or centring point of the spectacle lens, and
wherein the prism part (22; 44; 75; 144; 176; 242; 263; 320; 342; 386) is preferably configured and arranged in such a manner that in the case of a viewing deflection in relation to the zero viewing direction:
of 25° to 45°, preferably 30° to 35° in horizontal direction, and/or
of up to 40°, preferably 15° to 20° in vertical direction the deflected visual axis is perpendicular to the first (38; 246; 266; 312) or the second face (48; 244; 264) of the spectacle lens in the prism zone (42).

7. Spectacle lens (36; 74; 142; 172; 240; 262; 310; 340; 364; 384) according to one of the preceding claims, wherein the side face (26; 44; 84; 180; 282; 348) of the spectacle lens in the region of the prism part (22; 44; 75; 144; 176; 242; 263; 320; 342; 386) is a plane face.

8. Spectacles (70; 140; 170; 260; 360; 380) for the entry and/or output of data, which have at least one spectacle lens (36; 74; 142; 172; 240; 262; 310; 340; 364; 384) according to one of the preceding claims.

9. Spectacles (70; 140; 170; 260; 360; 380) according to claim 8 with at least one display (24; 82; 161; 174; 252; 280; 322; 354; 388), which is arranged and designed in such a manner that in a predefined position of use of the spectacles in front of the eyes of a spectacle wearer at least one light ray coming from the display (24; 82; 161; 174; 252; 280; 322; 354; 388) after deflection at the side face (26; 44; 84; 180; 282; 348) of the spectacle lens in the prism part (22; 44; 75; 144; 176; 242; 263; 320; 342; 386) is reflected at least once
at the face (30; 88; 188; 250; 270; 316) of the spectacle lens on the eye side in the prism part through total reflection in the direction of the face (28; 86; 182; 284; 318) of the spectacle lens on the object side in the prism part,
is then reflected on the face (28; 86; 182; 284; 318) of the spectacle lens on the object side in the prism part in the direction of the face (30; 88; 188; 250; 270; 316) of the spectacle lens on the eye side in the prism part and
is projected through the face (30; 88; 188; 250; 270; 316) of the spectacle lens on the eye side in the prism part into the eye (92; 178; 254; 288) of the spectacle wearer.

10. Spectacles (70; 140; 170; 260; 360; 380) according to claim 9, wherein the display (24; 82; 161; 174; 252; 280; 322; 354; 388) is integrated into a spectacle frame (72; 272; 326), preferably in an arm (76; 78; 164; 166; 276; 278; 372; 374; 390; 392) or in a bridge part (80; 162; 274; 324) of the spectacle frame (72; 272; 326).

11. Spectacles (70; 140; 170; 260; 360; 380) according to one of claims 8 to 10, additionally comprising:
an energy source (106), which is preferably integrated into the spectacle frame (72; 272; 326); and/or
an actuation device (108) for actuating the display (24; 82; 161; 174; 252; 280; 322; 354; 388), wherein the actuation device (108) is preferably integrated into the spectacle frame (72; 272; 326).

12. Spectacles (70; 140; 170; 260; 360; 380) according to one of claims 8 to 11, wherein the spectacles are a stand-alone system.

13. Method for computer-implemented calculation or optimisation of a spectacle lens (36; 74; 142; 172; 240; 262; 310; 340; 364; 384) with a first face (38; 246; 266; 312), a second face (48; 244; 264) located opposite and a side face, which connects the first and second face, wherein the first face is the face on the eye side and the second face is the face on the object side of the spectacle lens, or wherein the first face is the face on the object side and the second face is the face on the eye side of the spectacle lens, comprising a step of calculating or optimising at least the first face (38; 246; 266; 312) of the spectacle lens, wherein the calculation or optimisation step comprises a determination of a base part zone (40) and a prism zone (40) of the first face (38; 246; 266; 312), wherein the configuration of the first face differs in the base part zone and in the prism zone, and
a calculation or optimisation of the first face (38; 246; 266; 312), wherein the calculation or optimisation of the first face occurs in such a manner that the first face (38; 246; 266; 312) in the base part zone with the second face (48; 244; 264) of the spectacle lens located opposite forms a base part of the spectacle lens; and the first face (38; 246; 266; 312) in the prism zone with the second face (48; 244; 264) of the spectacle lens located opposite forms a prism part (22; 44; 75; 144; 176; 242; 263; 320; 342; 386), which is designed and arranged in such a manner as to generate an optical image of a display (24; 82; 161; 252; 280; 322; 330; 354; 370; 388) at a predefined virtual distance in front of the eyes of the spectacle wearer, wherein
the prism part (22; 44; 75; 144; 176; 242; 263; 320; 342; 386) is arranged horizontally and/or vertically offset in relation to the geometric centre point (58; 126; 350) of the spectacle lens, so that the horizontal and/or vertical distance between the geometric centre point (62; 97) of the prism part (22; 44; 75; 144; 176; 242; 263; 320; 342; 386) and the geometric centre point (58; 126; 350) of the spectacle lens amounts to 5 to 35 mm,
wherein in the horizontal and/or vertical direction the first face (38; 246; 266; 312) in the prism zone (42) connects at least once, preferably twice, to the first face in the base part zone (40) in a constantly differentiable manner; or
wherein in the horizontal and/or vertical direction the first face (38; 246; 266; 312) in the prism zone (42) connects to the first face in the base part zone (40) with the formation of a bend, and
wherein the calculation or optimisation of the first (38; 246; 266; 312) and preferably the second face (48; 244; 264) of the spectacle lens in the prism zone (42) occurs in such a manner that in a predefined position of use of the spectacle lens in front of the eyes of a spectacle wearer at least one light ray coming from the display (24; 82; 161; 252; 280; 322; 330; 354; 370; 388) after deflection at the side face (26; 44; 84; 180; 282; 348) of the spectacle lens in the prism part (22; 44; 75; 144; 176; 242; 263; 320; 342; 386) is reflected at least once
at the face (30; 88; 188; 250; 270; 316) of the spectacle lens on the eye side in the prism part through total reflection in the direction of the face (28; 86; 182; 284; 318) of the spectacle lens on the object side in the prism part,
is then reflected on the face (28; 86; 182; 284; 318) of the spectacle lens on the object side in the prism part in the direction of the face (30; 88; 188; 250; 270; 316) of the spectacle lens on the eye side in the prism part and
is projected through the face (30; 88; 188; 250; 270; 316) of the spectacle lens on the eye side in the prism part into the eye of the spectacle wearer.

14. Method according to claim 13, wherein the calculation or optimisation of the spectacle lens (36; 74; 142; 172; 240; 262; 310; 340; 364; 384) occurs in such a manner that in a predefined position of use of the spectacle lens the prism part (22; 44; 75; 144; 176; 242; 263; 320; 342; 386) lies outside the field of vision of a spectacle wearer upon indirect vision in zero viewing direction, wherein in the predefined position of use the zero viewing direction runs through the adjustment or centring point of the spectacle lens; and
• in the case of a viewing deflection in horizontal direction at a predefined angle of 25° to 45°, preferably 30° to 35°: and/or
• in the case of a viewing deflection in vertical direction at a predefined angle of up to 40°, preferably 15° to 20°
the deflected visual axis is perpendicular to the first (38; 246; 266; 312) or the second face (48; 244; 264) of the spectacle lens in the prism zone.

15. Method for producing a spectacle lens (36; 74; 142; 172; 240; 262; 310; 340; 364; 384) comprising the following steps:
providing surface data of the spectacle lens, wherein the spectacle lens is calculated or optimised using the method according to one of claims 13 or 14;
fabricating the spectacle lens in accordance with the provided surface data of the spectacle lens.

16. Computer program product, which contains program parts, which are designed to perform a method for the calculation or optimisation of a spectacle lens according to one of claims 13 or 14 when loaded and executed on a computer.

17. Device for producing a spectacle lens (36; 74; 142; 172; 240; 262; 310; 340; 364; 384) comprising
calculation and optimisation elements for calculating or optimising at least one face of the spectacle lens, wherein the calculation and optimisation elements are designed and arranged so as to perform the method for calculation or optimisation of the spectacle lens according to one of claims 13 or 14;
machining elements for machining the optimised spectacle lens.

18. Use of a spectacle lens (36; 74; 142; 172; 240; 262; 310; 340; 364; 384) according to one of claims 1 to 7 in a predefined common or individual position of use of the spectacle lens in front of the eyes of a spectacle wearer for the entry and/or output of data.

19. Use of spectacles (70; 140; 170; 260; 360; 380) according to one of claims 8 to 12 in a predefined common or individual position of use of the spectacle lens in front of the eyes of the spectacle wearer for the entry and/or output of data.

## Revendications

1. Verre de lunettes (36 ; 74 ; 142 ; 172 ; 240 ; 262 ; 310 ; 340 ; 364 ; 384) comprenant une première surface (38 ; 246 ; 266 ; 312), une deuxième surface (48 ; 244 ; 264) opposée et une surface latérale (26 ; 44 ; 84 ; 180 ; 282 ; 348), laquelle relie la première et la deuxième surface, dans lequel la première surface est la surface côté oeil et la deuxième surface est la surface côté objet du verre de lunettes ou dans lequel la première surface est la surface côté objet et la deuxième surface est la surface côté oeil du verre de lunettes, et dans lequel
au moins la première surface (38 ; 246 ; 266 ; 312) du verre de lunettes comprend une zone d'élément de base (40) et au moins une zone de prisme (42), dans lequel la configuration de la première surface est différente dans la zone d'élément de base et dans la zone de prisme ;
la zone d'élément de base (40) de la première surface (38 ; 246 ; 266 ; 312) formant avec la deuxième surface (48 ; 244 ; 264) opposée du verre de lunettes un élément de base (45 ; 146 ; 344) du verre de lunettes ; et
la zone de prisme (42) de la première surface (38 ; 246 ; 266 ; 312) formant avec la deuxième surface (48 ; 244 ; 264) opposée du verre de lunettes une partie de prisme (22 ; 44 ; 75 ; 144 ; 176 ; 242 ; 263 ; 320 ; 342 ; 386), laquelle est configurée et disposée de manière à produire une reproduction optique d'un écran (24 ; 82 ; 161 ; 252 ; 280 ; 322 ; 330 ; 354 ; 370 ; 388) à une distance virtuelle prédéfinie devant les yeux du porteur de lunettes, dans lequel
la partie de prisme (22 ; 44 ; 75 ; 144 ; 176 ; 242 ; 263 ; 320 ; 342 ; 386) est disposée en étant décalée horizontalement et/ou verticalement du centre géométrique (58 ; 126 ; 350) de la surface côté objet du verre de lunettes, de sorte que la distance horizontale et/ou verticale entre le centre géométrique (62 ; 97) de la surface côté objet de la partie de prisme (22 ; 44 ; 75 ; 144 ; 176 ; 242 ; 263 ; 320 ; 342 ; 386) et le centre géométrique (58 ; 126 ; 350) de la surface côté objet du verre de lunettes atteint 5 à 35 mm, et dans lequel
la partie de prisme (22 ; 44 ; 75 ; 144 ; 176 ; 242 ; 263 ; 320 ; 342 ; 386) est configurée et disposée de telle sorte que, dans une position d'utilisation prédéfinie du verre de lunettes devant les yeux d'un porteur de lunettes, au moins un faisceau lumineux provenant de l'écran, après déviation sur la surface latérale (26 ; 44 ; 84 ; 180 ; 282 ; 348) du verre de lunettes dans la partie de prisme (22 ; 44 ; 75 ; 144 ; 176 ; 242 ; 263 ; 320 ; 342 ; 386), est réfléchi au moins une fois sur la surface côté oeil (30 ; 88 ; 188 ; 250 ; 270 ; 316) du verre de lunettes dans la partie de prisme par réfléchissement total en direction de la surface côté objet (28 ; 86 ; 182 ; 284 ; 318) du verre de lunettes dans la partie de prisme,
puis est réfléchi sur la surface côté objet (28 ; 86 ; 182 ; 284 ; 318) du verre de lunettes dans la partie de prisme en direction de la surface côté oeil (30 ; 88 ; 188 ; 250 ; 270 ; 316) du verre de lunettes dans la partie de prisme et
est reproduit par la surface côté oeil (30 ; 88 ; 188 ; 250 ; 270 ; 316) du verre de lunettes dans la partie de prisme dans l'oeil (92 ; 178 ; 254 ; 288) du porteur de lunettes, et dans lequel la première surface (38 ; 246 ; 266 ; 312) dans la zone de prisme (42), dans la direction horizontale et/ou verticale, est adjacente au moins une fois, de préférence deux fois en permanence de manière différenciable à la première surface dans la partie d'élément de base (40) ; ou
dans lequel la première surface (38 ; 246 ; 266 ; 312) dans la zone de prisme (42), dans la direction horizontale et/ou verticale, est adjacente à la première surface dans la zone d'élément de base (40) avec formation d'une courbure.

2. Verre de lunettes (36 ; 74 ; 142 ; 172 ; 240 ; 262 ; 310 ; 340 ; 364 ; 384) selon la revendication 1, dans lequel la première surface (38 ; 246 ; 266 ; 312) dans la zone de prisme (42) est une surface de forme libre et dans la zone d'élément de base (40) une surface sphérique, asphérique à symétrie de révolution, torique, atorique ou progressive.

3. Verre de lunettes (36 ; 74 ; 142 ; 172 ; 240 ; 262 ; 310 ; 340 ; 364 ; 384) selon la revendication 2, dans lequel
l'augmentation maximale de l'indice de réfraction en surface de la première surface (38 ; 246 ; 266 ; 312) dans la direction horizontale et/ou verticale atteint 2 dpt/mm, de préférence 1,5 dpt/mm, de manière particulièrement préférable 1 dpt/mm ; et/ou
l'augmentation maximale de l'astigmatisme de surface de la première surface (38 ; 246 ; 266 ; 312) dans la direction horizontale et/ou verticale atteint 1,4 dpt/mm, de préférence 1,05 dpt/mm, de manière particulièrement préférée 0,7 dpt/mm.

4. Verre de lunettes (36 ; 74 ; 142 ; 172 ; 240 ; 262 ; 310 ; 340 ; 364 ; 384) selon la revendication 1, dans lequel la première surface (38 ; 246 ; 266 ; 312) dans la zone de prisme (42) est une surface sphérique et dans la zone d'élément de base (40) une surface sphérique, asphérique à symétrie de révolution, torique, atorique ou progressive.

5. Verre de lunettes (36 ; 74 ; 142 ; 172 ; 240 ; 262 ; 310 ; 340 ; 364 ; 384) selon l'une quelconque des revendications précédentes, dans lequel
la distance horizontale et/ou verticale entre le centre géométrique (62 ; 97) de la partie de prisme (22 ; 44 ; 75 ; 144 ; 176 ; 242 ; 263 ; 320 ; 342 ; 386) et le centre géométrique (58 ; 126 ; 350) du verre de lunettes atteint 10 à 20 mm, de manière particulièrement préférée 15 mm.

6. Verre de lunettes (36 ; 74 ; 142 ; 172 ; 240 ; 262 ; 310 ; 340 ; 364 ; 384) selon l'une quelconque des revendications précédentes, dans lequel la partie de prisme (22 ; 44 ; 75 ; 144 ; 176 ; 242 ; 263 ; 320 ; 342 ; 386) est disposée et configurée de telle sorte que celle-ci se situe à l'extérieur du champ de vision pour la vision indirecte dans la direction zéro du regard, dans lequel la direction zéro du regard s'étend à travers le point d'adaptation ou de centrage du verre de lunettes dans la position d'utilisation prédéfinie, et
dans lequel la partie de prisme (22 ; 44 ; 75 ; 144 ; 176 ; 242 ; 263 ; 320 ; 342 ; 386) est configurée et disposée de préférence de telle manière qu'en cas de déviation du regard par rapport à la direction zéro du regard :
de 25° à 45°, de préférence 30° à 35° dans la direction horizontale, et/ou
jusqu'à 40°, de préférence 15° à 20° dans la direction verticale
l'axe de vision dévié est perpendiculaire à la première surface (38 ; 246 ; 266 ; 312) ou à la deuxième surface (48 ; 244 ; 264) du verre de lunettes dans la zone de prisme (42).

7. Verre de lunettes (36 ; 74 ; 142 ; 172 ; 240 ; 262 ; 310 ; 340 ; 364 ; 384) selon l'une quelconque des revendications précédentes, dans lequel la surface latérale (26 ; 44 ; 84 ; 180 ; 282 ; 348) du verre de lunettes dans la zone de la partie de prisme (22 ; 44 ; 75 ; 144 ; 176 ; 242 ; 263 ; 320 ; 342 ; 386) est une surface plane.

8. Lunettes (70 ; 140 ; 170 ; 260 ; 360 ; 380) permettant l'injection et/ou l'extraction de données, lesquelles comprennent au moins un verre de lunettes (36 ; 74 ; 142 ; 172 ; 240 ; 262 ; 310 ; 340 ; 364 ; 384) selon l'une quelconque des revendications précédentes.

9. Lunettes (70 ; 140 ; 170 ; 260 ; 360 ; 380) selon la revendication 8 comprenant au moins un écran (24 ; 82 ; 161 ; 174 ; 252 ; 280 ; 322 ; 354 ; 388), lequel est configuré et disposé de telle sorte que, dans une position d'utilisation prédéfinie des lunettes devant les yeux d'un porteur de lunettes, au moins un faisceau lumineux provenant de l'écran (24 ; 82 ; 161 ; 174 ; 252 ; 280 ; 322 ; 354 ; 388), après déviation sur la surface latérale (26 ; 44 ; 84 ; 180 ; 282 ; 348) du verre de lunettes dans la partie de prisme (22 ; 44 ; 75 ; 144 ; 176 ; 242 ; 263 ; 320 ; 342 ; 386),
est réfléchi au moins une fois sur la surface côté oeil (30 ; 88 ; 188 ; 250 ; 270 ; 316) du verre de lunettes dans la partie de prisme par réfléchissement total en direction de la surface côté objet (28 ; 86 ; 182 ; 284 ; 318) du verre de lunettes dans la partie de prisme,
puis est réfléchi sur la surface côté objet (28 ; 86 ; 182 ; 284 ; 318) du verre de lunettes dans la partie de prisme en direction de la surface côté oeil (30 ; 88 ; 188 ; 250 ; 270 ; 316) du verre de lunettes dans la partie de prisme et
est reproduit par la surface côté oeil (30 ; 88 ; 188 ; 250 ; 270 ; 316) du verre de lunettes dans la partie de prisme dans l'oeil (92 ; 178 ; 254 ; 288) du porteur de lunettes.

10. Lunettes (70 ; 140 ; 170 ; 260 ; 360 ; 380) selon la revendication 9, dans lesquelles l'écran (24 ; 82 ; 161 ; 174 ; 252 ; 280 ; 322 ; 354 ; 388) est intégré dans une monture de lunettes (72 ; 272 ; 326), de préférence dans une branche de lunettes (76 ; 78 ; 164 ; 166 ; 276 ; 278 ; 372 ; 374 ; 390 ; 392) ou dans une partie pont (80 ; 162 ; 274 ; 324) de la monture de lunettes (72 ; 272 ; 326).

11. Lunettes (70 ; 140 ; 170 ; 260 ; 360 ; 380) selon l'une quelconque des revendications 8 à 10, comprenant en outre :
une source d'énergie (106), laquelle est intégrée de préférence dans la monture de lunettes (72 ; 272 ; 326) ; et/ou
un dispositif de commande (108) destiné à commander l'écran (24 ; 82 ; 161 ; 174 ; 252 ; 280 ; 322 ; 354 ; 388), dans lequel le dispositif de commande (108) est intégré de préférence dans la monture de lunettes (72 ; 272 ; 326).

12. Lunettes (70 ; 140 ; 170 ; 260 ; 360 ; 380) selon l'une quelconque des revendications 8 à 11, les lunettes étant un système autonome.

13. Procédé de calcul ou d'optimisation mis en oeuvre par ordinateur d'un verre de lunettes (36 ; 74 ; 142 ; 172 ; 240 ; 262 ; 310 ; 340 ; 364 ; 384) comprenant une première surface (38 ; 246 ; 266 ; 312), une deuxième surface (48 ; 244 ; 264) opposée et une surface latérale, laquelle relie la première et la deuxième surface, dans lequel la première surface est la surface côté oeil et .la deuxième surface est la surface côté objet du verre de lunettes ou la première surface est la surface côté objet et la deuxième surface est la surface côté oeil du verre de lunettes, comportant une étape de calcul ou d'optimisation au moins de la première surface (38 ; 246 ; 266 ; 312) du verre de lunettes, l'étape de calcul ou d'optimisation consistant à
définir une zone d'élément de base (40) et une zone de prisme (40) de la première surface (38 ; 246 ; 266 ; 312), dans lequel la configuration de la première surface dans la zone d'élément de base et dans la zone de prisme est différente, et
à calculer ou à optimiser la première surface (38 ; 246 ; 266 ; 312), dans lequel le calcul ou l'optimisation de la première surface est réalisé(e) de telle manière que
la première surface (38 ; 246 ; 266 ; 312) dans la zone d'élément de base forme avec la deuxième surface (48 ; 244 ; 264) opposée du verre de lunettes un élément de base du verre de lunette, et
la première surface (38 ; 246 ; 266 ; 312) dans la zone de prisme forme avec la deuxième surface (48 ; 244 ; 264) opposée du verre de lunettes une partie de prisme (22 ; 44 ; 75 ; 144 ; 176 ; 242 ; 263 ; 320 ; 342 ; 386), laquelle est configurée et disposée de manière à produire une reproduction optique d'un écran (24 ; 82 ; 161 ; 252 ; 280 ; 322 ; 330 ; 354 ; 370 ; 388) à une distance virtuelle prédéfinie devant les yeux du porteur de lunettes, dans lequel la partie de prisme (22 ; 44 ; 75 ; 144 ; 176 ; 242 ; 263 ; 320 ; 342 ; 386) est décalée horizontalement et/ou verticalement du centre géométrique (58 ; 126 ; 350) du verre de lunettes, de sorte que la distance horizontale et/ou verticale entre le centre géométrique (62 ; 97) de la partie de prisme (22 ; 44 ; 75 ; 144 ; 176 ; 242 ; 263 ; 320 ; 342 ; 386) et le centre géométrique (58 ; 126 ; 350) du verre de lunettes atteint 5 à 35 mm,
dans lequel la première surface (38 ; 246 ; 266 ; 312) dans la zone de prisme (42), dans la direction horizontale et/ou verticale, est adjacente au moins une fois, de préférence deux fois en permanence de manière différenciable, à la première surface dans la partie d'élément de base (40) ; ou
dans lequel la première surface (38 ; 246 ; 266 ; 312) dans la zone de prisme (42), dans la direction horizontale et/ou verticale, est adjacente à la première surface dans la zone d'élément de base (40) avec formation d'une courbure, et
dans lequel le calcul ou l'optimisation de la première surface (38 ; 246 ; 266 ; 312) et de préférence de la deuxième surface (48 ; 244 ; 264) du verre de lunettes dans la zone de prisme (42) est réalisé(e) de telle sorte que, dans une position d'utilisation prédéfinie du verre de lunettes devant les yeux d'un porteur de lunettes, au moins un faisceau lumineux provenant de l'écran (24 ; 82 ; 161 ; 252 ; 280 ; 322 ; 330 ; 354 ; 370 ; 388), après déviation sur la surface latérale (26 ; 44 ; 84 ; 180 ; 282 ; 348) du verre de lunettes dans la partie de prisme (22 ; 44 ; 75 ; 144 ; 176 ; 242 ; 263 ; 320 ; 342 ; 386),
est réfléchi au moins une fois sur la surface côté oeil (30 ; 88 ; 188 ; 250 ; 270 ; 316) du verre de lunettes dans la partie de prisme par réfléchissement total en direction de la surface côté objet (28 ; 86 ; 182 ; 284 ; 318) du verre de lunettes dans la partie de prisme,
puis est réfléchi sur la surface côté objet (28 ; 86 ; 182 ; 284 ; 318) du verre de lunettes dans la partie de prisme en direction de la surface côté oeil du verre de lunettes dans la partie de prisme (30 ; 88 ; 188 ; 250 ; 270 ; 316) et
est reproduit par la surface côté oeil (30 ; 88 ; 188 ; 250 ; 270 ; 316) du verre de lunettes dans la partie de prisme dans l'oeil du porteur de lunettes.

14. Procédé selon la revendication 13, dans lequel le calcul ou l'optimisation du verre de lunettes (36 ; 74 ; 142 ; 172 ; 240 ; 262 ; 310 ; 340 ; 364 ; 384) est réalisé(e) de telle manière que, dans une position d'utilisation prédéfinie du verre de lunettes, la partie de prisme (22 ; 44 ; 75 ; 144 ; 176 ; 242 ; 263 ; 320 ; 342 ; 386) se situe à l'extérieur du champ de vision d'un porteur de lunettes en cas de vision indirecte dans la direction zéro du regard, dans lequel la direction zéro du regard s'étend à travers le point d'adaptation ou de centrage du verre de lunettes dans la position d'utilisation prédéfinie ;
et
- en cas de déviation du regard dans la direction horizontale dans un angle prédéfini de 25° à 45°, de préférence 30° à 35°; et/ou
- en cas de déviation du regard dans la direction verticale dans un angle prédéfini allant jusqu'à 40°, de préférence 15° à 20°,
l'axe de vision dévié est perpendiculaire à la première surface (38 ; 246 ; 266 ; 312) ou à la deuxième surface (48 ; 244 ; 264) du verre de lunettes dans la zone de prisme.

15. Procédé de fabrication d'un verre de lunettes (36 ; 74 ; 142 ; 172 ; 240 ; 262 ; 310 ; 340 ; 364 ; 384), comprenant les étapes suivantes :
la fourniture de données de surface du verre de lunettes, dans lequel le verre de lunettes est calculé ou optimisé d'après le procédé selon l'une des revendications 13 ou 14 ;
la finition du verre de lunettes selon les données de surface fournies du verre de lunettes.

16. Produit-programme informatique, lequel contient des parties de programme qui sont conçues, lorsqu'elles sont chargées et exécutées sur un ordinateur, pour mettre en oeuvre un procédé de calcul ou d'optimisation d'un verre de lunettes selon l'une quelconque des revendications 13 ou 14.

17. Dispositif de fabrication d'un verre de lunettes (36 ; 74 ; 142 ; 172 ; 240 ; 262 ; 310 ; 340 ; 364 ; 384) comprenant
des moyens de calcul et d'optimisation permettant de calculer ou d'optimiser au moins une surface du verre de lunettes, dans lequel les moyens de calcul et d'optimisation sont configurés et conçus pour mettre en oeuvre le procédé de calcul ou d'optimisation du verre de lunettes selon l'une des revendications 13 ou 14 ;
des moyens d'usinage permettant d'usiner le verre de lunettes optimisé.

18. Utilisation d'un verre de lunettes (36 ; 74 ; 142 ; 172 ; 240 ; 262 ; 310 ; 340 ; 364 ; 384) selon l'une quelconque des revendications 1 à 7 dans une position d'utilisation ordinaire ou adaptée prédéfinie du verre de lunettes devant les yeux d'un porteur de lunettes pour l'injection et/ou l'extraction de données.

19. Utilisation de lunettes (70 ; 140 ; 170 ; 260 ; 360 ; 380) selon l'une quelconque des revendications 8 à 12 dans une position d'utilisation ordinaire ou adaptée prédéfinie du verre de lunettes devant les yeux du porteur de lunettes pour l'injection et/ou l'extraction de données.
